# EUROPÄISCHE PATENTSCHRIFT

(11) **EP 1 685 183 B1**
(45) Veröffentlichungstag und Bekanntmachung des Hinweises auf die Patenterteilung: **16.01.2008**
(21) Anmeldenummer: 04797999.2
(22) Anmeldetag: 18.11.2004
(51) Int. Cl.: C08G 77/38

(54) **VERFAHREN ZUR HERSTELLUNG VON CARBONYLRESTE-AUFWEISENDEN ORGANOSILICIUMVERBINDUNGEN**
METHOD FOR PRODUCING CARBONYL REST-CONTAINING ORGANOSILICON COMPOUNDS
PROCEDE DE PRODUCTION DE COMPOSES D'ORGANOSILICIUM COMPORTANT DES RESTES CARBONYLE

(30) Priorität: 20.11.2003 DE 10354259
(43) Veröffentlichungstag der Anmeldung: 02.08.2006
(73) Patentinhaber: Wacker Chemie AG, 81737 München (DE)
(72) Erfinder: OCHS, Christian, 84489 Burghausen (DE); FRITZ-LANGHALS, Elke, 85521 Ottobrunn (DE)
(74) Vertreter: Deffner-Lehner, Maria
(86) Internationale Anmeldenummer: PCT/EP2004/013137
(87) Internationale Veröffentlichungsnummer: WO 2005/049697

(56) Entgegenhaltungen:
- US-A- 5 739 246
- US-A- 6 121 404

## Beschreibung

Die Erfindung betrifft ein Verfahren zur Herstellung von Carbonylreste-aufweisenden Organosiliciumverbindungen.

Aldehyde und Ketone finden in der Organischen Chemie vielfach Verwendung und sind wichtige Vorstufen bei der Synthese von z.B. Heterocyclen, Duft- und Farbstoffen. In der Siliciumorganischen Chemie dagegen spielen Aldehyd- und Ketonfunktionen trotz ihres überaus interessanten Reaktionsprofils nur eine untergeordnete Rolle. Ursache hierfür ist das Fehlen eines geeigneten Syntheseweges, welcher die Herstellung von Carbonylreste-aufweisenden Organosiliciumverbindungen auf einfache und rasche Weise und mit hohen Ausbeuten erlaubt.

Bislang sind nur drei Verfahren zur Darstellung von Aldehyd- und Ketonfunktionellen Siloxanen bekannt:

FR 1.531.637 A beschreibt die Platin-katalysierte Addition von Olefinen mit verkappter Aldehyd- oder Ketonfunktion, wie z. B. 1-Trimethylsiloxy-1,3-butadien, 2-Trimethylsiloxy-4-methyl-1,3-butadien oder 4-Trimethylsiloxy-2-methyl-1,3-butadien, an hydridofunktionelle Organosiliciumverbindungen und anschließenden Hydrolyseschritt zur Freisetzung der Carbonylfunktion. Demgegenüber wird in FR 1.224.081 A und US 2,803,637 A die Hydrosilylierung aliphatisch ungesättigter Aldehydacetale mit anschließender, saurer Acetalspaltung beansprucht. Hierfür geeignete Edukte sind beispielsweise Acroleindimethylacetal, Acroleindiethylacetal, Methacroleindiacetat, Undecenyldiethylacetal, octadecenyldiethylacetal, Ketendiethylacetal, 3-Cyclohexene-1-carboxaldehyd-diethylacetal, 5-Norbornen-2-carboxyaldehyd-diethylacetal oder Bicyclo[2.2.2]oct-5-en-2-carboxaldehyd-diethylacetal. Den Prozessen ist gemeinsam, dass die gewünschten Produkte über mehrere Stufen nur in mäßiger Ausbeute zugänglich sind, wobei sich insbesondere der Hydrolyseschritt aufgrund des heterogenen Systems langwierig und meist äußerst problematisch gestaltet. Darüber hinaus ist die Anzahl der großtechnisch auf diesem Wege zugänglichen Aldehyd- oder Ketonsubstituenten durch die begrenzte kommerzielle Verfügbarkeit geeigneter Acetale stark eingeschränkt.

Polyorganosiloxane mit 1-Formyl-ethyl- bzw. 2-Formyl-ethyl-Gruppen sind nach EP 392 948 A1, EP 402 274 A1 und US 5,021,601 A durch Hydroformylierung der entsprechenden vinylfunktionellen Organosiliciumverbindungen zugänglich. Die in DE 36 32 869 A1 als Intermediate verwendeten Polysiloxane, welche mit Formylgruppen substituierte Tricyclo[5.2.1.0^{2,6}]-decadien-derivat-Gruppen enthalten, werden nach dem prinzipiell gleichen Verfahren erhalten. Nachteil des Hydroformylierung-Prozesses ist, dass die Konvertierung der Olefingruppen erst bei hohem Druck und hoher Temperatur gelingt, und zudem eine quantitative Umsetzung nur sehr aufwendig zu realisieren ist. Üblicherweise werden derartige Synthesen daher im Autoklaven bei einem Überdruck von 20 bis 200 bar und einer Temperatur von 100-150°C durchgeführt, was spezielle Apparaturen und Kenntnisse im Umgang mit den gasförmigen Reaktanden CO und H₂ erfordert. Darüber hinaus ist auch hier die Anzahl der auf diesem Wege zugänglichen Aldehyd- oder Ketonsubstituenten begrenzt.

US 2,947,770 A und US 5,739,246 A beschreiben ein Verfahren zur Herstellung carbonylfunktioneller Siloxane über die Ozonolyse alkenylfunktionalisierter Organosiliciumverbindungen und anschließende reduktive Spaltung des gebildeten Ozonids. Besonderer Nachteil dieses Verfahrens ist, dass die Ozonolyse von Doppelbindungen zum Abbau des ungesättigten Kohlenstoffgerüstes und damit zum Verlust von mindestens einer Kohlenstoffeinheit führt. Weiterhin stehen die Vielzahl der bei der Ozonolyse gebildeten Nebenprodukte, die Kosten für die Erzeugung bzw. die Handhabung von Ozon sowie die Festlegung auf wenige geeignete Ausgangsverbindungen einer breiten Anwendbarkeit dieses Verfahrens in technischem Maßstab entgegen.

Es bestand die Aufgabe ein kostengünstiges und selektives Verfahren zur Herstellung von Carbonylreste-aufweisenden Organosiliciumverbindungen bereitzustellen, mit welchem auch Organosiliciumverbindungen mit empfindlichen Aldehyd- und Ketongruppen in großem Maßstab dargestellt werden können, und welches den stets steigenden Anforderungen in der Technik hinsichtlich Raum-Zeit-Ausbeute und universelle Anwendbarkeit genügt. Diese Aufgabe wird durch die vorliegende Erfindung gelöst.

Gegenstand der Erfindung ist ein Verfahren zur Herstellung von Carbonylreste-aufweisenden Organosiliciumverbindungen durch Oxidation einer Carbinolreste-aufweisenden Organosiliciumverbindung mit Hilfe eines Mediators ausgewählt aus der Gruppe der aliphatischen, cycloaliphatischen, heterocyclischen und aromatischen NO-, NOH- und und eines Oxidationsmittels. 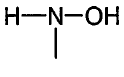 -haltigen Verbindungen

Für die Oxidation sind prinzipiell alle Organosiliciumverbindungen geeignet, sofern sie primäre oder sekundäre Carbinolgruppen tragen.

Vorzugsweise handelt es sich bei den im erfindungsgemäßen Verfahren eingesetzten, Carbinolreste-aufweisenden Organosiliciumverbindungen um Verbindungen enthaltend Einheiten der Formel

A 'ₐR_{b}X_{c}H_{d}SiO_{(4-a-b-c-d)/2} (I),

wobei A' gleich oder verschieden sein kann und einen Rest der Formel 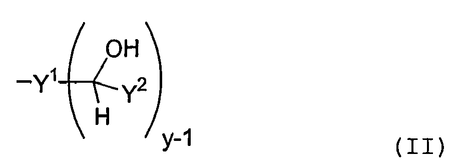 bedeutet,
Y¹ einen zwei- oder mehrwertigen, linearen oder cyclischen, verzweigten oder unverzweigten organischen Rest bedeutet, der gegebenenfalls substituiert und/oder durch die Atome N, O, P, B, Si, S unterbrochen sein kann,
Y² ein Wasserstoffatom oder einen einwertigen, linearen oder cyclischen, verzweigten oder unverzweigten, organischen Rest bedeutet, der gegebenenfalls substituiert und/oder durch die Atome N, O, P, B, Si, S unterbrochen sein kann,
y entsprechend der Wertigkeit von Rest Y¹ ≥ 2 ist,
R gleich oder verschieden sein kann und einen einwertigen, linearen oder cyclischen, verzweigten oder unverzweigten gegebenenfalls substituierten Kohlenwasserstoffrest bedeutet,
X gleich oder verschieden sein kann und ein Chloratom, ein Rest der Formel -OR¹ mit R¹ gleich Wasserstoffatom oder Alkylrest mit 1 bis 18 Kohlenstoffatom(en), der durch Ethersauerstoffatome substituiert sein kann, einen einwertigen, linearen oder cyclischen, verzweigten oder unverzweigten Kohlenwasserstoffrest, der gegebenenfalls durch Einheiten - C(O)-, -C(O)O-, -C(O)NR¹-, -O-C(O)O-, -O-C(O)NR¹-, -NR¹-C(O)-NR¹-, -NR¹-, - (NR¹₂)⁺-, -O-, -S-, =N- unterbrochen und mit Hydroxy-, Mercapto-, Amin-, Ammonium-, Carbonyl-, Carboxyl- oder Oxiranylgruppen substituiert sein kann, oder die Gruppe A' bedeutet,
a 0, 1 oder 2, bevorzugt 0 oder 1, ist
b 0, 1, 2 oder 3 ist,
c 0, 1, 2 oder 3 ist, und
d 0, 1, 2 oder 3, bevorzugt 0, ist,
mit der Maßgabe, dass die Summe a+b+c+d ≤ 4 ist und die Organosiliciumverbindungen der Formel (I) pro Molekül mindestens einen Rest A' aufweisen.

Bei den nach dem erfindungsgemäßen Verfahren erhaltenen, Carbonylreste-aufweisenden Organosiliciumverbindungen handelt es sich um Verbindungen enthaltend Einheiten der Formel

AₐR_{b}X_{c}H_{d}SiO_{(4-a-b-c-d)/2} (III),

wobei A gleich oder verschieden sein kann und einen Rest der Formel 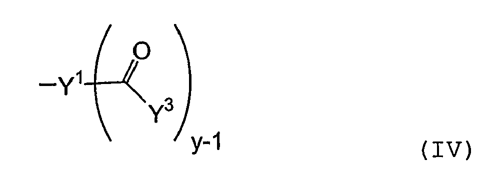 bedeutet,
Y³ ein Wasserstoffatom oder einen einwertigen, linearen oder cyclischen, verzweigten oder unverzweigten organischen Rest bedeutet, der gegebenenfalls substituiert und/oder durch die Atome N, 0, P, B, Si, S unterbrochen sein kann, und
Y¹, R, X, a, b, c, d und y die oben dafür angegebene Bedeutung haben,
mit der Maßgabe, dass die Summe a+b+c+d≤4 ist und die Organosiliciumverbindungen der Formel (III) pro Molekül mindestens einen Rest A aufweisen.

Bei den im erfindungsgemäßen Verfahren eingesetzten bzw. erhaltenen Organosiliciumverbindungen kann es sich sowohl um Silane handeln, d.h. Verbindungen der Formel (I) mit a+b+c+d=4, als auch um Siloxane oder Siloxan-Harze handeln, d.h. Verbindungen enthaltend Einheiten der Formel (I) mit a+b+c+d≤3,
wobei im Rahmen der vorliegenden Erfindung von dem Begriff Siloxan sowohl polymere, oligomere wie auch dimere Organopolysiloxane mitumfasst werden sollen.

Bevorzugt werden als Carbinolreste-aufweisende Organosiliciumverbindungen solche der Formel

A'ᵥR_{w}X_{(3-v-w)}Si (I'),

A'ᵥR₃₋ᵥSiO (SiR₂O )ₙ(SiRA 'O)ₒSiR₃₋ᵥA'ᵥ (I") (I")

und

[A'R₃₋ᵥSiO_{1/2}]ₛ[SiO_{4/2}] (I'''),

wobei A', R und X die oben dafür angegebene Bedeutung haben,
v 0, 1, 2 oder 3, bevorzugt 0 oder 1, ist
w 0, 1, 2 oder 3 ist,
n 0 oder eine ganze Zahl von 1 bis 2000 ist,
o 0 oder eine ganze Zahl von 1 bis 2000, bevorzugt 0 bis 500, ist,
s einen Wert von einschließlich 0,2 bis 6, bevorzugt 0,4 bis 4, annehmen kann und die Anzahl M-Einheiten [A'ᵥR₃₋ᵥSiO_{1/2}] pro Q-Einheit [SiO_{4/2}] im Organosiliconharz beschreibt,
mit der Maßgabe, dass sie pro Molekül mindestens einen Rest A' enthalten,
eingesetzt.

Bevorzugt werden daher als Carbonylreste-aufweisende Organosiliciumverbindungen solche der Formel

AᵥR_{w}X(_{3-v-w})Si (III'),

AᵥR₃₋ᵥSiO (SiR₂O)ₙ(SiRAO)ₒSiR₃₋ᵥAᵥ (III"),

[AᵥR₃₋ᵥSiO_{1/2}]ₛ[SiO_{4/2}] (III''')

wobei A, R, X, v, w, n, o und s die oben dafür angegebene Bedeutung haben,
mit der Maßgabe, dass sie pro Molekül mindestens einen Rest A enthalten,
erhalten.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α-und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest, Aminoalkylreste, wie der Aminopropyl-, Aminoethylaminopropyl-, Cyclohexylaminopropyl-, Dimethylaminopropyl- oder Diethylaminopropylrest, sowie acetylierte oder durch Michael-analoge Reaktion mit (Meth)Acrylestern alkylierte Aminoalkylreste, Hydroxyfunktionelle Reste, wie die von prim., sek. oder tert. Alkoholen, wie z.B. der 3-Hydroxypropyl- und 4-Hydroxybutylrest, oder wie die aromatischer Alkohole, wie z.B. der Phenol- oder Eugenolrest, mercaptofunktionelle Reste, wie der 3-Mercaptopropylrest, carbonsäurefunktionelle Reste sowie deren Derivate oder Salze, wie der Essigsäure-, 3-Carboxy-propyl-, 4-Carboxy-butyl-, 10-Carboxy-decyl-, 3-(2,5-Dioxotetrahydrofuranyl)-propyl-, 3-(Ethan-1,2-dicarbonsäure)-propyl-, 3-Acryloxy-propyl-, 3-Methacryloxy-propyl- oder Undecensilylesterrest, epoxyfunktionelle Reste der Gruppe bestehend aus 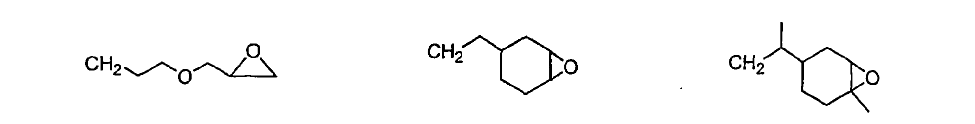 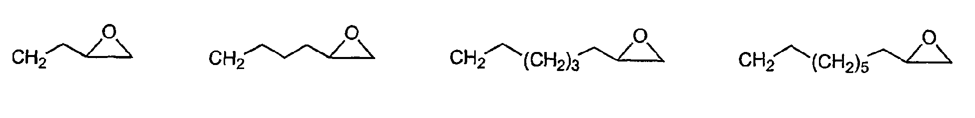 carbonylfunktionelle Reste wie der Propionaldehydrest, polyalkylenoxidfunktionelle Reste, wie z.B. Alkylpolyalkylenoxidreste wie der Ethylenpolyalkylenoxidrest und der Propylenpolyalkylenoxidrest, phosphonatofunktionelle Reste, wie z.B. Phosphonatoalkylreste, silalactonfunktionelle Reste, sowie glykosidfunktionelle Reste, wie z. B. solche, bei denen der Glykosidrest, der aus 1 bis 10 Monosaccarideinheiten aufgebaut sein kann, über einen Alkylen- oder Oxyalkylenspacer gebunden ist, wie beispielsweise in EP-B 612 759 offenbart.

Bevorzugt handelt es sich bei dem Rest R um gegebenenfalls mit Halogen-, Hydroxy-, Mercapto-, Amin-, Ammonium-, Carboxy- oder Epoxygruppen substituierte Kohlenwasserstoffreste mit 1 bis 18 Kohlenstoffatom(en), wobei der Methyl-, Ethyl-, Vinyl-, n-Propyl-, n-Octyl-, n-Dodecyl-, n-Octadecyl- und Phenylrest besonders bevorzugt sind.

Falls es sich bei den erfindungsgemäßen Organosiliciumverbindungen um Organopolysiloxane handelt, haben mindestens 50%, besonders bevorzugt mindestens 90%, aller Reste R die Bedeutung von Methyl- oder Phenylresten.

Beispiele für Reste R¹ sind die für Rest R angegebenen Beispiele. Bevorzugt handelt es sich bei Rest R¹ um Wasserstoffatom oder einen Alkylrest mit 1 bis 8 Kohlenstoffatom(en), der mit Amino- oder Hydroxygruppen substituiert sein kann, wobei Wasserstoffatom, der Methyl-, Ethyl-, Propyl-und Butylrest besonders bevorzugt sind.

Beispiele für Rest X sind Chloratom, die OH-Gruppe, Alkoxyreste, wie der Methoxy-, Ethoxy-, n-Propoxy-, i-Propoxy-,1-Butoxy-, 2-Butoxy-, 1-Pentyloxy-, 1-Hexyloxy-, 1-Octyloxy-, 2-Octyloxy-, i-Octyloxy-, 1-Decyloxy-, 1-Dodecyloxy-, Myristyloxy-, Cetyloxy- oder Stearyloxyrest, Quatfunktionelle Reste, wie
- (CH₂) ₃-N (CH₃)₃⁺, -(CH₂)₃-{N(CH₃)₂C₁₃H₂₇}⁺,
- (CH₂)₃-{N(CH₃)₂-(CH₂)₂-N(CH₃)₃}²⁺,
-(CH₂)₃-{N(CH₂CH₂)₃N}⁺, -(CH₂)₃-NH-CH₂-CH(OH)-CH₂-N(CH₃)₃⁺,
- (CH₂)₃-N{CH₂-CH(OH) -CH₂-N (CH₃) ₃}₂²⁺,
- (CH₂)₃-NH-(CH₂)₂-NH-CH₂-CH(OH) -CH₂-N (CH₃)₃⁺,
-(CH₂)₃-[N{CH₂-CH(OH)-CH₂-N(CH₃)₃}-(CH₂)₂-N(CH₂-CH (OH) -CH₂-N(CH₃)₃}2]³⁺,
- (CH₂)₃-NH-C(O) -CH₂-N (CH₃) ₂C₁₈H₃₇⁺,
- (CH₂)₃-O-CH₂-CH(OH)-CH₂-N(CH₃)₃⁺,
- (CH₂)₃-O-CH₂-CH (OH) -CH₂-N (CH₂CH₃)₃⁺,
- (CH₂)₁₀-C(O) -NH- (CH₂)₃-N (CH₃)₃⁺,
- (CH₂)₁₀-C (O) -NH- (CH₂)₃-N (CH₃) ₂-CH₂-C₆H₅⁺,
- (CH₂)₁₀-C (O) -NH- (CH₂)₃-N (CH₃) ₂⁺-CH₂-COO⁻,
einschließlich der zur Kompensation der kationischen Ladung notwendigen Anionen,
sowie die für Rest R genannten Reste.

Bevorzugt handelt es sich bei Rest X um Chloratom, den Rest A', den Rest -OR¹ mit R¹ gleich der obengenannten Bedeutung, einen Kohlenwasserstoffrest mit 1 bis 40 Kohlenstoffatom(en), der gegebenenfalls durch Einheiten -C(O)-, -C(O)O-, -C(O)NR¹-, -O-C(O)O-, -O-C(O)NR¹-, -NR¹-C(O)-NR¹-,-NR¹-, -(NR¹₂)⁺-, -O-, -S-, =N- unterbrochen und mit Hydroxy-, Mercapto-, Amin-, Ammonium-, Carbonyl-, Carboxyl- oder Oxiranylgruppen substituiert sein kann, oder einen Rest der allgemeinen Formel

-R²-{[CH₂CH₂O]ₑ-[C₃H₆O]_{f}-[(CH₂)₄O]_{g}-R³}ₓ₋₁ (V),

wobei R² einen zweiwertigen, dreiwertigen oder vierwertigen organischen Rest mit 2 bis 20 Kohlenstoffatomen bedeutet, der durch Einheiten -O-, -NR¹-, -(NR¹₂)⁺- unterbrochen sein kann und der durch eine oder mehrere Gruppen der Formeln 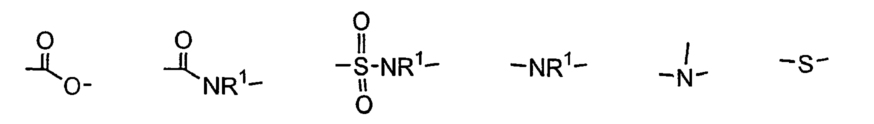 substituiert ist, x entsprechend der Wertigkeit von Rest R² 2, 3 oder 4 ist, R³ ein Wasserstoffatom oder einen gegebenenfalls mit einer Gruppe -C(O)-, -NR¹-, -NR¹₂ oder - (NR¹₂) ⁺-substituierten Kohlenwasserstoffrest mit 1 bis 20 Kohlenstoffatom(en) darstellt, und e, f, g jeweils unabhängig voneinander 0 oder eine ganze Zahl von 1-200 ist, mit der Maßgabe, dass die Summe e+f+g ≥ 1 ist.

Besonders bevorzugt handelt es sich bei Rest X um Chloratom, den Rest A*'*, den Hydroxy-, den Methoxy- und den Ethoxyrest, den Vinylrest, einen organischen Rest mit 1 bis 18 Kohlenstoffatom(en) ausgewählt aus der Gruppe:
- aliphatischer Kohlenwasserstoffrest
- aromatischer, gegebenenfalls substituierter Kohlenwasserstoffrest
- Carbinolfunktioneller Rest
- Carboxy- oder Anhydridfunktioneller Rest
- epoxyfunktioneller Rest
- amidierter aminofunktioneller Rest
- Kohlenwasserstoffrest mit quartärer Stickstoffgruppe
oder einen Rest der allgemeinen Formel (V).

Insbesondere bevorzugt sind Reste.X gleich Chloratom, Rest A', Hydroxy-, Methoxy- oder Ethoxyrest, Vinylrest, Methyl-, Ethyl-, n-Propyl-, n-Octyl-, n-Dodecyl- oder n-Octadecylrest, Phenylrest, 2-Methyl-2-phenyl-ethyl-rest, 3-Hydroxypropylrest, 3-Hydroxy-3-methyl-1-butenylrest, 3-(*ortho*-Hydroxyphenyl)-propylrest, Eugenolrest, 2-Carboxy-ethyl-, 3-Carboxy-propyl-, 4-Carboxy-butyl-, 10-Carboxy-decyl-, 3-(2,5-Dioxotetrahydrofuranyl)-propyl-, 3-(Ethan-1,2-dicarbonsäure)-propyl-, 3-Acryloxy-propyl-, 3-Methacryloxy-propyl- oder Undecensäuretrimethylsilylesterrest, 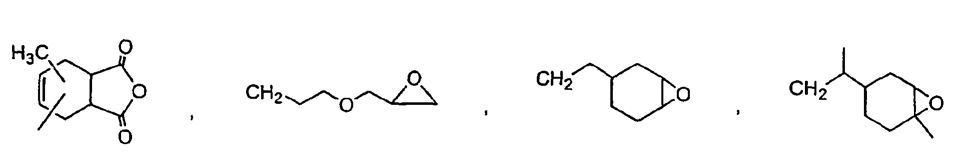 -(CH₂)₃-NH-C(O)-CH₃, -(CH₂)₃-N(*cyclo*-C₆H₁₁)-C(O)-CH₃,
-(CH₂)₃-N{C(O)-CH₃}-(CH₂)₃-NH-C(O)-CH₃, oder Rest der allgemeinen Formel (V).

Beispiele für Rest R² sind
-(CH₂)₂-O-, -(CH₂)₃-O-, -(CH=CH)-CH₂-O-, 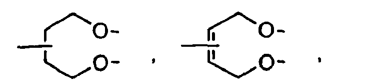 -(CH₂)₃-O-CH₂-CH(OH)-CH₂-O-, -(CH₂)₃-O-C(O)-(CH₂)₂-NH-,
- (CH₂)₃-NH-CH₂-CH(OH) -CH₂-O-, -(CH₂)₃-N{-CH₂-CH(OH)-CH₂-O-}₂,
- (CH₂) ₃-N *(cyclo*-C₆H₁₁) -CH₂-CH (OH) -CH₂-O-,
- (CH₂) ₃-NH- (CH₂) ₃-NH-CH₂-CH (OH) -CH₂-O-,
- (CH₂) ₃-NH-(CH₂) ₃-N {-CH₂-CH (OH) -CH₂-O-}₂,
- (CH₂) ₃-N {CH₂-CH (OH) -CH₂-O-}- (CH₂) ₃-NH-CH₂-CH (OH) -CH₂-O-,
- (CH₂) ₃-N {CH₂-CH (OH) -CH₂-O-}- (CH₂) ₃-N {-CH₂-CH (OH) -CH₂-O- }₂,
-(CH₂)₃-NH-CH₂-C(O)-O-, -(CH₂)₃-N(CH₂-C(O)-O-}₂,
- (CH₂) ₃-N (*cycl*o-C₆H₁₁) -CH₂-C (O) -O-,
- (CH₂) ₃-NH- (CH₂) ₃-NH-CH₂-C (O) -O-,
- (CH₂) ₃-NH- (CH₂) ₃-N{-CH₂-C(O) -O-}₂,
- (CH₂) 3-N{CH₂-C(O)-O-}-(CH₂)₃-NH-CH₂-C (O) -O-,
- (CH₂) ₃-N{CH₂-C (O) -O-} - (CH₂) ₃-N{-CH₂-C(O) -O- }₂,
-(CH₂)₃-NH-CH₂-C(O)-NH-,-(CH₂)₃-N{-CH₂-C(O)-NH-}₂,
- (CH₂) ₃-N (*cyclo*-C₆H₁₁) -CH₂-C (O) -NH-,
- (CH₂) ₃-NH- (CH₂) ₃-NH-CH₂-C (O) -NH-,
- ( CH₂) ₃-NH- (CH₂) ₃-N {-CH₂-C (O) -NH-}₂,
- (CH₂) ₃-N{CH₂-C(O)-NH-}-(CH₂)₃-NH-CH₂-C (O) -NH-,
-(CH₂)₃-N{CH₂-C(O)-NH-}-(CH₂)₃-N{-CH₂-C(O)-NH-}₂,
-(CH₂)₃-NH-CH₂-CH₂-C(O)-O-,-(CH₂)₃-N{-CH₂-CH₂-C(O)-O-}₂,
- (CH₂) ₃-N *(cycl*o-C₆H₁₁) -CH₂-CH₂-C (O)-O-,
-(CH₂)₃-NH-CH₂-CH(CH₃)-C(O)-O-,-(CH₂)₃-N{-CH₂-CH(CH₃)-C(O)-O-}₂,
- (CH₂)₃-N *(cycl*o-C₆H₁₁) -CH₂-CH (CH₃) -C (O) -O-,
- (CH₂)₃-NH- (CH₂) ₃-NH-CH₂-CH₂-C (O) -O-,
- (CH₂) ₃-NH- (CH₂) ₃-N {-CH₂-CH₂-C (O) -O-}₂,
- (CH₂) ₃-N{CH₂-CH₂-C (O) -0- } - (CH₂) ₃-NH-CH₂-CH₂-C (O) -O-,
- (CH₂) ₃-N{CH₂-CH₂-C(O) -O-}- (CH₂) ₃-N{-CH₂-CH₂-C (O) -O-}₂,
- (CH₂)₃-NH- (CH₂)₃-NH-CH₂-CH (CH₃)-C (O)-O-,
- (CH₂)₃-NH- (CH₂)₃-N{-CH₂-CH (CH₃) -C (O) -O-}₂,
- (CH₂) ₃-N {CH₂-CH (CH₃) -C (O) -O-}- (CH₂) ₃-NH-CH₂-CH (CH₃) -C (O) -O-,
-(CH2)₃-N{CH₂-CH(CH₃) -C(O)-O-}-(CH₂)3-N{-CH₂-CH(CH₃)-C(O)-O-}₂,
-(CH₂)₃-NH-CH₂-CH₂-C(O)-NH-,-(CH₂)₃-N{-CH₂-CH₂-C(O)-NH-}₂,
- (CH₂) ₃-N *(cycl*o-C₆H₁₁) -CH₂-CH₂-C (O) -NH-,
- (CH₂) ₃-NH-CH₂-CH (CH₃) -C (O) -NH-,
- (CH₂) ₃-N{-CH₂-CH (CH₃) -C (O) -NH-}₂,
- (CH₂) ₃-N (*cyclo*-C₆H₁₁) -CH₂-CH (CH₃) -C (O) -NH-,
- (CH₂) ₃-NH- (CH₂) ₃-NH-CH₂-CH₂-C (O) -NH-,
- (CH₂) 3-NH- (CH₂) ₃-N{-CH₂-CH₂-C (O) -NH-}₂,
-(CH₂)₃-N {CH₂-CH₂-C(O)-NH-}-(CH₂)₃-NH-CH₂-CH₂-C (O)-NH-,
- (CH₂) ₃-N{CH₂-CH₂-C(O) -NH-}-(CH₂) ₃-N {-CH₂-CH₂-C(O)-NH-}₂,
- (CH₂) ₃-NH- (CH₂) ₃-NH-CH₂-CH (CH₃) -C (O) -NH-,
- (CH₂) ₃-NH- (CH₂) ₃-N{-CH₂-CH(CH₃) -C (O) -NH-}₂,
- (CH₂) ₃-N {CH₂-CH (CH₃) -C (O) -NH-} - (CH₂) ₃-NH-CH₂-CH (CH₃) -C (O) -NH-,
-(CH₂)₃-N{CH₂-CH(CH₃)-C(O)-NH-}-(CH₂)₃-N{-CH₂-CH(CH₃)-C(O) -NH-}₂,
- (CH₂)₃-S-CH₂-CH(OH)-CH₂-O-, -(CH₂)₃-S-CH₂-CH₂-C(O)-O-,
- (CH₂) ₃-S-CH₂-CH (CH₃) -C (O) -O-,
-(CH₂)₃-S-CH₂-CH₂-C(O)-NH-, -(CH₂)₃-S-CH₂-CH(CH₃)-C(O)-NH-,
-(CH₂)₂-C(O)O-, -CH₂-CH (CH₃) -C (O) O-,
-(CH₂)₃-C(O)O, -(CH₂)₁₀-C(O)O-,
-(CH₂)₂-C(O)NH-, -CH₂-CH(CH₃)-C(O)NH-, -(CH₂)₃-C(O)NH-,
- (CH₂) ₁₀-C (O) NH-, 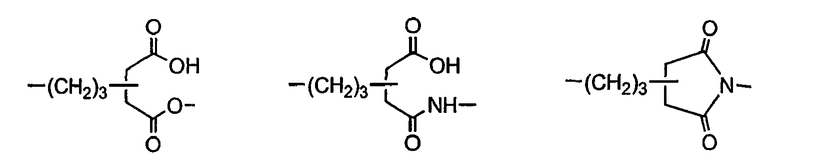 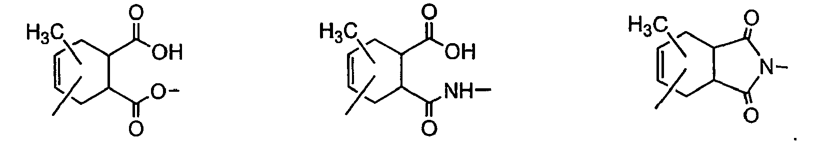 Bevorzugt handelt es sich bei Rest R² um
-(CH₂)₂-O-,-(CH₂)₃-O-, -(CH=CH)-CH₂-O-, 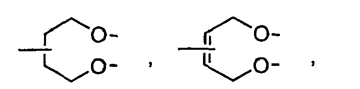 -(CH₂)₃-O-CH₂-CH(OH)-CH₂-O-, -(CH₂) ₃-S-CH₂-CH(OH)-CH₂-O-,
-(CH₂)₃-NH-CH₂-CH(OH)-CH₂-O-, -(CH₂)₃-N{-CH₂-CH(OH)-CH₂-O-}₂,
- (CH₂)₃-NH- (CH₂) ₃-NH-CH₂-CH (OH) -CH₂-O-,
- (CH₂)₃-NH- (CH₂) ₃-N{-CH₂-CH (OH) -CH₂-O-}₂,
- (CH₂)₃-N{CH₂-CH (OH)-CH₂-O-}- (CH₂)₃-NH-CH₂-CH (OH) -CH₂-O- ,
- (CH₂) ₃-N{CH₂-CH(OH) -CH₂-O-}- (CH₂) ₃-N {-CH₂-CH (OH) -CH₂-O-}₂,
- (CH₂) ₃-NH-CH₂-CH₂-C (O) -O-, - (CH₂) ₃-N{-CH₂-CH₂-C (O) -O-}₂,
- (CH₂) ₃-NH- (CH₂) ₃-NH-CH₂-CH₂-C (O) -O-,
- (CH₂)₃-NH-(CH₂)₃-N{-CH₂-CH₂-C(O)-O-}₂,
- (CH₂) ₃-N{CH₂-CH₂-C (O) -O-}- (CH₂) ₃-NH-CH₂-CH₂-C (O)-O-,
- (CH₂)₃-N{CH₂-CH₂-C(O)-O-}-(CH₂)₃-N{-CH₂-CH₂-C(O)-O-}₂,
-(CH₂)₃-NH-CH₂-CH₂-C(O)-NH-, -(CH₂)₃-N{-CH₂-CH₂-C(O)-NH-}₂,
-(CH₂) ₃-NH- (CH₂) ₃-NH-CH₂-CH₂-C (O)-NH-,
- (CH₂) ₃-NH- (CH₂) ₃-N{-CH₂-CH₂-C (O) -NH-}₂,
- (CH₂) ₃-N {CH₂-CH₂-C (O) -NH-}- (CH₂) ₃-NH-CH₂-CH₂-C (O) -NH-,
- (CH₂) ₃-N{CH₂-CH₂-C(O) -NH-}- (CH₂) ₃-N {-CH₂-CH₂-C (O) -NH-}₂,
-(CH₂)₃-S-CH₂-CH_{Z}-C(O)-O-, -(CH₂)₃-S-CH₂-CH(CH₃)-C(O)-O-,
-(CH₂)₂-C(O)O-, -CH₂-CH(CH₃)-C(O)O-,-(CH₂)₃-C(O)O-,
- (CH₂)₁₀-C (O) O-,
-(CH₂)₂-C(O)NH-, -CH₂-CH(CH₃)-C(O)NH-, -(CH₂)₃-C(O)NH-,
- (CH₂) ₁₀-C (O) NH-, 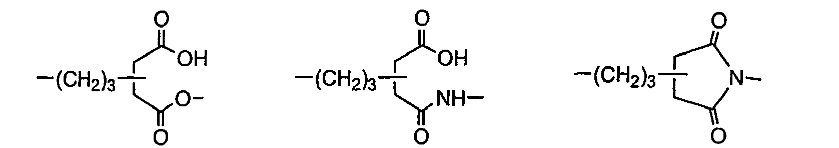 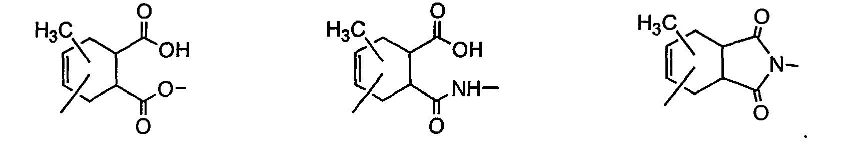 Besonders bevorzugt handelt es sich bei Rest R² um
-(CH₂)₂-O-, -(CH₂)₃-O-, -(CH=CH)-CH₂-O-, 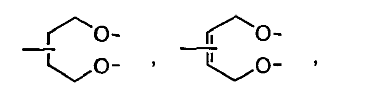 - (CH₂) ₃-O-CH₂-CH (OH) -CH₂-O-, - (CH₂) ₃-S-CH₂-CH (OH) -CH₂-O-,
- (CH₂)₂-C (O) O- , -CH₂-CH(CH₃)-C(O)O-, -(CH₂)₃-C(O)O-,
- (CH₂) ₁₀-C (O) O-,
- (CH₂) ₂-C (O) NH-, -CH₂-CH (CH₃) -C(O) NH-, - (CH₂)₃-C(O)NH-,
- (CH₂) ₁₀-C (O) NH-,
- (CH₂) ₃-S-CH₂-CH₂-C (O) -O-, 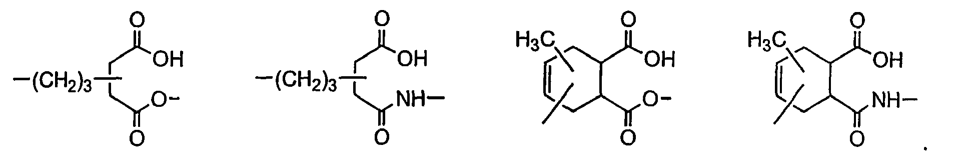 Beispiele für Rest R³ sind Wasserstoffatom, Alkylreste, wie der Methyl-, Ethyl-, n-Propyl-, i-Propyl-, 1-Butyl-, 1-Pentyl-, 1-Hexyl-, 1-Octyl-, 2-Octyl-, i-Octyl-, 1-Decyl-, 1-Dodecyl-, Myristyl-, Cetyl- oder Stearylrest, Acylreste, wie der Formyl-, Acetyl-, Acryloyl- oder Methacryloylrest, oder Quatfunktionelle Reste, wie die Reste 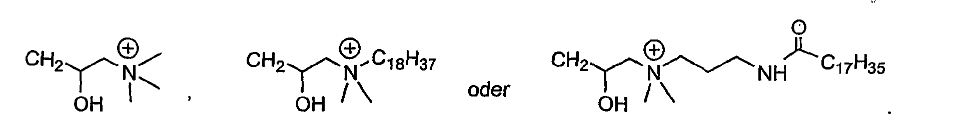 Bevorzugte Reste R³ sind Wasserstoffatom, der Methyl-, Ethyl-, n-Propyl-, i-Propyl-,1-Butyl-, 1-Pentyl-, 1-Hexyl-, 1-Octyl-, 2-Octyl-, i-Octyl-, 1-Decyl-, 1-Dodecyl-, Myristyl-, Cetyl- oder Stearylrest, der Formyl-, Acetyl- oder Acryloylrest,
wobei Wasserstoffatom, der Methylrest, der 1-Butylrest, der Myristyl-, Cetyl- oder Stearylrest sowie der Acetyl- oder Acryloylrest besonders bevorzugt sind.

Beispiele für Rest Y¹ sind Alkylenreste, wie der Methylen-, Ethylen-, Propylen-, 2-Methyl-propylen-, Butylen-, Pentylen-, Hexylen-, Heptylen-, Octylen-, Nonylen-, Undecylen- und Heptadecylenrest; cyclische und polycyclische Alkylenreste, wie z. B. der Cyclohexylen-, Methylcyclohexylen-, Dimethylcyclohexylen- und Norbornylenrest; ungesättigte Alkylenreste, wie der Ethenylen-, 1-Propenylen-, 1-Butenylen- und 2-Butenylenrest; ether- und polyetherfunktionelle Alkylenreste; veresterte und amidierte Hydroxyalkylen-, Mercaptoalkylen- und Aminoalkylenreste; sowie Alkylenreste, welche durch eine Kohlensäurederivatgruppe, wie Kohlensäureester-, Urethan- oder Harnstoffgruppe, unterbrochen sind.

Bevorzugt handelt es sich bei Rest Y¹ um einen zwei- oder mehrwertigen, vorzugsweise zwei bis zehnwertigen, bevorzugt zwei bis vierwertigen, Kohlenwasserstoffrest mit 1 bis 18 Kohlenstoffatom(en), der gegebenenfalls durch Einheiten -C(O)-, -C(O)O-, -C(O)NR¹⁻, -O-C(O)O-,-O-C(O)NR¹-, -NR¹-C(O)-NR¹-, -O-, -S-, =N- unterbrochen und mit Hydroxy-, Alkoxy-, Mercaptoalkyl-, Carbonyl-, Carboxyl- oder Oxiranylgruppen substituiert sein kann, oder um einen Rest der Formel

-R²-{[CH₂CH₂O]ₑ-[C₃H₆O]_{f}-[(CH₂)₄O]_{g}-V-}ₓ₋₁ (VI),

worin V einen Methylen-, Ethylen-, n-Propylen- oder n-Butylen-Rest bedeutet und
wobei R², e, f, g und x die oben dafür angegebene Bedeutung besitzen.

Besonders bevorzugt handelt es sich bei Rest Y¹ um den Ethylen-, Propylen-, 2-Methyl-propylen-, Butylen-, Pentylen-, Nonylen- und Undecylenrest, die Reste 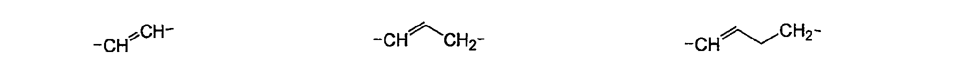 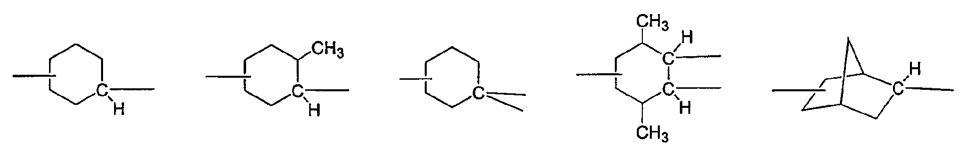 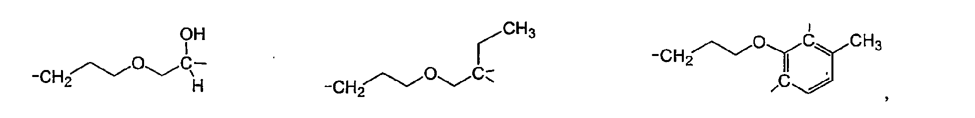 einen Rest der Formel

-R⁴- (Z-CH₂CH₂)_{z}-Z*`*-R⁴- (VII),

wobei die Reste R⁴ gleich oder verschieden sein können und zweiwertiger Kohlenwasserstoffrest mit 1 bis 10 (bevorzugt 1 bis 6) Kohlenstoffatomen bedeutet, Z gleich -O- oder -NR⁵-, mit R⁵ gleich Rest der Formel -C(O) - (CH₂) ₕ-H, mit h ≥ 1 (bevorzugt 1-6, besonders bevorzugt 1-3), ist, Z' die Gruppierung -O-C(0)-, -NH-C(O)-, -O-C(O)O-, -NH-C (O)O- oder -NH-C(O)NH-, bevorzugt -O-C(O)-, -NH-C(O)-, -NH-C(O)O- oder -NH-C(O)NH-, darstellt, und z eine ganze Zahl von 0 bis 4 (bevorzugt 0 oder 1) ist,
und einen Rest der Formel (VI).

Vorzugsweise ist y entsprechend der Wertigkeit von Y¹ eine ganze Zahl von 2 bis 10, bevorzugt 2 bis 4.

Bevorzugt handelt es sich bei Rest Y² um Wasserstoffatom oder einen einwertigen Kohlenwasserstoffrest mit 1 bis 100 Kohlenstoffatom(en), der gegebenenfalls durch Einheiten -C(O)-, -C(O)O-, -C(O)NR¹-, -O-C(O)NR¹-, -NR¹-C(O)-NR¹-, -O-, -S-, =N-unterbrochen und mit Hydroxy-, Alkoxy-, Mercaptoalkyl-, Carbonyl-, Carboxyl- oder Oxiranylgruppen substituiert sein kann. Besonders bevorzugt handelt es sich um Wasserstoffatom oder einen einwertigen Kohlenwasserstoffrest mit 1 bis 18 Kohlenstoffatom(en), der gegebenenfalls durch Einheiten -C(O)-, -C (O)O-, -C (O)NR¹- -O-C (O) NR¹-, -NR¹-C(O)-NR¹-, -O-, -S-, =N-unterbrochen und mit Hydroxy-, Alkoxy-, Mercaptoalkyl-, Carbonyl-, Carboxyl- oder Oxiranylgruppen substituiert sein kann. Insbesondere bevorzugt ist Wasserstoffatom.

Bevorzugt handelt es sich bei Rest Y³ um Wasserstoffatom oder einen einwertigen Kohlenwasserstoffrest mit 1 bis 100 Kohlenstoffatom(en), der gegebenenfalls durch Einheiten -C(O)-, -C(O)O-, -C(O)NR¹-, -O-C(O)NR¹-, -NR¹⁻C(O)-NR¹-, -O-, -S-, =N-unterbrochen und mit Hydroxy-, Alkoxy-, Mercaptoalkyl-, Carbonyl-, Carboxyl- oder Oxiranylgruppen substituiert sein kann. Besonders bevorzugt handelt es sich um Wasserstoffatom oder einen einwertigen Kohlenwasserstoffrest mit 1 bis 18 Kohlenstoffatom(en), der gegebenenfalls durch Einheiten -C(O)-, -C(O)O-, -C(O)NR¹-, -O-C(O)NR¹-, -NR¹-C(O) -NR¹-, -O-, -S-, =N-unterbrochen und mit Hydroxy-, Alkoxy-, Mercaptoalkyl-, Carbonyl-, Carboxyl- oder Oxiranylgruppen substituiert sein kann. Insbesondere bevorzugt ist Wasserstoffatom.

Als Mediator wird vorzugsweise mindestens eine Verbindung ausgewählt aus der Gruppe der aliphatischen, cycloaliphatischen, heterocyclischen oder aromatischen Verbindungen, die mindestens eine N- Hydroxy-, Oxim-, Nitroso-, N-Oxyl- oder N-Oxi-Funktion enthält, eingesetzt.

Beispiele für solche Verbindungen sind die im Folgenden genannten Verbindungen der Formel (VIII) bis (XLII).

Vorzugsweise werden die Mediatoren ausgewählt aus der Gruppe stabiler Nitroxyl-Radikale (Nitroxide) - d.h. die freien Radikale können in reiner Form erhalten, charakterisiert und aufbewahrt werden - der allgemeinen Formeln (VIII), (IX) und (X) 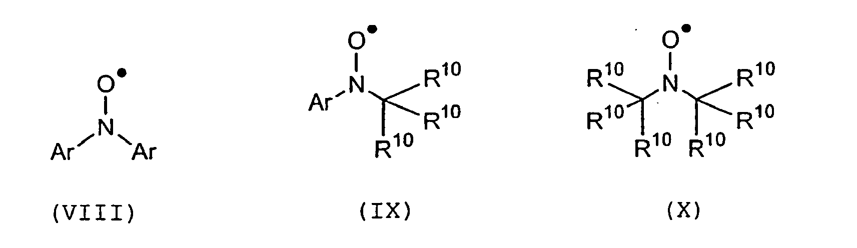 wobei
Ar einbindiger homo- oder heteroaromatischer ein- oder zweikerniger Rest bedeutet und
wobei dieser aromatische Rest durch einen oder mehrere, gleiche oder verschiedene Reste R¹¹, ausgewählt aus der Gruppe Halogen-, Formyl-, Cyano-, Carbamoyl-, Carboxy-, Ester oder Salz des Carboxyrests, Sulfonorest, Ester oder Salz des Sulfonorests, Sulfamoyl-, Nitro-, Nitroso-, Amino-, Phenyl-, Aryl-C₁-C₅-Alkyl, C₁-C₁₂-Alkyl-, C₁-C₅-Alkoxy-, C₁-C₁₀-Carbonyl-, Carbonyl-C₁-C₆-Alkyl-, Phospho-, Phosphono-, Phosphonooxyrest, Ester oder Salz des Phosphonooxyrests, substituiert sein kann und
wobei Phenyl-, Carbamoyl- und Sulfamoylreste unsubstituiert oder ein- oder mehrfach mit einem Rest R¹² substituiert sein können, der Aminorest ein- oder zweifach mit R¹² substituiert sein kann und die Aryl-C₁-C₅-Alkyl-, C₁-C₁₂-Alkyl-, C₁-C₅-Alkoxy, C₁-C₁₀-Carbonyl-, Carbonyl-C₁-C₆-Alkyl-Reste gesättigt oder ungesättigt, verzweigt oder unverzweigt sein können und mit einem Rest R¹² ein- oder mehrfach substituiert sein können,
wobei
R¹² ein- oder mehrfach vorhanden sein kann und gleich oder verschieden ist und Hydroxy-, Formyl-, Cyano-, Carboxyrest, Ester oder Salz des Carboxyrests, Carbamoyl-, Sulfono-, Sulfamoyl-, Nitro-, Nitroso-, Amino-, Phenyl-, C₁-C₅-Alkyl-, C₁-C₅-Alkoxy-, C₁-C₅-Alkylcarbonylrest bedeutet,

R¹⁰ gleich oder verschieden ist und Halogen-, Hydroxy-, Mercapto-, Formyl-, Cyano-, Carbamoyl-, Carboxyrest, Ester oder Salz des Carboxyrests, Sulfonorest, Ester oder Salz des Sulfonorests, Sulfamoyl-, Nitro-, Nitroso-, Amino-, Phenyl-, Aryl-C₁-C₅-Alkyl-, C₁-C₁₂-Alkyl-, C₁-C₅-Alkoxy-, C₁-C₁₀-Carbonyl-, Carbonyl-C₁-C₆-Alkyl-, Phospho-, Phosphono-, Phosphonooxyrest, Ester oder Salz des Phosphonooxyrests, bedeutet, und R¹⁰ im Fall bicyclischer stabiler Nitroxylradikale (Struktur X) auch Wasserstoff bedeuten kann, wobei
die Carbamoyl-, Sulfamoyl-, Amino-, Mercapto- und Phenylreste unsubstituiert oder ein- oder mehrfach mit einem Rest R¹³ substituiert sein können,
die Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Reste gesättigt oder ungesättigt, verzweigt oder unverzweigt sein können und mit einem Rest R¹³ ein- oder mehrfach substituiert sein können, wobei
R¹³ gleich oder verschieden ist und Hydroxy-, Formyl-, Cyano-, Carboxyrest, Ester oder Salz des Carboxyrests, Carbamoyl-, Sulfono-, Sulfamoyl-, Nitro-, Nitroso-, Amino, Phenyl, C₁-C₅-Alkyl-, C₁-C₅-Alkoxy-, C₁-C₅-Alkylcarbonylrest bedeutet

und je zwei Reste R¹² oder R¹³ paarweise über eine Brücke [-CR¹⁴R¹⁵-] mit i gleich 0, 1, 2, 3. oder 4 verknüpft sein können, wobei
R¹⁴ und R¹⁵ gleich oder verschieden sind und Halogen-, Carboxyrest, Ester oder Salz des Carboxyrests, Carbamoyl-, Sulfamoyl-, Phenyl, Benzoyl-, C₁-C₅-Alkyl-, C₁-C₅-Alkoxy-, C₁-C₅-Alkylcarbonylrest bedeuten und eine oder mehrere nicht benachbarte Gruppen [-CR¹⁴R¹⁵-] durch Sauerstoff, Schwefel oder einen ggf. mit C₁-C₅-Alkyl-substituierten Iminorest und zwei benachbarte Gruppen [-CR¹⁴R¹⁵-] durch eine Gruppe [-CR¹⁴=CR¹⁵-], [-CR¹⁴=N-] oder [-CR¹⁴=N (O)-] ersetzt sein können.

Als Mediatoren bevorzugt sind Nitroxyl-Radikale der allgemeinen Formeln (XI) und (XII) 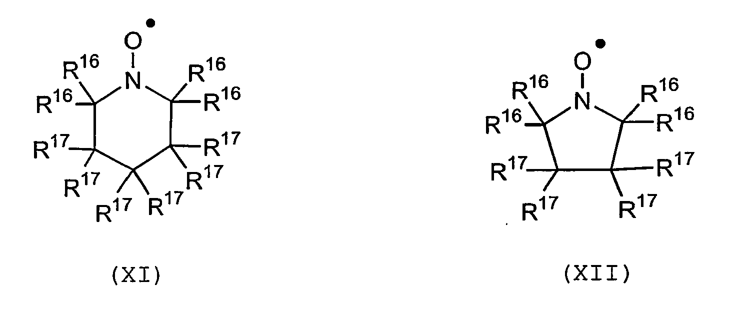 wobei
R¹⁶ gleich oder verschieden ist und Phenyl-, Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Rest bedeutet, wobei
die Phenylreste unsubstituiert oder ein- oder mehrfach mit einem Rest R¹⁸ substituiert sein können, und die Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Reste gesättigt oder ungesättigt, verzweigt oder unverzweigt sein können und mit einem Rest R¹⁸ ein- oder mehrfach substituiert sein können, wobei
R¹⁸ ein- oder mehrfach vorhanden sein kann und gleich oder verschieden ist und Hydroxy-, Formyl-, Carboxyrest, Ester oder Salz des Carboxyrests, Carbamoyl-, Sulfono-, Sulfamoyl-, Nitro-, Nitroso-, Amino, Phenyl-, Benzoyl-, C₁-C₅-Alkyl-, C₁-C₅-Alkoxyrest, C₁-C₅-Alkylcarbonyl-Rest bedeutet,

R¹⁷ gleich oder verschieden ist und ein Wasserstoffatom oder Hydroxy-, Mercapto-, Formyl-, Cyano-, Carbamoyl-, Carboxyrest, Ester oder Salz des Carboxyrests, Sulfonorest, Ester oder Salz des Sulfonorests, Sulfamoyl-, Nitro-, Nitroso-, Amino-, Phenyl-, Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Rest, Phospho-, Phosphono-, Phosphonooxyrest, Ester oder Salz des Phosphonooxyrests bedeutet, wobei
die Carbamoyl-, Sulfamoyl-, Amino-, Mercapto- und Phenylreste unsubstituiert oder ein- oder mehrfach mit einem Rest R¹² substituiert sein können,
und die Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Reste gesättigt oder ungesättigt, verzweigt oder unverzweigt sein können und mit einem Rest R¹² ein- oder mehrfach substituiert sein können,
und eine [-CR¹⁷R¹⁷-]-Gruppe durch Sauerstoff, einen ggf. mit C₁-C₅-Alkylsubstituierten Iminorest, einen (Hydroxy)iminorest, eine Carbonylfunktion oder eine ggf. mit R¹² mono- oder disubstituierten Vinylidenfunktion ersetzt sein kann,
und zwei benachbarte Gruppen [-CR¹⁷R¹⁷-] durch eine Gruppe [-CR¹⁷=CR¹⁷-], [-CR¹⁷=N-] oder [-CR¹⁷=N(O)-] ersetzt sein können.

Beispiele für Verbindungen der allgemeinen Formeln (XI) und (XII), die als Mediatoren eingesetzt werden können, sind
2,2,6,6-Tetramethyl-piperidin-1-oxyl (TEMPO),
4-Hydroxy-2,2,6,6-tetramethyl-piperidin-1-oxyl,
4-Amino-2,2,6,6-tetramethyl-piperidin-1-oxyl,
4-Oxo-2,2,6,6-tetra-methyl-piperidin-1-oxyl,
4-Acetoxy-2,2,6,6-tetramethyl-piperidin-1-oxyl,
4-Acetamido-2,2,6,6-tetramethyl-piperidin-1-oxyl,
4-(Ethoxyfluorphosphinyloxy)-2,2,6,6-tetramethyl-piperidin-1-oxyl,
4-(Isothiocyanato)-2,2,6,6-tetramethyl-piperidin-1-oxyl,
4-Maleimido-2,2,6,6-tetramethyl-piperidin-1-oxyl,
4-Benzoyloxy-2,2,6,6-tetramethyl-piperidin-1-oxyl,
4-(9-Nitrobenzoyloxy)-2,2,6,6-tetramethyl-piperidin-1-oxyl,
4-(Phosphonooxy)-2,2,6,6-tetramethyl-piperidin-1-oxyl,
4-Cyano-2,2,6,6-tetramethyl-piperidin-1-oxyl,
3-Carbamoyl-2,2,5,5-tetramethyl-3-pyrrolin-1-oxyl,
4-Phenyl-2,2,5,5-tetramethyl-3-imidazolin-3-oxid-1-oxyl,
4-Carbamoyl-2,2,5,5-tetramethyl-3-imidazolin-3-oxid-1-oxyl,
4-Phenacyliden-2,2,5,5-tetramethyl-imidazolidin-1-oxyl,
3-(Aminomethyl)-2,2,5,5-tetramethyl-pyrrolidin-N-oxyl,
3-Carbamoyl-2,2,5,5-tetramethyl-pyrrolidin-N-oxyl,
3-Carboxy- 2,2,5,5-tetramethyl-pyrrolidin-N-oxyl,
3-Cyano-2,2,5,5-tetramethyl-pyrrolidin-N-oxyl,
3-Maleimido-2,2, 5,5-tetramethyl-pyrrolidin-N-oxyl,
3-(4-Nitrophenoxycarbonyl)-2,2,5,5-tetramethyl-pyrrolidin-N-oxyl.

In einer besonderen Ausführungsform können die Nitroxyl-Radikale der allgemeinen Formeln (XI) und (XII) auch über einen oder mehrere Reste R¹⁷ mit einer polymeren Struktur verknüpft sein. In der Literatur ist eine Vielzahl solcher polymergebundenen Nitroxyl-Radikale beschrieben (vgl. z. B. die in EP 1302 456 A1, S.4 Zeile 39 bis 43, zitierte Literatur). Beispiele sind PIPO (polymer immobilised piperidinyloxyl), SiO₂-geträgertes TEMPO, Polystyrol- und Polyacrylsäuregeträgertes TEMPO.

Als Mediatoren der allgemeinen Formeln (XI) und (XII) werden bevorzugt
2,2,6,6-Tetramethyl-piperidin-1-oxyl (TEMPO),
4-Hydroxy-2,2,6,6-tetramethyl-piperidin-1-oxyl,
4-Amino-2, 2, 6, 6-tetramethyl-piperidin-1-oxyl,
4-Oxo-2,2,6,6-tetra-methyl-piperidin-1-oxyl,
4-Acetoxy-2,2,6,6-tetramethyl-piperidin-1-oxyl,
4-Acetamido-2,2,6,6-tetramethyl-piperidin-1-oxyl,
4-(Isothiocyanato)-2,2,6,6-tetramethyl-piperidin-1-oxyl,
4-Maleimido-2,2,6,6-tetramethyl-piperidin-1-oxyl,
4-Benzoyloxy-2,2,6,6-tetramethyl-piperidin-1-oxyl,
4-(4-Nitrobenzoyloxy)-2,2,6,6-tetramethyl-piperidin-1-oxyl,
4-(Phosphonooxy)-2,2,6,6-tetramethyl-piperidin-1-oxyl,
4-Cyano-2,2,6,6-tetramethyl-piperidin-1-oxyl,
3-Carbamoyl-2,2,5,5-tetramethyl-3-pyrrolin-1-oxyl,
4- Phenyl-2,2,5,5-tetramethyl-3-imidazolin-3-oxid-1-oxyl,
4-Carbamoyl-2,2,5,5-tetramethyl-3-imidazolin-3-oxid-1-oxyl,
4-Phenacyliden-2,2,5,5-tetramethyl-imidazolidin-1-oxyl,
PIPO (polymer immobilised piperidinyloxyl).

Als Mediatoren der allgemeinen Formeln (XI) und (XII) sind besonders bevorzugt
2,2,6,6-Tetramethyl-piperidin-1-oxyl (TEMPO),
4-Hydroxy-2,2,6,6-tetramethyl-piperidin-1-oxyl,
4-Amino-2,2,6, 6-tetramethyl-piperidin-1-oxyl,
4-Acetoxy-2,2,6,6-tetramethyl-piperidin-1-oxyl,
4-Benzoyloxy-2,2,6,6-tetramethyl-piperidin-1-oxyl und
PIPO (polymer immobilised piperidinyloxyl).

Ebenfalls vorzugsweise eingesetzt werden Mediatoren aus der Gruppe der Verbindungen der allgemeinen Formeln (XIII), (XIV), (XV) und (XVI), von denen die Mediatoren der allgemeinen Formeln (XIV), (XV) und (XVI) bevorzugt, die Verbindungen der Formel (XV) und (XVI) besonders bevorzugt sind.

Verbindungen der allgemeinen Formel (XIII) sind: 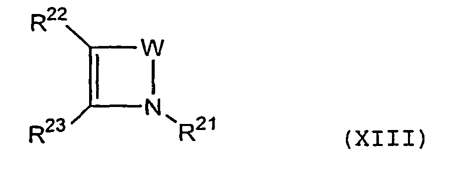 wobei W für eine der folgenden Gruppen steht:
[-N=N]-, [-N=CR²⁴-]ⱼ, [-CR²⁴=N-]ⱼ, [-CR²⁵=CR²⁶-]ⱼ, 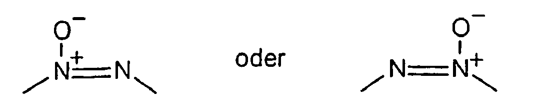 und j gleich 1 oder 2 ist,
wobei die Reste R²¹ bis R²⁶ gleich oder verschieden sein können und unabhängig voneinander eine der folgenden Gruppen darstellen können: Wasserstoff, Halogen, Hydroxy, Formyl, Carboxy sowie Salze und Ester davon, Amino, Nitro, C₁-C₁₂-Alkyl, C₁-C₆-Alkyloxy, Carbonyl-C₁-C₆-alkyl, Phenyl, Sulfono, Ester und Salze davon, Sulfamoyl, Carbamoyl, Phospho, Phosphono, Phosphonooxy und deren Salze und Ester, wobei die Amino-, Carbamoyl- und Sulfamoyl-Gruppen der Reste R²¹ bis R²⁶ weiterhin unsubstituiert oder ein- oder zweifach mit Hydroxy, C₁-C₃-Alkyl, C₁-C₃-Alkoxy substituiert sein können,
und wobei die Reste R²² und R²³ eine gemeinsame Gruppe -B-bilden können und -B- dabei eine der folgenden Gruppen repräsentiert: [-CR²⁷=CR²⁸-CR²⁹=CR³⁰-] oder [-CR³⁰=CR²⁹-CR²⁸=CR²⁷-].

Die Reste R²⁷ bis R³⁰ können gleich oder ungleich sein und unabhängig voneinander eine der folgenden Gruppen darstellen: Wasserstoff, Halogen, Hydroxy, Formyl, Carboxy sowie Salze und Ester davon, Amino, Nitro, C₁-C₁₂-Alkyl, C₁-C₆-Alkyloxy, Carbonyl-C₁-C₆-alkyl, Phenyl, Sulfono, Ester und Salze davon, Sulfamoyl, Carbamoyl, Phospho, Phosphono, Phosphonooxy und deren Salze und Ester, wobei die Amino-, Carbamoyl- und Sulfamoyl-Gruppen der Reste R²⁷ bis R³⁰ weiterhin unsubstituiert oder ein- oder zweifach mit Hydroxy, C₁-C₃-Alkyl, C₁-C₃-Alkoxy substituiert sein können, und wobei die C₁-C₁₂-Alkyl-, C₁-C₆-Alkyloxy-, Carbonyl-C₁-C₆-alkyl-, Phenyl-, Aryl-Gruppen der Reste R²⁷ bis R³⁰ unsubstituiert oder weiterhin ein- oder mehrfach mit dem Rest R³¹ substituiert sein können und wobei der Rest R³¹ eine der folgenden Gruppen darstellen kann: Wasserstoff, Halogen, Hydroxy, Formyl, Carboxy sowie deren Salze und Ester, Amino, Nitro, C₁-C₁₂-Alkyl, C₁-C₆-Alkyloxy, Carbonyl-C₁-C₆-alkyl, Phenyl, Aryl, sowie deren Ester und Salze, wobei die Carbamoyl, Sulfamoyl, Amino-Gruppen des Restes R³¹ unsubstituiert oder weiterhin ein- oder zweifach mit dem Rest R³² substituiert sein können und wobei der Rest R³² eine der folgenden Gruppen darstellen kann: Wasserstoff, Hydroxy, Formyl, Carboxy, sowie deren Salze und Ester, Amino, Nitro, C₁-C₁₂-Alkyl, C₁-C₆-Alkyloxy, Carbonyl-C₁-C₆-alkyl, Phenyl, Aryl.

Beispiele für die genannten Verbindungen der allgemeinen Formel (XIII) sind:
1-Hydroxy-1,2,3-triazol-4,5-dicarbonsäure
1-Phenyl-1H-1,2,3-triazol-3-oxid
5-Chlor-1-phenyl-1H-1,2,3-triazol-3-oxid
5-Methyl-1-phenyl-1H-1,2,3-triazol-3-oxid
4-(2,2-Dimethylpropanoyl)-1-hydroxy-1H-1,2,3-triazol
4-Hydroxy-2-phenyl-2H-1,2,3-triazol-1-oxid
2, 4, 5-Triphenyl-2H-1, 2, 3-triazol-1-oxid
1-Benzyl-1H-1,2,3-triazol-3-oxid
1-Benzyl-4-chlor-1H-1,2,3-triazol-3-oxid
1-Benzyl-4-brom-1H-1,2,3-triazol-3-oxid
1-Benzyl-4-methoxy-1H-1,2,3-triazol-3-oxid

Verbindungen der allgemeinen Formel (XIV) sind: 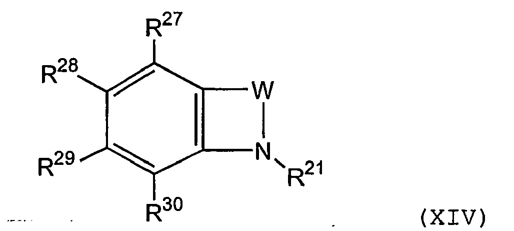 wobei W für eine der folgenden Gruppen steht:
[-N=N] -, [-N=CR²⁴-]ⱼ, [-CR²⁴=N-]ⱼ, [-CR²⁵=CR²⁶-]ⱼ, 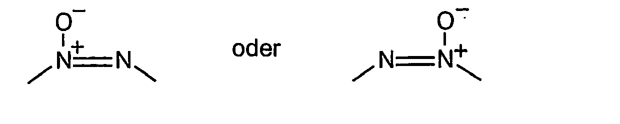 und j gleich 1 oder 2 ist.

Die Reste R²¹ und R²⁴ bis R³⁰ können gleich oder ungleich sein und unabhängig voneinander eine der folgenden Gruppen darstellen: Wasserstoff, Halogen, Hydroxy, Formyl, Carboxy sowie Salze und Ester davon, Amino, Nitro, C₁-C₁₂-Alkyl, C₁-C₆-Alkyloxy, Carbonyl-C₁-C₆-alkyl, Phenyl, Sulfono, Ester und Salze davon, Sulfamoyl, Carbamoyl, Phospho, Phosphono, Phosphonooxy und deren Salze und Ester, wobei die Amino-, Carbamoyl- und Sulfamoyl-Gruppen der Reste R²¹ und R²⁴ bis R³⁰ weiterhin unsubstituiert oder ein- oder zweifach mit Hydroxy, C₁-C₃-Alkyl, C₁-C₃-Alkoxy substituiert sein können, und wobei die C₁-C₁₂-Alkyl-, C₁-C₆-Alkyloxy-, Carbonyl-C₁-C₆-alkyl-, Phenyl-, Aryl-, Aryl-C₁-C₆-alkyl-Gruppen der Reste R²¹ und R²⁴ bis R³⁰ unsubstituiert oder weiterhin ein- oder mehrfach mit dem Rest R³² substituiert sein können und wobei der Rest R³² eine der folgenden Gruppen darstellen kann: Wasserstoff, Halogen, Hydroxy, Formyl, Carboxy sowie deren Salze und Ester, Amino, Nitro, C₁-C₁₂-Alkyl, C₁-C₆-Alkyloxy, Carbonyl-C₁-C₆-alkyl, Phenyl, Aryl, Sulfono, Sulfeno, Sulfino sowie deren Ester und Salze, wobei die Carbamoyl, Sulfamoyl, Amino-Gruppen des Restes R³² unsubstituiert oder weiterhin ein- oder zweifach mit dem Rest R³³ substituiert sein können und wobei der Rest R³³ eine der folgenden Gruppen darstellen kann: Wasserstoff, Hydroxy, Formyl, Carboxy, sowie deren Salze und Ester, Amino, Nitro, C₁-C₁₂-Alkyl, C₁-C₆-Alkyloxy, Carbonyl-C₁-C₆-alkyl, Phenyl, Aryl.

Beispiele für die genannten Verbindungen der allgemeinen Formel (XIV) sind:
**A) 1-Hydroxy-benzimidazole,** wie z.B.
   1-Hydroxybenzimidazol-2-carbonsäure
   1-Hydroxybenzimidazol
   2-Methyl-1-hydroxybenzimidazol
   2-phenyl-1-hydroxybenzimidazol
**B) 1-Hydroxyindole,** wie z. B.
   2-Phenyl-1-hydroxyindol.

Verbindungen der allgemeinen Formel (XV) sind: 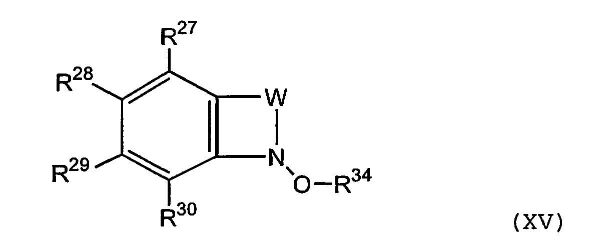 wobei W für eine der folgenden Gruppen steht:
[-N=N]-, [-N=CR²⁴-]ⱼ, [-CR ²⁴=N-]ⱼ, [-CR²⁵=CR²⁶-]ⱼ, 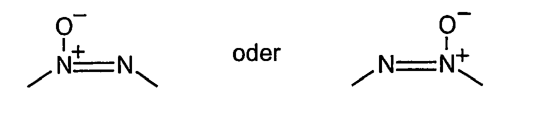 und j gleich 1 oder 2 ist.

Für die Reste R²⁷ bis R³⁰ und R²⁴ bis R²⁶ gilt das oben gesagte.

Rest R³⁴ kann sein: Wasserstoff, C₁-C₁₀-Alkyl, C₁-C₁₀-Alkylcarbonyl, sowie deren Salze und Ester, wobei die C₁-C₁₀-Alkyl- und C₁-C₁₀-Alkylcarbonyl-Reste unsubstituiert oder mit einem Rest R³⁵ ein- oder mehrfach substituiert sein können,
wobei R³⁵ eine der folgenden Gruppen darstellen kann:
Wasserstoff, Halogen, Hydroxy-, Formyl-, Carboxy- sowie Salze und Ester davon, Amino-, Nitro, C₁-C₁₂-Alkyl-, C₁-C₆-Alkyloxy-, Carbonyl-C₁-C₆-alkyl-, Phenyl-, Sulfono-, deren Ester und Salze, Sulfamoyl-, Carbamoyl-, Phospho-, Phosphono-, Phosphonooxy- und deren Salze und Ester, wobei die Amino-, Carbamoyl- und
Sulfamoyl-Gruppen des Restes R³⁵ weiterhin unsubstituiert oder ein- oder zweifach mit Hydroxy-, C₁-C₃-Alkyl, C₁-C₃-Alkoxy substituiert sein können.

Von den Substanzen der Formel (XV) sind insbesondere Derivate des 1-Hydroxybenzotriazols und des tautomeren Benzotriazol-1-oxides sowie deren Ester und Salze bevorzugt (Verbindungen der Formel (XVI)) :

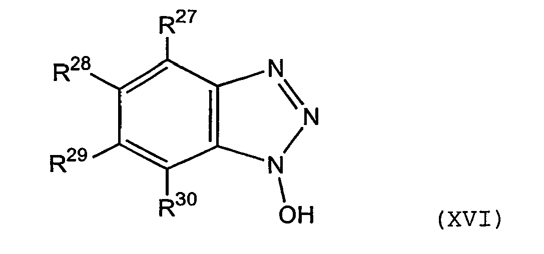

Die Reste R²⁷ bis R³⁰ können gleich oder verschieden sein und unabhängig voneinander eine der folgenden Gruppen darstellen: Wasserstoff, Halogen, Hydroxy, Formyl, Carboxy sowie Salze und Ester davon, Amino, Nitro, C₁-C₁₂-Alkyl, C₁-C₆-Alkyloxy, Carbonyl-C₁-C₆-alkyl, Phenyl, Sulfono sowie Ester und Salze davon, Sulfamoyl, Carbamoyl, Phospho, Phosphono, Phosphonooxy und deren Salze und Ester, wobei die Amino-, Carbamoyl- und Sulfamoyl-Gruppen der Reste R²⁷ bis R³⁰ weiterhin unsubstituiert oder ein- oder zweifach mit Hydroxy, C₁-C₃-Alkyl, C₁-C₃-Alkoxy substituiert sein können, und wobei die C₁-C₁₂-Alkyl-, C₁-C₆-Alkyloxy-, Carbonyl-C₁-C₆-alkyl-, Phenyl-, Aryl-Gruppen der Reste R²⁷ bis R³⁰ unsubstituiert oder weiterhin ein- oder mehrfach mit dem Rest R³⁶ substituiert sein können und wobei der Rest R³⁶ eine der folgenden Gruppen darstellen kann:
Wasserstoff, Halogen, Hydroxy, Formyl, Carboxy sowie deren Salze und Ester, Amino, Nitro, C₁-C₁₂-Alkyl, C₁-C₆-Alkyloxy, Carbonyl-C₁-C₆-alkyl, Phenyl, Aryl, Sulfono, Sulfeno, Sulfino sowie deren Ester und Salze, wobei die Carbamoyl-, Sulfamoyl- und Amino-Gruppen des Restes R³⁶ unsubstituiert oder weiterhin ein- oder zweifach mit dem Rest R³⁷ substituiert sein können und wobei der Rest R³⁷ eine der folgenden Gruppen darstellen kann:
Wasserstoff, Hydroxy, Formyl, Carboxy, sowie deren Salze und Ester, Amino, Nitro, C₁-C₁₂-Alkyl, C₁-C₆-Alkyloxy, Carbonyl-C₁-C₆-alkyl, Phenyl, Aryl.

Beispiele für die genannten Verbindungen der allgemeinen Formel (XVI) sind:
**A) 1H-Hydroxybenzotriazole,** wie z. B.
   1-Hydroxybenzotriazol
   1-Hydroxybenzotriazol, Natriumsalz.
   1-Hydroxybenzotriazol, Kaliumsalz
   1-Hydroxybenzotriazol, Lithiumsalz
   1-Hydroxybenzotriazol, Ammoniumsalz
   1-Hydroxybenzotriazol, Calciumsalz
   1-Hydroxybenzotriazol, Magnesiumsalz
   1-Hydroxybenzotriazol-6-sulfonsäure
   1-Hydroxybenzotriazol-6-sulfonsäure, Mononatriumsalz
   1-Hydroxybenzotriazol-6-carbonsäure
   1-Hydroxybenzotriazol-6-N-phenylcarboxamid
   5-Ethoxy-6-nitro-1-hydroxybenzotriazol
   4-Ethyl-7-methyl-6-nitro-1-hydroxybenzotriazol
   2,3-Bis-(4-ethoxy-phenyl)-4,6-dinitro-2,3-dihydro-1-hydroxybenzotriazol
   2,3-Bis-(2-brom-4-methyl-phenyl)-4,6-dinitro-2,3-dihydro-1-hydroxybenzotriazol
   2,3-Bis-(4-brom-phenyl)-4, 6-dinitro-2, 3-dihydro-1-hydroxybenzotriazol
   2,3-Bis-(4-carboxy-phenyl)-4,6-dinitro-2,3-dihydro-1-hydroxybenzotriazol
   4,6-Bis-(trifluormethyl)-1-hydroxybenzotriazol
   5-Brom-1-hydroxybenzotriazol
   6-Brom-1-hydroxybenzotriazol
   4-Brom-7-methyl-1-hydroxybenzotriazol
   5-Brom-7-methyl-6-nitro-1-hydroxybenzotriazol
   4-Brom-6-nitro-1-hydroxybenzotriazol
   6-Brom-4-nitro-1-hydroxybenzotriazol
   4-Chlor-1-hydroxybenzotriazol
   5-Chlor-1-hydroxybenzotriazol
   6-Chlor-1-hydroxybenzotriazol
   6-Chlor-5-isopropyl-1-hydroxybenzotriazol
   5-Chlor-6-methyl-1-hydroxybenzotriazol
   6-Chlor-5-methyl-1-hydroxybenzotriazol
   4-Chlor-7-methyl-6-nitro-1-hydroxybenzotriazol
   4-Chlor-5-methyl-1-hydroxybenzotriazol
   5-Chlor-4-methyl-1-hydroxybenzotriazol
   4-Chlor-6-nitro-1-hydroxybenzotriazol
   6-Chlor-4-nitro-1-hydroxybenzotriazol
   7-Chlor-1-hydroxybenzotriazol
   6-Diacetylamino-1-hydroxybenzotriazol
   2,3-Dibenzyl-4,6-dinitro-2,3-dihydro-1-hydroxybenzotriazol
   4,6-Dibrom-1-hydroxybenzotriazol
   4,6-Dichlor-1-hydroxybenzotriazol
   5,6-Dichlor-1-hydroxybenzotriazol
   4,5-Dichlor-1-hydroxybenzotriazol
   4,7-Dichlor-1-hydroxybenzotriazol
   5,7-Dichlor-6-nitro-1-hydroxybenzotriazol
   5,6-Dimethoxy-1-hydroxybenzotriazol
   2,3-Di-[2]naphthyl-4,6-dinitro-2,3-dihydro-1-hydroxybenzotriazol
   4,6-Dinitro-1-hydroxybenzotriazol
   4,6-Dinitro-2,3-diphenyl-2,3-dihydro-1-hydroxybenzotriazol
   4,6-Dinitro-2,3-di-p-tolyl-2,3-dihydro-1-hydroxybenzotriazol
   5-Hydrazino-7-methyl-4-nitro-1-hydroxybenzotriazol
   5,6-Dimethyl-1-hydroxybenzotriazol
   4-Methyl-1-hydroxybenzotriazol
   5-Methyl-1-hydroxybenzotriazol
   6-Methyl-1-hydroxybenzotriazol
   5-(1-Methylethyl)-1-hydroxybenzotriazol
   4-Methyl-6-nitro-1-hydroxybenzotriazol
   6-Methyl-4-nitro-1-hydroxybenzotriazol
   5-Methoxy-1-hydroxybenzotriazol
   6-Methoxy-1-hydroxybenzotriazol
   7-Methyl-6-nitro-1-hydroxybenzotriazol
   4-Nitro-1-hydroxybenzotriazol
   6-Nitro-1-hydroxybenzotriazol
   6-Nitro-4-phenyl-1-hydroxybenzotriazol
   5-Phenylmethyl-1-hydroxybenzotriazol
   4-Trifluormethyl-1-hydroxybenzotriazol
   5-Trifluormethyl-1-hydroxybenzotriazol
   6-Trifluormethyl-1-hydroxybenzotriazol
   4,5,6,7-Tetrachlor-1-hydroxybenzotriazol
   4,5,6,7-Tetrafluor-1-hydroxybenzotriazol
   6-Tetrafluorethyl-1-hydroxybenzotriazol
   4,5,6-Trichlor-1-hydroxybenzotriazol
   4,6,7-Trichlor-1-hydroxybenzotriazol
   6-Sulfamido-1-hydroxybenzotriazol
   6-N,N-Diethyl-sulfamido-1-hydroxybenzotriazol
   6-N-Methylsulfamido-1-hydroxybenzotriazol
   6-(1H-1,2,4-triazol-1-ylmethl)-1-hydroxybenzotriazol
   6-(5, 6, 7, 8-tetrahydroimidazol-[1,5-a]-pyridin-5-yl)-1-hydroxybenzotriazol
   6-(Phenyl-1 H-1,2,4-triazol-1-ylmethyl)-1-hydroxybenzotriazol
   6-[(5-Methyl-1H-imidazol-1-yl)-phenilmethyl]-1-hydroxybenzotriazol
   6-[(4-methyl-1H-imidazol-1-yl)-phenylmethyl]-1-hydroxybenzotriazol
   6-[(2-methyl-1H-imidazol-1-yl)-phenylmethyl]-1-hydroxybenzotriazol
   6-(1H-Imidazol-1-yl-phenylmethyl)-1-hydroxybenzotriazol
   5-(1H-Imidazol-1-yl phenylmethyl)-1-hydroxybenzotriazol
   6-[1-(1H-Imidazol-1-yl)-ethyl]-1-hydroxybenzotriazol mono-Hydrochlorid
**B) 3H-Benzotriazol-1-oxide,** wie z. B.
   3H-Benzotriazol-1-oxid
   6-Acetyl-3H-benzotriazol-1-oxid
   5-Ethoxy-6-nitro-3H-benzotriazol-1-oxid
   4-Ethyl-7-methyl-6-nitro-3H-benzotriazol-1-oxid
   6-Amino-3, 5-dimethyl-3H-benzotriazol-1-oxid
   6-Amino-3-methyl-3H-benzotriazol-1-oxid
   5-Brom-3H-benzotriazol-1-oxid
   6-Brom-3H-benzotriazol-1-oxid
   4-Brom-7-methyl-3H-benzotriazol-1-oxid
   5-Brom-4-chlor-6-nitro-3H-benzotriazol-1-oxid
   4-Brom-6-nitro-3H-benzotriazol-1-oxid
   6-Brom-4-nitro-3H-benzotriazol-1-oxid
   5-Chlor-3H-benzotriazol-1-oxid
   6-Chlor-3H-benzotriazol-1-oxid
   4-Chlor-6-nitro-3H-benzotriazol-1-oxid
   4,6-Dibrom-3H-benzotriazol-1-oxid
   4,6-Dibrom-3-methyl-3H-benzotriazol-1-oxid
   4,6-Dichlor-3H-benzotriazol-1-oxid
   4,7-Dichlor-3H-benzotriazol-1-oxid
   5,6-Dichlor-3H-benzotriazol-1-oxid
   4,6-Dichlor-3-methyl-3H-benzotriazol-1-oxid
   5,7-Dichlor-6-nitro-3H-benzotriazol-1-oxid
   3, 6-Dimethyl-6-nitro-3H-benzotriazol-1-oxid
   3,5-Dimethyl-6-nitro-3H-benzotriazol-1-oxid
   3-Methyl-3H-benzotriazol-1-oxid
   5-Methyl-3H-benzotriazol-1-oxid
   6-Methyl-3H-benzotriazol-1-oxid
   6-Methyl-4-nitro-3H-benzotriazol-1-oxid
   7-Methyl-6-nitro-3H-benzotriazol-1-oxid
   5-Chlor-6-nitro-3H-benzotriazol-1-oxid
**C) 2H- Benzotriazol-1-oxide,** wie z. B.
   2-(4-Acetoxy-phenyl)-2H-benzotriazol-1-oxid
   6-Acetylamino-2-phenyl-2H-benzotriazol-1-oxid
   2-(4-Ethyl-phenyl)-4,6-dinitro-2H-benzotriazol-1-oxid
   2-(3-Aminophenyl)-2H-benzotriazol-1-oxid
   2-(4-Aminophenyl)-2H-benzotriazol-1-oxid
   6-Amino-2-phenyl-2H-benzotriazol-l-oxid
   5-Brom-4-chlor-6-nitro-2-phenyl-2H-benzotriazol-1-oxid
   2-(4-Bromphenyl)-2H-benzotriazol-1-oxid
   5-Brom-2-phenyl-2H-benzotriazol-1-oxid
   6-Brom-2-phenyl-2H-benzotriazol-1-oxid
   2-(4-Bromphenyl)-4,6-dinitro-2H-benzotriazol-1-oxid
   2-(4-Bromphenyl)-6-nitro-2H-benzotriazol-1-oxid
   5-Chlor-2-(2-chlorphenyl)-2H-benzotriazol-1-oxid
   5-Chlor-2-(3-chlorphenyl)-2H-benzotriazol-1-oxid
   5-Chlor-2-(2-chlorphenyl)-2H-benzotriazol-1-oxid
   5-Chlor-2-(3-chlorphenyl)-2H-benzotriazol-1-oxid
   5-Chlor-2-(2,4-dibromphenyl)-2H-benzotriazol-1-oxid
   5-Chlor-2-(2,5-dimethylphenyl)-2H-benzotriazol-1-oxid
   5-Chlor-2-(4-nitrophenyl)-2H-benzotriazol-1-oxid
   5-Chlor-6-nitro-2-phenyl-2H-benzotriazol-1-oxid
   2-[4-(4-Chlor-3-nitro-phenylazo)-3-nitrophenyl]-4,6-dinitro-2H-benzotriazol-1-oxid
   2-(3-Chlor-4-nitro-phenyl)-4,6-dinitro-2H-benzotriazol-1-oxid
   2-(4-Chlor-3-nitrophenyl)-4,6-dinitro-2H-benzotriazol-1-oxid
   4-Chlor-6-nitro-2-p-tolyl-2H-benzotriazol-1-oxid
   5-Chlor-6-nitro-2-p-tolyl-2H-benzotriazol-1-oxid
   6-Chlor-4-nitro-2-p-tolyl-2H-benzotriazol-1-oxid
   2-(2-Chlorphenyl)-2H-benzotriazol-1-oxid
   2-(3-Chlorphenyl)-2H-benzotriazol-1-oxid
   2-(4-Chlorphenyl)-2H-benzotriazol-1-oxid
   5-Chlor-2-phenyl-2H-benzotriazol-1-oxid
   2-[4-(4-Chlorphenylazo)-3-nitrophenyl]-4,6-dinitro-2H-benzotriazol-1-oxid
   2-(2-Chlorphenyl)-4,6-dinitro-2H-benzotriazol-1-oxid
   2-(3-Chlorphenyl)-4,6-dinitro-2H-benzotriazol-1-oxid
   2-(4-Chlorphenyl)-4,6-dinitro-2H-benzotriazol-1-oxid
   2-{4-[N'-(3-Chlorphenyl)-hydrazino]-3-nitrophenyl}-4,6-dinitro-2H-benzotriazol-1-oxid
   2-{4-[N'-(4-Chlorphenyl)-hydrazino]-3-nitrophenyl}-4,6-dinitro-2H-benzotriazol-1-oxid
   2-(2-Chlorphenyl)-6-methyl-2H-benzotriazol-1-oxid
   2-(3-Chlorphenyl)-6-methyl-2H-benzotriazol-1-oxid
   2-(4-Chlorphenyl)-6-methyl-2H-benzotriazol-1-oxid
   2-(3-Chlorphenyl)-6-nitro-2H-benzotriazol-1-oxid
   2-(4-Chlorphenyl)-6-nitro-2H-benzotriazol-1-oxid
   2-(4-Chlorphenyl)-6-picrylazo-2H-benzotriazol-1-oxid
   5-Chlor-2-(2,4,5-trimethylphenyl)-2H-benzotriazol-1-oxid
   4,5-Dibrom-6-nitro-2-p-tolyl-2H-benzotriazol-1-oxid
   4,5- Dichlor-6-nitro-2-phenyl-2H-benzotriazol-1-oxid
   4,5- Dichlor-6-nitro-2-p-tolyl-2H-benzotriazol-1-oxid
   4,7 -Dichlor-6-nitro-2-p-tolyl-2H-benzotriazol-1-oxid
   4, 7-Dimethyl-6-nitro-2-phenyl-2H-benzotriazol-1-oxid
   2-(2,4-Dimethylphenyl)-4,6-dinitro-benzotriazol-1-oxid
   2-(2,5-Dimethylphenyl)-4,6-dinitro-2H-benzotriazol-1-oxid
   2-(2,4- Dimethylphenyl)-6-nitro-2H-benzotriazol-1-oxid
   2-(2,5- Dimethylphenyl)-6-nitro-2H-benzotriazol-1-oxid
   4,6-Dinitro-2-[3-nitro-4-(N-phenylhydrazino)-phenyl-)-2H-benzotriazol-1-oxid
   4,6-Dinitro-2-[4-nitro-4-(N'-phenylhydrazino)-phenyl-]-2H-benzotriazol-1-oxid
   4,6-Dinitro-2-phenyl-2H-benzotriazol-1-oxid
   2-(2,4-Dinitrophenyl)-4,6-dinitro-2H-benzotriazol-1-oxid
   2-(2,4-Dinitrophenyl)-6-nitro-2H-benzotriazol-1-oxid
   4,6-Dinitro-2-o-tolyl-2H-benzotriazol-1-oxid
   4,6-Dinitro-2-p-tolyl-2H-benzotriazol-1-oxid
   4,6-Dinitro-2-(2,4,5-trimethylphenyl)-2H-benzotriazol-1-oxid
   2-(4-Methoxyphenyl)-2H-benzotriazol-1-oxid
   2-(4-Methoxyphenyl)-6-methyl-2H-benzotriazol-1-oxid
   5-Methyl-6-nitro-2-m-tolyl-2H-benzotriazol-1-oxid
   5-Methyl-6-nitro-2-o-tolyl-2H-benzotriazol-1-oxid
   5-Methyl-6-nitro-2-p-tolyl-2H-benzotriazol-1-oxid
   6-Methyl-4-nitro-2-p-tolyl-2H-benzotriazol-1-oxid
   6-Methyl-2-phenyl-2H-benzotriazol-1-oxid
   4-Methyl-2-m-tolyl-2H-benzotriazol-1-oxid
   4- Methyl-2-o-tolyl-2H-benzotriazol-1-oxid
   4-Methyl-2-p-tolyl-2H-benzotriazol-1-oxid
   6-Methyl-2-m-tolyl-2H-benzotriazol-1-oxid
   6-Methyl-2-o-tolyl-2H-benzotriazol-1-oxid
   6-Methyl-2-p-tolyl-2H-benzotriazol-1-oxid
   2-[1]Naphthyl-4-6-dinitro-2H-benzotriazol-1-oxid
   2-[2]Naphthyl-4-6-dinitro-2H-benzotriazol-1-oxid
   2-[1]Naphthyl-6-nitro-2H-benzotriazol-1-oxid
   2-[2]Naphthyl-6-nitro-2H-benzotriazol-1-oxid
   2-(3-Nitrophenyl)-2H-benzotriazol-1-oxid
   6-Nitro-2-phenyl-2H-benzotriazol-1-oxid
   4-Nitro-2-p-tolyl-2H-benzotriazol-1-oxid
   6-Nitro-2-o-tolyl-2H-benzotriazol-1-oxid
   6-Nitro-2-p-tolyl-2H-benzotriazol-1-oxid
   6-Nitro-2-(2,4,5-trimethylphenyl)-2H-benzotriazol-1-oxid
   2-Phenyl-2H-benzotriazol-1-oxid
   2-o-Tolyl-2H-benzotriazol-1-oxid
   2-p-Tolyl-2H-benzotriazol-1-oxid.

Vorzugsweise eingesetzt werden ferner Mediatoren aus der Gruppe cyclischer N-Hydroxy-Verbindungen mit mindestens einem ggf. substituierten fünf- oder sechsgliedrigen Ring, enthaltend die Struktureinheit der Formel (XVII) 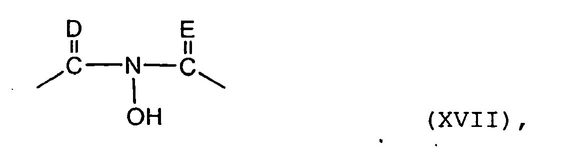 sowie deren Salze, Ether oder Ester, wobei
D und E, gleich oder verschieden sind, und O, S, oder NR³⁸ bedeuten, mit R³⁸ gleich Wasserstoff, Hydroxy, Formyl, Carbamoyl-, Sulfonorest, Ester oder Salz des Sulfonorestes, Sulfamoyl-, Nitro-, Amino-, Phenyl, Aryl-C₁-C₅-Alkyl-, C₁-C₁₂-Alkyl-, C₁-C₅-Alkyloxy-, C₁-C₁₀-Carbonyl-, Carbonyl-C₁-C₆-alkyl-Phospho-, Phosphono-, Phosphonooxyrest, Ester oder Salz des Phosphonooxyrests bedeutet, wobei Carbamoyl-, Sulfamoyl-, Amino- und Phenylreste unsubstituiert oder ein- oder mehrfach mit einem Rest R³⁹ substituiert sein können und die Aryl-C₁-C₅-Alkyl-, C₁-C₁₂-Alkyl-, C₁-C₅-Alkyloxy-, C₁-C₁₀-Carbonyl-,
Carbonyl-C₁-C₆-alkylreste gesättigt oder ungesättigt, verzweigt oder unverzweigt sein können und mit einem Rest R³⁹ ein- oder mehrfach substituiert sein können, wobei R³⁹ gleich oder verschieden ist und Hydroxy-, Formyl-, Carboxyrest, Ester oder Salz des Carboxyrests, Carbamoyl-, Sulfonorest, Ester oder Salz des Sulfonorests, Sulfamoyl-, Nitro-, Amino-, Phenyl-, C₁-C₅-Alkyl-, C₁-C₅-Alkyloxyrest bedeutet.

Bevorzugte Mediatoren aus der Gruppe cyclischer N-Hydroxy-Verbindungen sind die Verbindungen der allgemeinen Formeln (XVIII), (XIX), (XX) und (XXI), wobei Verbindungen der allgemeinen Formeln (XVIII), (XIX), (XX) und (XXI), bei denen D und E die Bedeutung von O oder S besitzen, besonders bevorzugt sind: 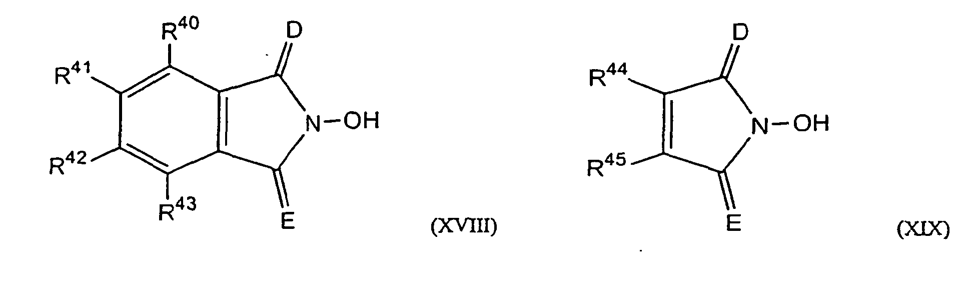 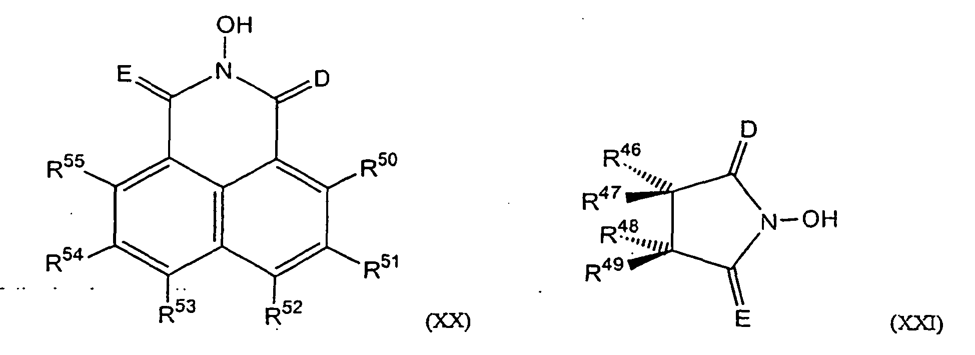 wobei D und E die bereits genannte Bedeutung haben, die Reste R⁴⁰ bis R⁵⁵ gleich oder verschieden sind und Halogenrest, Carboxyrest, Salz oder Ester eines Carboxyrests bedeuten, oder die für R³⁸ genannten Bedeutungen haben, wobei R⁴⁶ und R⁴⁷ bzw. R⁴⁸ und R⁴⁹ nicht gleichzeitig Hydroxy- oder Aminorest bedeuten dürfen und ggf. je zwei der Substituenten R⁴⁰-R⁴³, R⁴⁴-R⁴⁵, R⁴⁶-R⁴⁹, R⁵⁰-R⁵⁵ zu einem Ring -F- verknüpft sein können, wobei -F- eine der folgenden Bedeutungen hat:
[-CH=CH-]ₖ mit k=1 bis 3,

-CH=CH-CH=N- oder

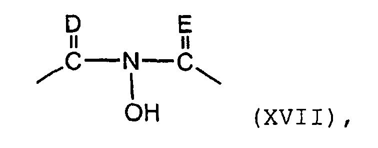

und wobei ggf. die Reste R⁴⁶-R⁴⁹ auch untereinander durch ein oder zwei Brückenelemente -G-, mit -G- gleich oder verschieden und mit der Bedeutung von -O-, -S-, -CH₂- und -CR⁵⁶=CR⁵⁷-, wobei R⁵⁶ und R⁵⁷gleich oder verschieden sind und die Bedeutung von R⁴⁰ haben, verbunden sein können.

Beispiele für Verbindungen der allgemeinen Formeln (XVIII), (XIX), (XX) und (XXI) sind N-Hydroxy-Phthalimid sowie ggf. substituierte N-Hydroxy-Phthalimid-Derivate, N-Hydroxymaleimid sowie ggf. substituierte N-Hydroxymaleimid-Derivate, N-Hydroxy-Naphthalsäureimid sowie ggf. substituierte N-Hydroxy-Naphthalsäureimid-Derivate, N-Hydroxysuccinimid und ggf. substituierte N-Hydroxysuccinimid-Derivate, vorzugsweise solche, bei denen die Reste R⁴⁶-R⁴⁹ polycyclisch verbunden sind.

Als Mediator geeignete Verbindungen der Formel (XVIII) sind beispielsweise:
N-Hydroxyphthalimid,
3-Amino-N-hydroxyphthalimid,
4-Amino-N-hydroxyphthalimid,
N-Hydroxy-benzol-1,2,4-tricarbonsäureimid,
N,N'-Dihydroxy-pyromellitsäurediimid,
N,N'-Dihydroxy-benzophenon-3,3',4,4'-tetracarbonsäurediimid.

Als Mediator geeignete Verbindungen der Formel (XIX) sind beispielsweise:
N-Hydroxymaleimid,
Pyridin-2,3-dicarbonsäure-N-hydroxyimid.

Als Mediator geeignete Verbindung der Formel (XX) ist beispielsweise:
N-Hydroxynaphthalsaüreimid-Natrium-salz.

Als Mediator geeignete Verbindung mit einem sechsgliedrigen Ring enthaltend die Struktureinheit der Formel (XVII) ist beispielsweise:
N-Hydroxyglutarimid.

Als Mediator geeignete Verbindungen der Formel (XXI) sind beispielsweise:
N-Hydroxysuccinimid,
N-Hydroxyweinsäureimid,
N-Hydroxy-5-norbornen-2,3-dicarbonsäureimid,
exo-N-Hydroxy-7-oxabicyclo[2.2.1]-hept-5-en-2,3-dicarboximid,
N-Hydroxy-cis-cyclohexan-1,2-dicarboximid,
N-Hydroxy-cis-4-cyclohexen-1 ,2-dicarbonsäureimid.

Alle beispielhaft genannten Verbindungen eignen sich selbstverständlich auch in Form ihrer Salze oder Ester als Mediatoren.

Weiterhin können die Mediatoren vorzugsweise aus der Gruppe der N-Aryl-N-Hydroxyamide ausgewählt sein. Von diesen werden als Mediatoren bevorzugt.die Verbindungen der allgemeinen Formeln (XXII), (XXIII) oder (XXIV) 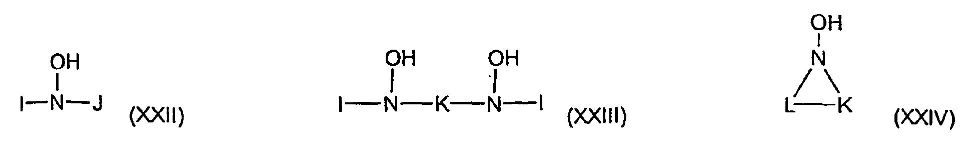 sowie deren Salze, Ether oder Ester eingesetzt, wobei
I einbindiger, homo- oder heteroaromatischer, ein- oder zweikerniger Rest, und
J in amidischer Form vorliegender einbindiger Säurerest von Säuren ausgewählt aus der Gruppe Carbonsäure mit bis zu 20 C-Atomen, Kohlensäure, Halbester der Kohlensäure oder der Carbaminsäure, Sulfonsäure, Phosphonsäure, Phosphorsäure, Monoester oder Diester der Phosphorsäure bedeutet, und
K in amidischer Form vorliegender zweibindiger Säurerest von Säuren ausgewählt aus der Gruppe Mono- und Dicarbonsäuren mit bis zu 20 C-Atomen, Kohlensäure, Sulfonsäure, Phosphonsäure, Phosphorsäure, Monoester der Phosphorsäure bedeutet, und
L zweibindiger, homo- oder heteroaromatischer, ein- oder zweikerniger Rest bedeutet, wobei diese Aromaten durch einen oder mehrere, gleiche oder verschiedene Reste R⁵⁸, mit R⁵⁸ ausgewählt aus der Gruppe Halogen-, Hydroxy-, Formyl-, Cyano-, Carbamoyl-, Carboxyrest, Ester oder Salz des Carboxyrests, Sulfonorest, Ester oder Salz des Sulfonorests, Sulfamoyl-, Nitro-, Nitroso-, Amino-, Phenyl-, Aryl-C₁-C₅-alkyl-, C₁-C₁₂-Alkyl-, C₁-C₅-Alkoxy-, C₁-C₁₀-Carbonyl-, Carbonyl-C₁-C₆-alkyl-, Phospho-, Phosphono-, Phosphonooxyrest, Ester oder Salz des Phosphonooxyrests, substituiert sein können, wobei die Carbamoyl-, Sulfamoyl-, Amino- und Phenylreste unsubstituiert oder ein- oder mehrfach mit einem Rest R⁵⁹, mit R⁵⁹ gleich oder verschieden und der Bedeutung von Hydroxy-, Formyl-, Cyano-, Carboxyrest, Ester oder Salz des Carboxyrests, Carbamoyl-, Sulfono-, Sulfamoyl-, Nitro-, Nitroso-, Amino-, Phenyl-, C₁-C₅-Alkyl-, C₁-C₅-Alkoxy-, C₁-C₅-Alkyl-carbonylrest, substituiert sein können, und die Aryl-C₁-C₅-alkyl-, C₁-C₁₂-Alkyl-, C₁-C₅-Alkoxy-, C₁-C₁₀-Carbonyl-, Carbonyl-C₁-C₆-alkyl-Reste gesättigt oder ungesättigt, verzweigt oder unverzweigt sein können und mit einem Rest R⁵⁹ ein- oder mehrfach substituiert sein können,
wobei je zwei Reste R⁵⁸ oder R⁵⁹ paarweise über eine Brücke [-CR⁶⁰R⁶¹-]ᵢ, mit i gleich 0,1,2,3 oder 4, verknüpft sein können und
R⁶⁰ und R⁶¹ gleich oder verschieden sind und Carboxyrest, Ester oder Salz des Carboxyrests, Phenyl-, C₁-C₅-Alkyl-, C₁-C₅-Alkoxy-, C₁-C₅-Alkyl-carbonylrest bedeuten, und eine oder mehrere nicht benachbarte Gruppen -CR⁶⁰R⁶¹- durch Sauerstoff, Schwefel oder einen ggf. mit C₁ bis C₅ Alkylrest substituierten Iminorest ersetzt sein können, bzw. zwei benachbarte Gruppen -CR⁶⁰R⁶¹-durch eine Gruppe -CR⁶⁰=CR⁶¹- ersetzt sein können.

Als Mediatoren aus der Gruppe der N-Aryl-N-Hydroxyamide sind besonders bevorzugt die Verbindungen der allgemeinen Formeln (XXV), (XXVI), (XXVII), (XXVIII) oder (XXIX): 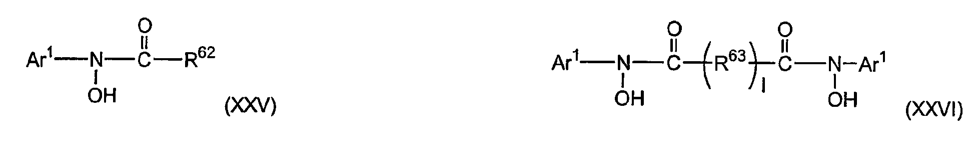 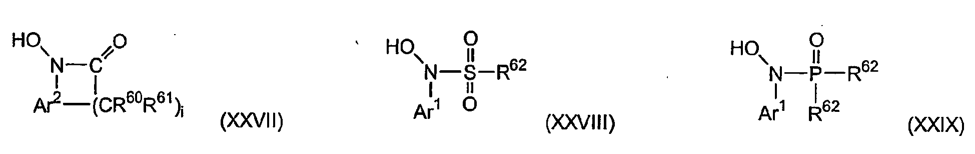 sowie deren Salze, Ether oder Ester, wobei

Ar¹ einbindiger, homo- oder heteroaromatischer, einkerniger Arylrest, und

Ar² zweibindiger, homo- oder heteroaromatischer, einkerniger Arylrest bedeutet,
die durch einen oder mehrere, gleiche oder verschiedene Reste R⁶⁹, mit R⁶⁴ ausgewählt aus der Gruppe Hydroxy-, Cyano-, Carboxyrest, Ester oder Salz des Carboxyrests, Sulfonorest, Ester oder Salz des Sulfonorests, Nitro-, Nitroso-, Amino-, C₁-C₁₂-Alkyl-, C₁-C₅-Alkoxy-, C₁-C₁₀-Carbonyl-, Carbonyl-C₁-C₆-alkylrest, substituiert sein können, wobei Aminoreste unsubstituiert oder ein- oder mehrfach mit einem Rest R⁶⁵, mit R⁶⁵ gleich oder verschieden und ausgewählt aus der Gruppe Hydroxy-, Carboxyrest, Ester oder Salz des Carboxyrests, Sulfono-, Nitro-, Amino-, C₁-C₅-Alkyl-, C₁-C₅-Alkoxy-, C₁-C₅-Alkylcarbonylrest, substituiert sein können, und die C₁-C₁₂-Alkyl-, C₁-C₅-Alkoxy-, C₁-C₁₀-Carbonyl-, Carbonyl-C₁-C₆-alkylReste gesättigt oder ungesättigt, verzweigt oder unverzweigt und mit einem Rest R⁶⁵ ein- oder mehrfach substituiert sein können,
je zwei Reste R⁶⁴ paarweise über eine Brücke [-CR⁶⁰R⁶¹-]ᵢ verknüpft sein können, wobei R⁶⁰, R⁶¹ und i die bereits genannten Bedeutungen haben, und eine oder mehrere nicht benachbarte Gruppen -CR⁶⁰R⁶¹- durch Sauerstoff, Schwefel oder einen ggf. mit einem C₁ bis Cₛ Alkylrest substituierten Iminorest ersetzt sein können, und zwei benachbarte Gruppen - CR⁶⁰R⁶¹- durch eine Gruppe -CR⁶⁰=CR⁶¹- ersetzt sein können,

R⁶² gleiche oder verschiedene einbindige Reste ausgewählt aus der Gruppe Wasserstoff-, Phenyl-, Aryl-C₁-C₅-Alkyl-, C₁-C₁₂-Alkyl-, C₁-C₅-Alkoxy-, C₁-C₁₀-Carbonylrest bedeutet, wobei Phenylreste unsubstituiert oder ein- oder mehrfach mit einem Rest R⁶⁶, mit R⁶⁶ gleich oder verschieden und ausgewählt aus der Gruppe Hydroxy-, Formyl-, Cyano-, Carboxyrest, Ester oder Salz des Carboxyrests, Carbamoyl-, Sulfono-, Sulfamoyl-, Nitro-, Nitroso-, Amino-, Phenyl-, C₁-C₅-Alkyl-, C₁-C₅-Alkoxyrest, substituiert sein können, und die Aryl-C₁-C₅-alkyl-, C₁-C₁₂-Alkyl-, C₁-C₅-Alkoxy-, C₁-C₁₀-Carbonyl-Reste gesättigt oder ungesättigt, verzweigt oder unverzweigt und mit einem Rest R⁶⁶ ein- oder mehrfach substituiert sein können,

R⁶³ zweibindige Reste ausgewählt aus der Gruppe ortho-, meta-, para-Phenylen-, Aryl-C₁-C₅-alkylen-, C₁-C₁₂-Alkylen-, C₁-C₅-Alkylendioxyrest bedeutet, wobei Phenylenreste unsubstituiert oder ein- oder mehrfach mit einem Rest R⁶⁶ substituiert sein können, und die Aryl-C₁-C₅-alkylen-, C₁-C₁₂-Alkylen-, C₁-C₅-Alkylendioxy-Reste gesättigt oder ungesättigt, verzweigt oder unverzweigt sein können und mit einem Rest R⁶⁶ ein- oder mehrfach substituiert sein können, wobei

1 0 oder 1 bedeutet, und i die bereits oben genannte Bedeutung hat.

Vorzugsweise bedeutet Ar¹ Phenylrest und Ar² ortho-Phenylenrest, wobei Ar¹ durch bis zu fünf und Ar² durch bis zu vier gleiche oder verschiedene Reste ausgewählt aus der Gruppe C₁-C₃-Alkyl-, C₁-C₃-Alkylcarbonyl-, Carboxyrest, Ester oder Salz des Carboxyrests, Sulfonorest, Ester oder Salz des Sulfonorests, Hydroxy-, Cyano-, Nitro-, Nitroso- und Aminorest substituiert sein können, wobei Aminoreste mit zwei verschiedenen Resten ausgewählt aus der Gruppe Hydroxy- und C₁-C₃-Alkylcarbonyl substituiert sein können.

Vorzugsweise bedeutet R⁶² einbindiger Rest ausgewählt aus der Gruppe Wasserstoff-, Phenyl-, C₁-C₁₂-Alkyl-, C₁-C₅-Alkoxyrest, wobei die C₁-C₁₂-Alkylreste und C₁-C₅-Alkoxyreste gesättigt oder ungesättigt, verzweigt oder unverzweigt sein können.

Vorzugsweise bedeutet R⁶³ zweibindiger Rest ausgewählt aus der Gruppe ortho- oder para-Phenylen-, C₁-C₁₂-Alkylen-, C₁-C₅-Alkylendioxyrest, wobei die Aryl-C₁-C₅-alkyl-, C₁-C₁₂-Alkyl-, C₁-C₅-Alkoxy-Reste gesättigt oder ungesättigt, verzweigt oder unverzweigt sein können und mit einem Rest R⁶⁶ ein- oder mehrfach substituiert sein können.

Vorzugsweise bedeutet R⁶⁶ Carboxyrest, Ester oder Salz des Carboxyrests, Carbamoyl-, Phenyl-, C₁-C₃-Alkoxyrest.

Beispiele für als Mediatoren einsetzbare Verbindungen der allgemeinen Formeln (XXV), (XXVI), (XXVII), (XXVIII) oder (XXIX) sind:
N-Hydroxyacetanilid,
N-Hydroxypivaloylanilid,
N-Hydroxyacrylanilid,
N-Hydroxybenzoylanilid,
N-Hydroxymethylsulfonylanilid,
N-Hydroxy-N-phenyl-methylcarbamat,
N-Hydroxy-3-oxo-butyrylanilid,
N-Hydroxy-4-cyanoacetanilid,
N-Hydroxy-4-methoxyacetanilid,
N-Hydroxyphenacetin,
N-Hydroxy-2,3-dimethylacetanilid,
N-Hydroxy-2-methylacetanilid,
N-Hydroxy-4-methylacetanilid,
1-Hydroxy-3,4-dihydrochinolin-(1H)-2-on,
N,N'-Dihydroxy-N,N'-diacetyl-1,3-phenylendiamin,
N,N'-Dihydroxy-bernsteinsäuredianilid,
N,N'-Dihydroxy-maleinsäuredianilid,
N,N'-Dihydroxy-oxalsäuredianilid,
N,N'-Dihydroxyphosphorsäuredianilid,
N-Acetoxyacetanilid,
N-Hydroxymethyloxalylanilid,
N-Hydroxymaleinsäuremonoanilid,
wobei folgende Mediatoren bevorzugt sind:
N-Hydroxyacetanilid,
N-Hydroxyformanilid,
N-Hydroxy-N-phenyl-methylcarbamat,
N-Hydroxy-2-methylacetanilid,
N-Hydroxy-4-methylacetanilid,
1-Hydroxy-3,4-dihydrochinolin-(1H)-2-on sowie
N- Acetoxyacetanilid.

Desweiteren vorzugsweise eingesetzte Mediatoren sind Verbindungen aus der Gruppe der N-Alkyl-N-Hydroxy-Amide, wobei Verbindungen der allgemeinen Formeln (XXX) oder (XXXI) sowie deren Salze, Ether oder Ester, bevorzugt Verwendung finden: 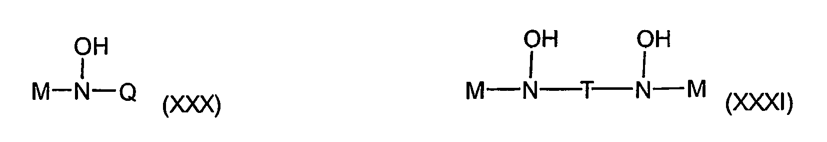 wobei
M gleich oder verschieden ist und einbindiger linearer oder verzweigter oder cyclischer oder polycyclischer gesättigter oder ungesättigter Alkylrest mit 1-24 C-Atomen bedeutet, wobei dieser Alkylrest durch einen oder mehrere Reste R⁶⁷, mit R⁶⁷ gleich oder verschieden und ausgewählt aus der Gruppe Hydroxy-, Mercapto-, Cyano-, Formyl-, Carboxyrest, Ester oder Salz des Carboxyrests, Carbamoyl-, Sulfamoyl-, Sulfonorest, Ester oder Salz des Sulfonorests, Nitro-, Nitroso-, Amino-, Hydroxylamino-, Phenyl-, Benzoyl-, C₁-C₅-Alkyl-, C₁-C₅-Alkoxy-, C₁-C₁₀-Carbonyl-, Phospho-, Phosphono-, Phosphonooxyrest, Ester oder Salz des Phosphonooxyrests, wobei die Carbamoyl-, Sulfamoyl-, Amino-, Hydroxylamino-, Mercapto- und Phenylreste unsubstituiert oder ein- oder mehrfach mit einem Rest R⁶⁷ substituiert sein können, und wobei die C₁-C₅-Alkoxy-, C₁-C₁₀-Carbonyl-Reste gesättigt oder ungesättigt, verzweigt oder unverzweigt und mit einem Rest R⁶⁷ ein- oder mehrfach substituiert sein können, substituiert sein kann und nicht α-ständige Methylengruppen durch Sauerstoff, Schwefel oder einen ggf. einfach substituierten Iminorest ersetzt sein können,
Q einen in amidischer Form vorliegenden einbindigen Säurerest von Säuren ausgewählt aus der Gruppe aliphatischer oder ein- oder zweikerniger aromatischer oder ein- oder zweikerniger heteroaromatischer Carbonsäuren mit bis zu 20 C-Atomen, Kohlensäure, Halbester der Kohlensäure oder der Carbaminsäure, Sulfonsäure, Phosphonsäure, Phosphorsäure, Monoester oder Diester der Phosphorsäure bedeutet,
T einen in amidischer Form vorliegenden zweibindigen Säurerest von Säuren ausgewählt aus der Gruppe aliphatischer ein- oder zweikerniger aromatischer oder ein- oder zweikerniger heteroaromatischer Dicarbonsäuren mit bis zu 20 C-Atomen, Kohlensäure, Sulfonsäure, Phosphonsäure, Phosphorsäure, Monoester der Phosphorsäure bedeutet,
wobei die Alkylreste der in amidischer Form vorliegenden aliphatischen Säuren Q und T linear oder verzweigt und/oder cyclisch und/oder polycyclisch gesättigt oder ungesättigt sein können, 0-24 Kohlenstoffatome beinhalten und nicht substituiert oder ein- oder mehrfach mit dem Rest R⁶⁸, mit R⁶⁸ gleich oder verschieden und ausgewählt aus der Gruppe Hydroxy-, Mercapto-, Cyano-, Formyl-, Carbamoyl-, Carboxyrest, Ester oder Salz des Carboxyrests, Sulfamoyl-, Sulfonorest, Ester oder Salz des Sulfonorests, Nitro-, Nitroso-, Amino-, Phenyl-, Aryl-C₁-C₅-Alkyl-, C₁-C₁₂-Alkyl- C₁-C₅-Alkoxy-, C₁-C₁₀-Carbonyl-, Phospho-, Phosphono-, Phosphonooxyrest, Ester oder Salz des Phosphonooxyrests, wobei die Carbamoyl-, Sulfamoyl-, Amino-Mercapto- und Phenylreste unsubstituiert oder ein- oder mehrfach mit einem Rest R⁶⁷ substituiert sein können und wobei die Aryl-C₁-C₅-Alkyl-, C₁-C₁₂-Alkyl-, C₁-C₅-Alkoxy- und C₁-C₁₀-Carbonyl-Reste gesättigt oder ungesättigt, verzweigt oder unverzweigt und mit einem Rest R⁶⁷ ein- oder mehrfach substituiert sein können, substituiert sein können,
und wobei die Aryl- und Heteroarylreste der in amidischer Form vorliegenden aromatischen oder heteroaromatischen Säuren Q und T durch einen oder mehrere Reste R⁶⁸, die gleich oder verschieden sind, substituiert sein können.

Besonders bevorzugte Mediatoren aus der Gruppe der N-Alkyl-N-Hydroxy-Amide sind Verbindungen der allgemeinen Formeln (XXXII), (XXXIII), (XXXIV) oder (XXXV) 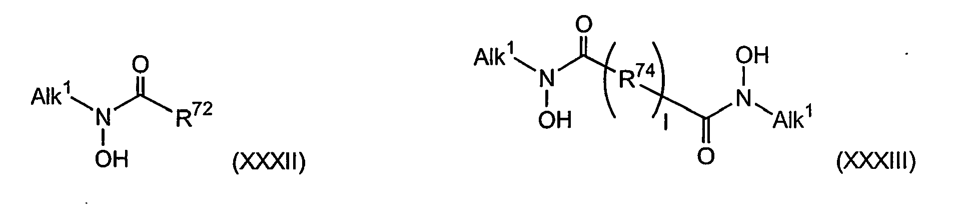 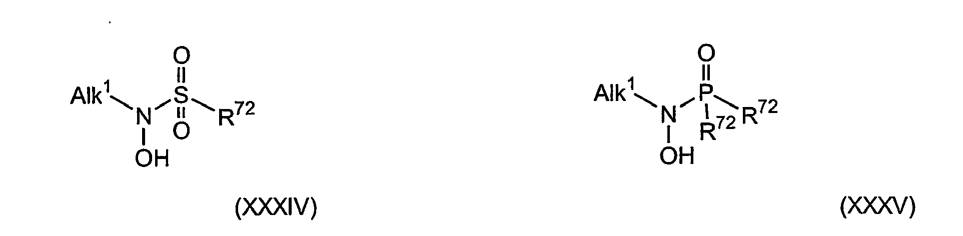 sowie deren Salze, Ether oder Ester, wobei

Alk¹ gleich oder verschieden ist und einbindiger linearer oder verzweigter oder cyclischer oder polycyclischer gesättigter oder ungesättigter Alkylrest mit 1-10 C-Atomen bedeutet, wobei dieser Alkylrest durch einen oder mehrere Reste R⁷⁰, die gleich oder verschieden und ausgewählt sind aus der Gruppe Hydroxy-, Formyl-, Carbamoyl-, Carboxy-, Ester oder Salz des Carboxyrests, Sulfonorest, Ester oder Salz des Sulfonorests, Sulfamoyl-, Nitro-, Nitroso-, Amino-, Hydroxylamino-, Phenyl-, C₁-C₅-Alkoxy- und C₁-C₁₀-Carbonyl-Reste, substituiert sein kann, wobei die Carbamoyl, Sulfamoyl-, Amino-, Hydroxylamino- und Phenylreste unsubstituiert oder ein- oder mehrfach mit einem Rest R⁷¹, mit R⁷¹ gleich oder verschieden und ausgewählt aus der Gruppe Hydroxy-, Formyl-, Cyano-, Carboxyrest. Ester oder Salz des Carboxyrests, Carbamoyl, Sulfono-, Sulfamoyl-, Nitro-, Amino-, Phenyl-, Benzoyl-, C₁-C₅-Alkyl-, C₁-C₅-Alkoxy-, C₁-C₅-Alkylcarbonylrest, substituiert sein können und wobei die C₁-C₅-Alkoxy- und C₁-C₁₀-Carbonyl-Reste gesättigt oder ungesättigt, verzweigt oder unverzweigt und mit einem Rest R⁷¹ ein- oder mehrfach substituiert sein können, und nicht α-ständige Methylengruppen durch Sauerstoff, Schwefel oder einen ggf. einfach substituierten Iminorest ersetzt sein können,

R⁷² gleiche oder verschiedene einbindige Reste ausgewählt aus der Gruppe Wasserstoff-, Phenyl-, Pyridyl-, Furyl- , Pyrrolyl-, Thienyl-, Aryl-C₁-C₅-Alkyl-, C₁-C₁₂-Alkyl-, C₁-C₁₀-Alkoxy-, C₁-C₁₀-Carbonylrest bedeutet, wobei die Phenyl-, Pyridyl-, Furyl-, Pyrrolyl- und Thienylreste unsubstituiert oder ein- oder mehrfach mit einem Rest R²⁷ substituiert sein können und die Aryl-C₁-C₅-Alkyl-, C₁-C₁₂-Alkyl-, C₁-C₁₀-Alkoxy-, C₁-C₁₀-CarbonylReste gesättigt oder ungesättigt, verzweigt oder unverzweigt und mit einem Rest R⁷³, mit R⁷³ gleich oder verschieden und ausgewählt aus der Gruppe Hydroxy-, Formyl-, Carboxyrest, Ester oder Salz des Carboxyrests, Carbamoyl-, Sulfono-, Sulfamoyl-, Nitro-, Amino-, Phenyl-, C₁-C₅-Alkyl- und C₁-C₅-Alkoxy-Rest, ein- oder mehrfach substituiert sein können,

R⁷⁴ zweibindige Reste ausgewählt aus der Gruppe Phenylen-, Pyridylen-, Thienylen-, Furylen-, Pyrrolylen-, Aryl-C₁-C₅-Alkylen-, C₁-C₁₂-Alkylen-, C₁-C₅-Alkylendioxy-Rest bedeutet, wobei die Phenylen-, Pyridylen-, Thienylen-, Furylen-, Pyrrolylen- unsubstituiert oder ein- oder mehrfach mit einem Rest R⁷³ substituiert sein können und die Aryl-C₁-C₅-Alkylen-, C₁-C₁₂-Alkylen-, C₁-C₅-Alkylendioxy-Reste gesättigt oder ungesättigt, verzweigt oder unverzweigt sein können und mit einem Rest R⁷³ ein- oder mehrfach substituiert sein können, und

1 0 oder 1 bedeutet.

Als Mediatoren aus der Gruppe der N-Alkyl-N-Hydroxy-Amide sind insbesondere solche Verbindungen der allgemeinen Formeln. (XXXII) bis (XXXV) bevorzugt, bei denen

Alk¹ gleich oder verschieden ist und einbindiger linearer oder verzweigter oder cyclischer gesättigter oder ungesättigter Alkylrest mit 1-10 C-Atomen bedeutet, wobei dieser Alkylrest durch einen oder mehrere Reste R⁷⁰, die gleich oder verschieden sind und ausgewählt sind aus der Gruppe Hydroxy-, Carbamoyl-, Carboxy-, Ester oder Salz des Carboxyrests, Sulfonorest, Ester oder Salz des Sulfonorests, Sulfamoyl-, Amino-, Phenyl-, C₁-C₅-Alkoxy-, C₁-C₅-Carbonyl-Rest, substituiert sein kann, wobei die Carbamoyl, Sulfamoyl-, Amino- und Phenylreste unsubstituiert oder ein- oder mehrfach mit einem Rest R⁷¹, mit R⁷¹ gleich oder verschieden und ausgewählt aus der Gruppe Hydroxy-,
Carboxyrest, Ester oder Salz des Carboxyrests, Carbamoyl-, Sulfono-, Sulfamoyl-, Nitro-, Amino-, Phenyl-, Benzoyl-, C₁-C₅-Alkyl-, C₁-C₅-Alkoxy- und C₁-C₅-Alkylcarbonylrest, substituiert sein können und die C₁-C₅-Alkoxy- und C₁-C₅-Carbonyl-Rest gesättigt oder ungesättigt, verzweigt oder unverzweigt und mit einem Rest R⁷¹ ein- oder mehrfach substituiert sein können,

R⁷² gleiche oder verschiedene einbindige Reste ausgewählt aus der Gruppe Wasserstoff-, Phenyl-, Furyl-, Aryl- C₁-C₅-Alkyl-, C₁-C₁₂-Alkyl-, C₁-C₁₀-Alkoxy-, C₁-C₁₀-Carbonylrest bedeutet, wobei die Phenyl- und Furylreste unsubstituiert oder ein- oder mehrfach mit einem Rest R⁷³, mit R⁷³ gleich oder verschieden und ausgewählt aus der Gruppe Carboxyrest, Ester oder Salz des Carboxyrests, Carbamoyl-, Phenyl-, C₁-C₅-Alkyl- und C₁-C₅-Alkoxyrest, substituiert sein können und die Aryl-C₁-C₅-Alkyl-, C₁-C₁₂-Alkyl-, C₁-C₁₀-Alkoxy- und C₁-C₁₀-Carbonyl-Reste gesättigt oder ungesättigt, verzweigt oder unverzweigt sein können und mit einem Rest R⁷³ ein- oder mehrfach substituiert sein können,

R⁷⁴ zweibindiger Rest ausgewählt aus der Gruppe Phenylen-, Furylen-, Aryl-C₁-C₅-alkylen-, C₁-C₁₂-Alkylen-, C₁-C₅-Alkylendioxy-Rest bedeutet, wobei die Phenylen- und Furanylenreste unsubstituiert oder ein- oder mehrfach mit einem Rest R⁷³ substituiert sein können und die Aryl-C₁-C₅-Alkylen-, C₁-C₁₂-Alkylen-, C₁-C₅-Alkylendioxy-Reste gesättigt oder ungesättigt, verzweigt oder unverzweigt sein können und mit einem Rest R⁷³ ein- oder mehrfach substituiert sein können, und

1 0 oder 1 bedeutet.

Beispiele für die als Mediatoren einsetzbaren Verbindungen der allgemeinen Formeln (XXXII) bis (XXXV) sind:
N-Hydroxy-N-methyl-benzoesäureamid,
N-Hydroxy-N-methyl-benzolsulfonsäureamid,
N-Hydroxy-N-methyl-p-toluolsulfonsäureamid,
N-Hydroxy-N-methyl-furan-2-carbonsäureamid,
N-Hydroxy-N-methyl-thiophen-2-carbonsäureamid,
N,N-Dihydroxy-N,N-dimethyl-phthalsäurediamid,
N,N'-Dihydroxy-N,N'-dimethyl-isophthalsäurediamid,
N,N'-Dihydroxy-N,N'-dimethyl-terephthalsäurediamid,
N,N'-Dihydroxy-N,N'-dimethyl-benzol-1,3-disulfonsäurediamid,
N,N'-Dihydroxy-N,N'-dimethyl-furan-3,4-dicarbonsäurediamid,
N-Hydroxy-N-tert.-butyl-benzoesäureamid,
N-Hydroxy-N-tert.-butyl-benzolsulfonsäureamid,
N-Hydroxy-N-tert.-butyl-p-toluolsulfonsäureamid,
N-Hydroxy-N-tert.-butyl-furan-2-carbonsäureamid,
N-Hydroxy-N-tert.-butyl-thiophen-2-carbonsäureamid,
N,N'-Dihydroxy-N,N'-di-tert.-butyl-phthalsäurediamid,
N,N'-Dihydroxy-N,N'-di-tert.-butyl-isophthalsäurediamid,
N,N'-Dihydroxy-N,N'-di-tert.-butyl-terephthalsäurediamid,
N,N'-Dihydroxy-N,N'-di-tert.-butyl-benzol-1,3-disulfonsäurediamid,
N,N'-Dihydroxy-N,N'-di-tert.-butyl-furan-3,4-dicarbonsäurediamid,
N-Hydroxy-N-cyclohexyl-benzoesäureamid,
N-Hydroxy-N-cyclohexyl-benzolsulfonsäureamid,
N-Hydroxy-N-cyclohexyl-p-toluolsulfonsäure-amid,
N-Hydroxy-N-cyclohexyl-furan-2-carbonsäureamid,
N-Hydroxy-N-cyclohexyl-thiophen-2-carbonsäureamid,
N,N'-Dihydroxy-N,N'-dicyclohexyl-phthalsäurediamid,
N,N'-Dihydroxy-N,N'-dicyclohexyl-isophthalsäurediamid,
N,N'-Dihydroxy-N,N-dicyclohexyl-terephthalsäurediamid,
N,N'-Dihydroxy-N,N'-dicyclohexyl-benzol-1,3-disulfonsäurediamid,
N,N'-Dihydroxy-N,N'-dicyclohexyl-furan-3,4-dicarbonsäurediamid,
N-Hydroxy-N-isopropyl-benzoesäureamid,
N-Hydroxy-N-isopropylbenzol-sulfonsäureamid,
N-Hydroxy-N-isopropyl-p-toluolsulfonsäureamid,
N-Hydroxy-N-isopropyl-furan-2-carbonsäureamid,
N-Hydroxy-N-isopropyl-thiophen-2-carbon-säureamid,
N,N'-Dihydroxy-N,N'-diisopropyl-phthalsäurediamid,
N,N'-Di-hydroxy-N,N'-diisopropyl-isophthalsäurediamid,
N,N'-Dihydroxy-N,N'-diisopropyl-terephthal-säurediamid,
N,N'-Dihydroxy-N,N'-diisopropyl-benzol-1,3-disulfonsäurediamid,
N,N'-Dihydroxy-N,N'-diisopropyl-furan-3,4-dicarbonsäurediamid,
N-Hydroxy-N-methylacetamid,
N-Hydroxy-N-tert.-butyl-acetamid,
N-Hydroxy-N-isopropyl-acetamid,
N-Hydroxy-N-cyclohexyl-acetamid,
N-Hydroxy-N-methyl-pivalinsäureamid
N-Hydroxy-N-isopropyl-pivalinsäureamid,
N-Hydroxy-N-methylacrylamid,
N-Hydroxy-N-tert.-butyl-acrylamid,
N-Hydroxy-N-isopropyl-acrylamid,
N-Hydroxy-N-cyclohexyl-acrylamid,
N-Hydroxy-N-methyl-methansulfonamid,
N-Hydroxy-N-isopropyl-methansulfonamid,
N-Hydroxy-N-isopropylmethylcarbamat,
N-Hydroxy-N-methyl-3-oxo-buttersäureamid,
N,N'-Dihydroxy-N,N'-dibenzoyl-ethylendiamin,
N,N'-Dihydroxy-N,N'-dimethylbernsteinsäurediamid,
N,N'-Dihydroxy-N,N'-di-tert.-butyl-maleinsäurediamid,
N-Hydroxy-N-tert.-butyl-maleinsäuremonoamid,
N,N'-Dihydroxy-N,N'-di-tert.-butyl-oxalsäurediamid,
N,N'-Dihydroxy-N,N'-di-tert.-butyl-phosphorsäurediamid.

Bevorzugt eingesetzte Mediatoren aus der Gruppe der N-Alkyl-N-Hydroxy-Amide sind:
N-Hydroxy-N-methyl-benzoesäureamid,
N-Hydroxy-N-methyl-benzolsulfonsäureamid,
N-Hydroxy-N-methyl-p-toluolsulfon-säureamid,
N-Hydroxy-N-methyl-furan-2-carbonsäureamid,
N,N*'*-Dihydroxy-N,N*'*-dimethyl-phthalsäurediamid,
N,N*'*-Dihydroxy-N,N*'*-dimethyl-terephthalsäurediamid,
N,N*'*-Dihydroxy-N,N*'*-dimethyl-benzol-1,3-disulfonsäurediamid,
N-Hydroxy-N-tert.-butyl-benzoesäureamid,
N-Hydroxy-N-tert.-butyl-benzolsulfonsäureamid,
N-Hydroxy-N-tert.-butyl-p-toluolsulfonsäureamid,
N-Hydroxy-N-tert.-butyl-furan-2-carbonsäureamid,
N,N'-Dihydroxy-N,N'-di-tert.-butyl-terephthalsäurediamid,
N-Hydroxy-N-isopropyl-benzoesäureamid,
N-Hydroxy-N-isopropyl-p-toluolsulfon-säureamid,
N-Hydroxy-N-isopropyl-furan-2-carbonsäureamid,
N,N'-Dihydroxy-N,N'-diisopropyl-terephthal-säurediamid,
N,N'-Dihydroxy-N,N'-diisopropyl-benzol-1,3-disulfonsäurediamid,
N-Hydroxy-N-methyl-acetamid,
N-Hydroxy-N-tert.-butyl-acetamid,
N-Hydroxy-N-isopropyl-acetamid,
N-Hydroxy-N-cyclohexyl-acetamid,
N-Hydroxy-N-methyl-pivalinsäureamid,
N-Hydroxy-N-tert.-butyl-acrylamid,
N-Hydroxy-N-isopropyl-acrylamid,
N-Hydroxy-N-methyl-3-oxo-buttersäureamid,
N,N'-Dihydroxy-N,N'-dibenzoyl-ethylendiamin,
N,N'-Dihydroxy-N,N'-di-tert.-butyl-maleinsäurediamid,
N-Hydroxy-N-tert.-butyl-maleinsäuremonoamid,
N,N'-Dihydroxy-N,N'-di-tert.-butyl-oxalsäurediamid.

Der Mediator kann ferner vorzugsweise ausgewählt sein aus der Gruppe der Oxime der allgemeinen Formeln (XXXVI) und (XXXVII) 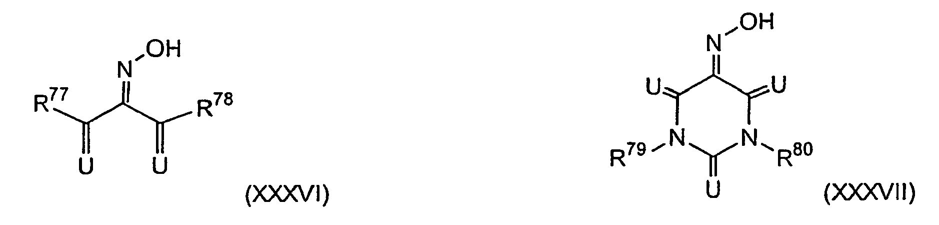 sowie deren Salze, Ether, oder Ester, wobei
U gleich oder verschieden ist und O, S, oder NR⁷⁵, mit R⁷⁵ gleich Wasserstoff-, Hydroxy-, Formyl-, Carbamoyl-, sulfonorest, Ester oder Salz des Sulfonorests, Sulfamoyl-, Nitro-, Amino-, Phenyl-, Aryl-C₁-C₅-alkyl-, C₁-C₁₂-Alkyl-, C₁-C₅-Alkoxy-, C₁-C₁₀-Carbonyl-, Carbonyl-C₁-C₆-alkyl-, Phospho-, Phosphono-, Phosphonooxyrest, Ester oder Salz des Phosphonooxyrests, bedeutet, wobei die Carbamoyl-, Sulfamoyl-, Amino- und Phenylreste unsubstituiert oder ein- oder mehrfach mit einem Rest R⁷⁶, mit R⁷⁶ gleich oder verschieden und ausgewählt aus der Gruppe Hydroxy-, Formyl-, Carboxyrest, Ester oder Salz des Carboxyrests, Carbamoyl-, Sulfonorest, Ester oder Salz des Sulfonorests, Sulfamoyl-, Nitro-, Amino-, Phenyl-, C₁-C₅-Alkyl-, C₁-C₅-Alkoxyrest, substituiert sein können und die Aryl-C₁-C₅-alkyl-, C₁-C₁₂-Alkyl-, C₁-C₅-Alkoxy-, C₁-C₁₀-Carbonyl-, Carbonyl-C₁-C₆-alkyl-Reste gesättigt oder ungesättigt, verzweigt oder unverzweigt sein können und mit einem Rest R⁷⁶ ein- oder mehrfach substituiert sein können,
die Reste R⁷⁷und R⁷⁸ gleich oder verschieden sind und Halogen-, Carboxyrest und Ester oder Salz des Carboxyrests bedeuten, oder die für R⁷⁵ genannten Bedeutungen haben, oder zu einem Ring [-CR⁸¹R⁸²-] ₘ, mit m gleich 2, 3 oder 4 sowie R⁸¹ und R⁸² gleich oder verschieden und ausgewählt aus der Gruppe Halogen-,
Carboxyrest, Ester oder Salz des Carboxyrests oder mit den für R⁷⁵ genannten Bedeutungen, verknüpft sind, und
R⁷⁹ und R⁸⁰ die für R⁷⁵ genannten Bedeutungen haben.

Als Mediatoren aus der Gruppe der Oxime sind besonders bevorzugt Verbindungen der allgemeinen Formel (XXXVI), bei denen U die Bedeutung von O oder S besitzt und die übrigen Reste die vorstehend genannten Bedeutungen haben. Ein Beispiel für eine solche Verbindung ist 2-Hydroxyiminomalonsäuredimethylester.

Als Mediatoren aus der Gruppe der Oxime sind weiterhin besonders bevorzugt Isonitrosoderivate von cyclischen Ureiden der allgemeinen Formel (XXXVII). Beispiele für solche Verbindungen sind 1-Methylviolursäure, 1,3-Dimethylviolursäure, Thioviolursäure, Alloxan-4,5-dioxim.

Als Mediator aus der Gruppe der Oxime insbesondere bevorzugt ist Alloxan-5-oxim Hydrat (Violursäure) und/oder dessen Ester, Ether.oder Salze.

Der Mediator kann ferner vorzugsweise ausgewählt sein aus der Gruppe vicinal nitrososubstituierter aromatischer Alkohole der allgemeinen Formeln (XXXVIII) oder (XXXIX) 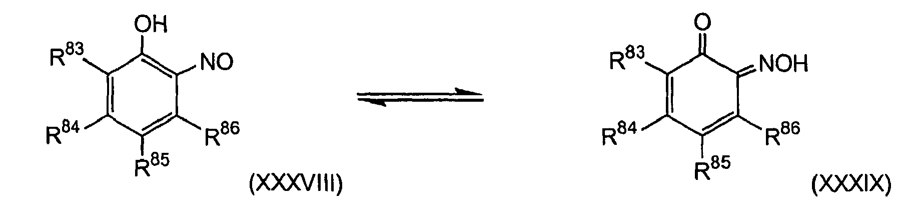 sowie deren Salze, Ether, oder Ester, wobei

R⁸³ bis R⁸⁶ gleich oder verschieden sind und Wasserstoff-, Halogen-, Hydroxy-, Formyl-, Carbamoyl-, Carboxyrest, Ester oder Salz des Carboxyrests, Sulfonorest, Ester oder Salz des Sulfonorests, Sulfamoyl-, Nitro-, Nitroso-, Cyano-, Amino-, Phenyl-, Aryl-C₁-C₅-alkyl-, C₁-C₁₀-Alkyl-, C₁-C₅-Alkoxy-, C₁-C₁₀-Carbonyl-, Carbonyl-C₁-C₆-alkyl-, Phospho-, Phosphono-, Phosphonooxyrest, Ester oder Salz des Phosphonooxyrests bedeuten, wobei die Carbamoyl-, Sulfamoyl-, Amino- und Phenylreste unsubstituiert oder ein- oder mehrfach mit einem Rest R⁸⁷, mit R⁸⁷ gleich oder verschieden und ausgewählt aus der Gruppe Hydroxy-, Formyl-, Carboxyrest, Ester oder Salz des Carboxylrests, Carbamoyl-, Sulfono-, Sulfamoyl-, Nitro-, Nitroso-, Amino-, Phenyl-, C₁-C₅-Alkyl-, C₁-C₅-Alkoxyrest, substituiert sein können und die Aryl-C₁-C₅-alkyl-, C₁-C₁₀-Alkyl-, C₁-C₅-Alkoxy-, C₁-C₁₀-Carbonyl-, Carbonyl-C₁-C₆-alkyl-Reste gesättigt oder ungesättigt, verzweigt oder unverzweigt sein können und mit einem Rest R⁶⁷ ein- oder mehrfach substituiert sein können,
oder die Reste R⁸³ bis R⁸⁶ paarweise zu einem Ring [-CR⁸⁸R⁸⁹-]ᵢ, mit i in der oben genannten Bedeutung, verknüpft sind, oder zu einem Ring [-CR⁹⁰=CR⁹¹-]ₖ, mit k in der oben genannten Bedeutung, verknüpft sind, wobei R⁸⁸, R⁸⁹, R⁹⁰ und R⁹¹ gleich oder verschieden sind und die für R⁸³ bis R⁸⁶ genannten Bedeutungen haben.

Unter aromatischen Alkoholen sind vorzugsweise Phenole oder höherkondensierte Derivate des Phenols zu verstehen. Als Mediatoren aus der Gruppe der vicinal nitrososubstituierter aromatischer Alkohole bevorzugt sind Verbindungen der allgemeinen Formel (XXXVIII) oder (XXXIX), deren Synthese sich auf die Nitrosierung substituierter Phenole zurückführen läßt. Beispiele für solche Verbindungen sind:
2-Nitrosophenol,
3-Methyl-6-nitrosophenol,
2-Methyl-6-nitrosophenol,
4-Methyl-6-nitrosophenol,
3-Ethyl-6-nitrosophenol,
2-Ethyl-6-nitrosophenol,
4-Ethyl-6-nitrosophenol,
4-Isopropyl-6-nitrosophenol,
4-tert.-Butyl-6-nitrosophenol,
2-Phenyl-6-nitrosophenol,
2-Benzyl-6-nitrosophenol,
4-Benzyl-6-nitrosophenol,
2-Hydroxy-3-nitrosobenzylalkohol,
2-Hydroxy-3-nitrosobenzoesäure,
4-Hydroxy-3-nitrosobenzoesäure,
2-Methoxy-6-nitrosophenol,
3,4-Dimethyl-6-nitrosophenol,
2,4-Dimethyl-6-nitrosophenol,
3,5-Dimethyl-6-nitrosophenol,
2,5-Dimethyl-6-nitrosophenol,
2-Nitrosoresorcin,
4-Nitrosoresorcin,
2-Nitrosoorcin,
2-Nitrosophloroglucin,
4-Nitrosopyrogallol,
4-Nitroso-3-hydroxyanilin und
4-Nitro-2-nitrosophenol.

Als Mediatoren aus der Gruppe der vicinal nitrososubstituierter aromatischer Alkohole sind weiterhin bevorzugt o-Nitrosoderivate höher kondensierter aromatischer Alkohole. Beispiele für solche Verbindungen sind
2-Nitroso-1-naphthol,
1-Methyl-3-nitroso-2-naphthol und
9-Hydroxy-10-nitroso-phenanthren.

Der Mediator kann ferner vorzugsweise ausgewählt sein aus der Gruppe der Hydroxypyridin-, Aminopyridin-, Hydroxychinolin-, Aminochinolin-, Hydroxyisochinolin-, Aminoisochinolin-Derivate mit zu den Hydroxy- oder Aminogruppen ortho- oder paraständigen Nitroso- oder Mercaptosubstituenten, Tautomere der genannten Verbindungen sowie deren Salze, Ether und Ester. Bevorzugte Mediatoren aus der geannnten Gruppe sind Verbindungen der allgemeinen Formel (XL), (XLI) oder (XLII) 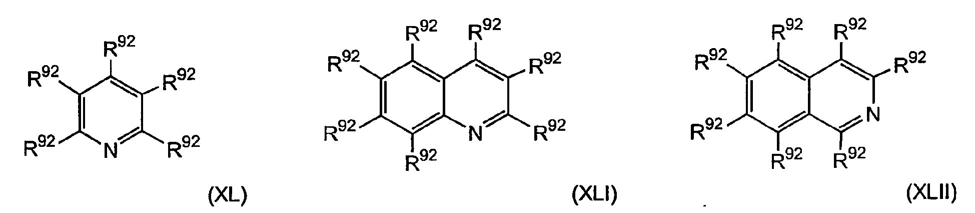 sowie Tautomere, Salze, Ether oder Ester der genannten Verbindungen, wobei in den Formeln (XL), (XLI) oder (XLII) zwei zueinander ortho- oder para- ständige Reste R⁹² Hydroxy- und Nitrosorest oder Hydroxy- und Mercaptorest oder Nitroso- und Aminorest bedeuten,
die übrigen Reste R⁹² gleich oder verschieden und ausgewählt sind aus der Gruppe Wasserstoff-, Halogen-, Hydroxy-, Mercapto-, Formyl-, Cyano-, Carbamoyl-, Carboxyrest, Ester und Salz des Carboxyrests, Sulfonorest, Ester und Salz des Sulfonorests, Sulfamoyl-, Nitro-, Nitroso-, Amino-, Phenyl-, Aryl-C₁-C₅-alkyl-, C₁-C₁₂-Alkyl-, C₁-C₅-Alkoxy-, C₁-C₁₀-Carbonyl-, Carbonyl-C₁-C₆-alkyl-, Phospho-, Phosphono-, Phosphonooxyrest, Ester und Salz des Phosphonooxyrests, wobei die Carbamoyl-, Sulfamoyl-, Amino-, Mercapto- und Phenylreste unsubstituiert oder ein- oder mehrfach mit einem Rest R⁹³, mit R⁹³ gleich oder verschieden und ausgewählt aus der Gruppe Hydroxy-, Formyl-, Cyano-, Carboxyrest, Ester oder Salz des Carboxyrests, Carbamoyl-, Sulfono-, Sulfamoyl-, Nitro-, Nitroso-, Amino-, Phenyl-, C₁-C₅-Alkyl-, C₁-C₅-Alkoxyrest oder C₁-C₅-Alkylcarbonylrest, substituiert sein können und die Aryl-C₁-C₅-alkyl-, C₁-C₁₂-Alkyl-, C₁-C₅-Alkoxy-, C₁-C₁₀-Carbonyl-, Carbonyl-C₁-C₆-alkylreste gesättigt oder ungesättigt, verzweigt oder unverzweigt sein können und mit einem Rest R⁷³ ein- oder mehrfach substituiert sein können,
und je zwei Reste R⁹², oder zwei Reste R⁹³, oder R⁹² und R⁹³ paarweise über eine Brücke [-CR⁹⁹R⁹⁵-]ᵢ, mit i in der oben genannten Bedeutung, verknüpft sein können, eine oder mehrere nicht benachbarte Gruppen -CR⁹⁴R⁹⁵- durch Sauerstoff, Schwefel oder einen ggf. mit einem C₁-C₅-Alkyl-substituierten Iminorest ersetzt sein können, und zwei benachbarte Gruppen -CR⁹⁴R⁹⁵-durch eine Gruppe [-CR⁹⁴=CR⁹⁵-] ersetzt sein können, wobei R⁹⁴ und R⁹⁵ gleich oder verschieden sind und Wasserstoff, Carboxyrest, Ester oder Salz des Carboxyrests, Phenyl-, C₁-C₅-Alkyl-, C₁-C₅-Alkoxyrest oder C₁-C₅-Alkylcarbonylrest bedeuten.

Als Mediatoren besonders bevorzugt sind Verbindungen der allgemeinen Formel (XL) oder (XLI) sowie deren Tautomere, Salze, Ether oder Ester, wobei in den Formeln (XL) und (XLI) besonders bevorzugt zwei zueinander ortho-ständige Reste R⁹² Hydroxy- und Nitrosorest oder Hydroxy- und Mercaptorest oder Nitrosorest- und Aminorest bedeuten und die übrigen Reste R⁹² gleich oder verschieden sind und ausgewählt sind aus der Gruppe Wasserstoff-, Hydroxy-, Mercapto-, Formyl-, Carbamoyl-, Carboxyrest, Ester und Salz des Carboxyrests, Sulfonorest, Ester und Salz des Sulfonorests, Sulfamoyl-, Nitro-, Nitroso-, Amino-, Phenyl-, Aryl-C₁-C₅-alkyl-, C₁-C₅-Alkyl-, C₁-C₅-Alkoxy-, C₁-C₅- Carbonyl-, Carbonyl-C₁-C₆-alkyl-, Phospho-, Phosphono-, Phosphono-oxyrest, Ester und Salz des Phosphonooxyrests, wobei die Carbamoyl-, Sulfamoyl-, Amino-, Mercapto- und Phenylreste unsubstituiert oder ein- oder mehrfach mit einem Rest R⁹³ substituiert sein können und die Aryl-C₁-C₅-alkyl-, C₁-C₅-Alkyl-, C₁-C₅-Alkoxy-, C₁-C₅-Carbonyl-, Carbonyl-C₁-C₆-alkyl-Reste gesättigt oder ungesättigt, verzweigt oder unverzweigt sein können und mit einem Rest R⁹³ ein- oder mehrfach substituiert sein können, wobei R⁹³ die bereits genannten Bedeutungen hat und je zwei Reste R⁹³ paarweise über eine Brücke [-CR⁹⁴R⁹⁵-]ᵢ, mit i in der oben genannten Bedeutung, verknüpft sein können und R⁹⁴ und R⁹⁵ die bereits genannten Bedeutungen haben und eine oder mehrere nicht benachbarte Gruppen -CR⁹⁴R⁹⁵- durch Sauerstoff oder einen ggf. mit C₁-C₅-Alkyl- substituierten Iminorest ersetzt sein können.

Beispiele für als Mediator verwendbare Verbindungen der allgemeinen Formel (XL), (XLI) oder (XLII) sind
2,6-Dihydroxy-3-nitrosopyridin,
2,3-Dihydroxy-4-nitrosopyridin,
2,6-Dihydroxy-3-nitrosopyridin-4-carbonsäure,
2,4-Dihydroxy-3-nitrosopyridin,
3-Hydroxy-2-mercaptopyridin,
2-Hydroxy-3-mercaptopyridin,
2,6-Diamino-3-nitrosopyridin,
2,6-Diamino-3-nitroso-pyridin-4-carbonsäure,
2-Hydroxy-3-nitrosopyridin,
3-Hydroxy-2-nitrosopyridin,
2-Mercapto-3-nitrosopyridin,
3-Mercapto-2-nitrosopyridin,
2-Amino-3-nitrosopyridin,
3-Amino-2-nitrosopyridin,
2,4-Dihydroxy-3-nitrosochinolin,
8-Hydroxy-5-nitrosochinolin,
2,3-Dihydroxy-4-nitrosochinolin,
3-Hydroxy-4-nitrosoisochinolin,
4-Hydroxy-3-nitrosoisochinolin,
8-Hydroxy-5-nitrosoisochinolin
sowie Tautomere dieser Verbinungen.

Als Mediatoren der allgemeinen Formel (XL), (XLI) oder (XLII) sind bevorzugt
2,6-Dihydroxy-3-nitrosopyridin,
2,6-Diamino-3-nitrosopyridin,
2,6-Dihydroxy-3-nitrosopyridin-4-carbonsäure,
2,4-Dihydroxy-3-nitrosopyridin,
2-Hydroxy-3-mercaptopyridin,
2-Mercapto-3-pyridinol,
2,4-Dihydroxy-3-nitrosochinolin,
8-Hydroxy-5-nitrosochinolin,
2,3-Dihydroxy-4-nitrosochinolin
sowie Tautomere dieser Verbindungen.

Ganz besonders bevorzugte Mediatoren sind 2,2,6,6-Tetramethyl-piperidin-1-oxyl (TEMPO), 4-Hydroxy-2,2,6,6-tetramethyl-piperidin-1-oxyl, 4-Amino-2,2,6,6-tetramethyl-piperidin-1-oxyl, 4-Acetoxy-2,2,6,6-tetramethyl-piperidin-1-oxyl, 4-Benzoyloxy-2,2,6,6-tetramethyl-piperidin-1-oxyl,
PIPO (polymer immobilised piperidinyloxyl),
N-Hydroxyphthalimid,
1-Hydroxy-1H-benzotriazol,
Violursäure,
N-Hydroxyacetanilid
sowie deren oben angeführte Derivate.

Am meisten bevorzugt sind
2,2,6,6-Tetramethyl-piperidin-1-oxyl (TEMPO),
4-Hydroxy-2,2,6,6-tetramethyl-piperidin-1-oxyl,
4-Amino-2,2,6,6-tetramethyl-piperidin-1-oxyl,
4-Acetoxy-2,2,6,6-tetramethyl-piperidin-1-oxyl,
4-Benzoyloxy-2,2,6,6-tetramethyl-piperidin-1-oxyl,
PIPO (polymer immobilised piperidinyloxyl),
3-Amino-N-hydroxyphthalimid,
4-Amino-N-hydroxyphthalimid,
N-Hydroxyphthalimid,
3-Hydroxy-N-hydroxyphthalimid,
3-Methoxy-N-hydroxyphthalimid,
3,4-Dimethoxy-N-hydroxyphthalimid,
4,5-Dimethoxy-N-hydroxyphthalimid,
3,6-Dihydroxy-N-hydroxyphthalimid, 3,6-Dimethoxy-N-hydroxyphthalimid,
3-Methyl-N-hydroxyphthalimid,
4-Methyl-N-hydroxyphthalimid,
3,4-Dimethyl-N-hydroxyphthalimid,
3,5-Dimethyl-N-hydroxyphthalimid,
3,6-Dimethyl-N-hydroxyphthalimid,
3-Isopropyl-6-methyl-N-hydroxyphthalimid,
3-Nitro-N-hydroxyphthalimid,
4-Nitro-N-hydroxyphthalimid,
1-Hydroxy-1H-benzotriazol,
Violursäure,
N-Hydroxyacetanilid,
3-Nitrosochinolin-2,4-diol,
2,4-Dihydroxy-3-nitrosopyridin,
2,6-Dihydroxy-3-nitrosopyridin,
2,4-Dinitroso-1,3-dihydroxybenzol,
2-Nitroso-1-naphthol-4-sulfonsäure und
1-Nitroso-,2-naphthol-3,6-disulfonsäure.

Bei dem erfindungsgemäßen Verfahren wird der Mediator vorzugsweise in Mengen von 0,01 bis 100 Mol-%, bevorzugt 0,1 bis 20 Mol-%, insbesondere bevorzugt 0,1 bis 5 Mol-%, bezogen auf die molare Menge der in den eingesetzten Organosiliciumverbindungen enthaltenen Carbinolgruppen, verwendet.

Das erfindungsgemäße Verfahren kann mit einem oder mehreren der beschriebenen Mediatoren, bevorzugt mit einem oder zwei Mediatoren, besonders bevorzugt mit einem Mediator durchgeführt werden. Der Mediator kann-in einer organischen oder wässrigen Phase gelöst oder in geträgerter Form als eigenständige Phase eingesetzt werden.

Nach dem erfindungsgemäßen Verfahren wird aus dem Mediator die entsprechende, aktive Oxoammonium-Spezies in situ durch das Oxidationsmittel erzeugt und nicht isoliert. In einer besonderen Ausführungsform kann der Mediator aber auch in einer separaten, vorgelagerten Oxidationsreaktion in die aktive Oxoammonium-Spezies überführt, isoliert und equimolar, bezogen auf die in den eingesetzten Organosiliciumverbindungen enthaltenen Carbinolgruppen, eingesetzt werden.

Als Oxidationsmittel werden vorzugsweise Luft, Sauerstoff, Wasserstoffperoxid, organische Peroxide, Perborate oder Persulfate, organische oder anorganische Persäuren, Salze und Derivate der Persäuren, Chlor, Brom, Iod, unterhalogenige Säuren sowie deren Salze, z. B. in Form von Bleichlauge, halogenige Säuren sowie deren Salze, Halogensäuren sowie deren Salze, Fe(CN)₆³⁻ , N-Chlorverbindungen eingesetzt. Oxidationsmittel können beispielsweise aber auch Metalloxide oder Anoden von Elektrolysezellen sein. Des weiteren kann das verwendete Oxidationsmittel auch in situ, z. B. elektrochemisch, durch Hydrolyse, wie beispielsweise durch Hydrolyse von N-Chlorverbindungen, oder durch Redoxreaktionen, wie beispielsweise bei Hypochlorit- oder Hypobromitlösungen durch Disproportionierung von Chlor bzw. Brom in alkalischer Lösung, oder wie beispielsweise bei der Redoxreaktion zwischen Hypochlorit und Bromid, die zur Bildung von Hypobromit führt, erzeugt werden.

Bei salzartigen Oxidationsmitteln sind als Gegenionen Natrium, Kalium, Calcium, Ammonium oder Tetraalkylammonium bevorzugt.

Die Oxidationsmittel können einzeln oder im Gemisch, gegebenenfalls jeweils in Kombination mit Enzymen, eingesetzt werden.

Im Sinne der Erfindung umfasst der Begriff Enzym auch enzymatisch aktive Proteine oder Peptide oder prosthetische Gruppen von Enzymen. Als Enzym können im erfindungsgemäßen Mehrkomponentensystem vorzugsweise Oxidoreduktasen der Klassen 1.1.1 bis 1.97 gemäß Internationaler Enzym-Nomenklatur, Committee of the International Union of Biochemistry and Molecular Biology (Enzyme Nomenclature, Academic Press, Inc., 1992, S. 24-154) eingesetzt werden.

Vorzugsweise werden Enzyme der im folgenden genannten Klassen eingesetzt:
Enzyme der Klasse 1.1, die alle Dehydrogenasen, die auf primäre, sekundäre Alkohole und Semiacetale wirken, umfassen und die als Akzeptoren NAD⁺ oder NADP⁺ (Subklasse 1.1.1), Cytochrome (1.1.2), Sauerstoff (O₂) (1.1.3), Disulfide (1.1.4), Chinone (1.1.5) oder die andere Akzeptoren haben (1.1.99).

Aus dieser Klasse sind besonders bevorzugt die Enzyme der Klasse 1.1.5 mit Chinonen als Akzeptoren und die Enzyme der Klasse 1.1.3 mit Sauerstoff als Akzeptor.

Insbesondere bevorzugt in dieser Klasse ist Cellobiose: quinone-1-oxidoreduktase (1.1.5.1).

Weiterhin bevorzugt sind Enzyme der Klasse 1.2. Diese Enzymklasse umfaßt solche Enzyme, die Aldehyde zu den korrespondierenden Säuren oder Oxo-Gruppen oxidieren. Die Akzeptoren können NAD⁺ , NADP⁺ (1.2.1), Cytochrome (1.2.2), Sauerstoff (1.2.3), Sulfide (1.2.4), Eisen-Schwefel-Proteine (1.2.5) oder andere Akzeptoren (1.2.99) sein.

Besonders bevorzugt sind hier die Enzyme der Gruppe (1.2.3) mit Sauerstoff als Akzeptor.

Weiterhin bevorzugt sind Enzyme der Klasse 1.3. In dieser Klasse sind Enzyme zusammengefaßt, die auf CH-CH-Gruppen des Donors wirken. Die entsprechenden Akzeptoren sind NAD⁺, NADP⁺ (1.3.1), Cytochrome (1.3.2), Sauerstoff (1.3.3), Chinone oder verwandte Verbindungen (1.3.5), Eisen-Schwefel-Proteine (1.3.7) oder andere Akzeptoren (1.3.99).

Besonders bevorzugt ist die Bilirubinoxidase (1.3.3.5). Ebenfalls besonders bevorzugt sind hier die Enzyme der Klasse (1.3.3) mit Sauerstoff als Akzeptor und (1.3.5) mit Chinonen etc. als Akzeptor.

Weiterhin bevorzugt sind Enzyme der Klasse 1.4, die auf CH-NH₂-Gruppen des Donors wirken. Die entsprechenden Akzeptoren sind NAD⁺, NADP⁺ (1.4.1), Cytochrome (1.4.2), Sauerstoff (1.4.3), Disulfide (1.4.4), Eisen-Schwefel-Proteine (1.4.7) oder andere Akzeptoren (1.4.99).

Besonders bevorzugt sind auch hier Enzyme der Klasse 1.4.3 mit Sauerstoff als Akzeptor.

Weiterhin bevorzugt sind Enzyme der Klasse 1.5, die auf CH-NH-Gruppen des Donors wirken. Die entsprechenden Akzeptoren sind NAD⁺, NADP⁺ (1.5.1), Sauerstoff (1.5.3), Disulfide (1.5.4), Chinone (1.5.5) oder andere Akzeptoren (1.5.99).

Auch hier sind besonders bevorzugt Enzyme mit Sauerstoff (1.5.3) und mit Chinonen (1.5.5) als Akzeptoren.

Weiterhin bevorzugt sind Enzyme der Klasse 1.6, die auf NADH oder NADPH wirken. Die Akzeptoren sind hier NADP⁺ (1.6.1), Hämproteine (1.6.2), Disulfide (1.6.4), Chinone (1.6.5), NO₂-Gruppen (1.6.6), und ein Flavin (1.6.8) oder einige andere Akzeptoren (1.6.99).

Besonders bevorzugt sind hier Enzyme der Klasse 1.6.5 mit Chinonen als Akzeptoren.

Weiterhin bevorzugt sind Enzyme der Klasse 1.7, die auf andere NO₂-Verbindungen als Donatoren wirken und als Akzeptoren Cytochrome (1.7.2), Sauerstoff (O₂) (1.7.3), Eisen-Schwefel-Proteine (1.7.7) oder andere (1.7.99) haben.

Hier ist besonders bevorzugt die Klasse 1.7.3 mit Sauerstoff als Akzeptor.

Weiterhin bevorzugt sind Enzyme der Klasse 1.8, die auf Schwefelgruppen als Donatoren wirken und als Akzeptoren NAD⁺, NADP⁺ (1.8.1), Cytochrome (1.8.2), Sauerstoff (1.8.3), Disulfide (1.8.4), Chinone (1.8.5), Eisen-Schwefel- Proteine (1.8.7) oder andere (1.8.99) haben.

Besonders bevorzugt ist die Klasse 1.8.3 mit Sauerstoff (O₂) und (1.8.5) mit Chinonen als Akzeptoren.

Weiterhin bevorzugt sind Enzyme der Klasse 1.9, die auf Hämgruppen als Donatoren wirken und als Akzeptoren Sauerstoff (O₂) (1.9.3), NO₂-Verbindungen (1.9.6) und andere (1.9.99) haben.

Besonders bevorzugt ist hier die Gruppe 1.9.3 mit Sauerstoff (O₂) als Akzeptor (Cytochromoxidasen).

Weiterhin bevorzugt sind Enzyme der Klasse 1.12, die auf Wasserstoff als Donor wirken. Die Akzeptoren sind NAD⁺ oder NADP⁺ (1.12.1) oder andere (1.12.99).

Desweiteren bevorzugt sind Enzyme der Klasse 1.13 und 1.14 (Oxigenasen).

Weiterhin sind bevorzugte Enzyme die der Klasse 1.15 , die auf Superoxid-Radikale als Akzeptoren wirken. Besonders bevorzugt ist hier die Superoxid-Dismutase (1.15.1.1).

Weiterhin sind bevorzugt Enzyme der Klasse 1.16. Als Akzeptoren wirken NAD⁺ oder NADP⁺ (1.16.1) oder Sauerstoff (O₂) (1.16.3).

Besonders bevorzugt sind hier Enzyme der Klasse 1.16.3.1 (Ferroxidase, z. B. Ceruloplasmin).

Weiterhin bevorzugte Enzyme sind diejenigen, die der Gruppe 1.17 (Wirkung auf CH₂-Gruppen, die zu -CHOH- oxidiert werden), 1.18 (Wirkung auf reduziertes Ferredoxin als Donor), 1.19 (Wirkung auf reduziertes Flavodoxin als Donor), und 1.97 (andere Oxidoreduktasen) angehören.

Weiterhin besonders bevorzugt sind die Enzyme der Gruppe 1.11, die auf ein Peroxid als Akzeptor wirken. Diese einzige Subklasse (1.11.1) enthält die Peroxidasen.

Besonders bevorzugt sind hier die Cytochrom-C-peroxidasen (1.11.1.5), Catalase (1.11.1.6), die Peroxydase (1.11.1.7), die Iodid-Peroxidase (1.11.1.8), die Glutathione-Peroxidase (1.11.1.9), die Chlorid-Peroxidase (1.11.1.10), die L-Ascorbatperoxidase (1.11.1.11), die Phospholipid-Hydroperoxid-Glutathione-Peroxidase (1.11.1.12), die Mangan-Peroxidase (1.12.1.13), die Diarylpropan-Peroxidase (Ligninase, Ligninperoxidase) (1.11.1.14).

Ganz besonders bevorzugt sind Enzyme der Klasse 1.10, die auf Biphenole und verwandten Verbindungen wirken. Sie katalysieren die Oxidation von Biphenolen und Ascorbaten. Als Akzeptoren fungieren NAD⁺, NADP⁺ (1.10..1), Cytochrome (1.10.2), Sauerstoff (1.30.3) oder andere (1.10.99).

Von diesen wiederum sind Enzyme der Klasse 1.10.3 mit Sauerstoff (O₂) als Akzeptor besonders bevorzugt. Von den Enzymen dieser Klasse sind die Enzyme Catechol Oxidase (Tyrosinase) (1.10.3.1), L-Ascorbate Oxidase (1.10.3.3), o-Aminophenol Oxidase (1.10.3.4) und Laccase (Benzoldiol: Oxigen Oxidoreduktase) (1.10.3.2) bevorzugt, wobei die Laccasen (Benzoldiol: Oxigen Oxidoreduktase) (1.10.3.2) insbesondere bevorzugt sind.

Die genannten Enzyme sind käuflich erhältlich oder lassen sich nach Standardverfahren gewinnen. Als Organismen zur Produktion der Enzyme kommen beispielsweise Pflanzen, tierische Zellen, Bakterien und Pilze in Betracht. Grundsätzlich können sowohl natürlich vorkommende als auch gentechnisch veränderte Organismen Enzymproduzenten sein. Ebenso sind Teile von einzelligen oder mehrzelligen Organismen als Enzymproduzenten denkbar, vor allem Zellkulturen. Für die insbesondere bevorzugten Enzyme, wie die aus der Gruppe 1.11.1, vor allem aber 1.10.3 und insbesondere zur Produktion von Laccasen, werden beispielsweise Weißfäulepilze wie Pleurotus, Phlebia und Trametes verwendet.

Die verwendeten Oxidationsmittel werden vorzugsweise in Konzentrationen von 0,1 M bis zu ihrer jeweiligen Sättigungskonzentration eingesetzt.

Falls es sich bei den im erfindungegemäßen Verfahren eingesetzten Oxidationsmitteln um 2-Elektronen-Oxidationsmittel handelt, so werden diese vorzugsweise in Mengen von 0,1 bis 125 Mol%, bevorzugt 50 bis 110 Mol%, besonders bevorzugt 75 bis 105 Mol%, bezogen auf die molare Menge der in den eingesetzten Organosiliciumverbindungen enthaltenen Carbinolgruppen, verwendet. Handelt es sich bei den im erfindungsgemäßen Verfahren eingesetzten Oxidationsmitteln um 1-Elektronen-Oxidationsmittel, so werden diese vorzugsweise in Mengen von 0,2 bis 250 Mol%, bevorzugt 100 bis 220 Mol%, besonders bevorzugt 150 bis 210 Mol%, bezogen auf die molare Menge der in den eingesetzten Organosiliciumverbindungen enthaltenen Carbinolgruppen, verwendet. Vorzugsweise handelt es sich um 2-Elektronen-Oxidationsmittel.

Unter den als Oxidationsmittel eingesetzten Metalloxiden werden solche mit einer Löslichkeit unter 1 g/L im Reaktionsmedium bevorzugt. Bevorzugt sind Bismut (III) oxid, Iridium (III) oxid, Cer(IV)oxid, Cobalt (II) oxid, Cobalt (III) oxid, Eisen(III)oxid, Mangan (IV) oxid, Zinn (IV) oxid, Niob (V) oxid, Antimon (V) oxid, Indium(III)oxid, Quecksilber (II) oxid, Blei(IV)oxid, Silber (I) oxid, Cu (II) oxid, Palladium (II) oxid.

Besonders bevorzugt werden Blei(IV)oxid, Mangan (IV) oxid, Silber (I) oxid, Cu (II) oxid und Palladium (II) oxid.

Die Elektroden der zur Oxidation verwendeten Elektrolysezellen können gleich oder verschieden sein. Sie bestehen vorzugsweise aus Kohlenstoff, Eisen, Blei, Bleidioxid, Kupfer, Nickel, Zink, Cadmium, Quecksilber, Tantal, Titan, Silber, Platin, platiniertem Platin, Palladium, Rhodium, Gold oder Legierungen aus den genannten Verbindungen.

Besonders bevorzugt sind Edelstähle, Tantal, Titan, Rhodium, Platin oder Gold. Ganz besonders bevorzugt bestehen die Elektroden aus Edelstahl, wobei wiederum Edelstähle der Gruppe 1.4xxx (nach DIN 17850) bevorzugt sind.

Die Elektroden können gegebenenfalls durch Bedampfen, Sputtern, Galvanisieren oder ähnliche Verfahren mit anderen Stoffen überzogen worden sein. Die Oberfläche der Elektroden kann durch geeignete Verfahren vergrößert worden sein, z. B. durch Schleifen, Polieren, Sandstrahlen, Ätzen oder Erodieren.

Weitere mögliche Zusätze sind Halogene, z. B. Brom, oder Salze, z. B. Alkali-, Erdalkali- oder Ammoniumhalogenide oder -sulfate, -carbonate, -hydrogencarbonate, Phosphorsäure und deren Alkali-, Erdalkali- oder Ammoniumsalze oder Kohlendioxid. Diese Zusätze können dem Oxidationsmittel bzw. der das Oxidationsmittel enthaltenden Phase oder der zu oxidierenden Carbinolgruppen aufweisenden Organosiliciumverbindung bzw. der die zu oxidierende Carbinolgruppen aufweisende Organosiliciumverbindung enthaltenden Phase, ggf. gelöst, zugesetzt werden, oder ggf. in gelöster Form als weitere Komponente dem Reaktionsgemisch zugeführt werden.

Bei der Oxidation mit Hypochlorit ist beispielsweise der Zusatz von Brom oder Bromid in Mengen von 0,01 bis 100 Mol-%, bezogen auf die eingesetzte Menge Hypochlorit, bevorzugt. Besonders bevorzugt ist der Zusatz von Brom oder Bromid in Mengen zwischen 1 und 50 Mol-%.

Das erfindungsgemäße Verfahren kann in einem homogenen 1-Phasen- oder in einem 2- oder Mehrphasensystem durchgeführt werden, wobei ein 2-Phasen-Reaktionssystem bevorzugt ist.

In einer besonders bevorzugten Ausführungsform handelt es sich um ein 2-Phasen-Reaktionssystem, bestehend aus einer flüssigen organosiliciumhaltigen Phase, welche die zu oxidierende, Carbinolgruppen aufweisende Organosiliciumverbindung und gegebenenfalls eines oder mehrere organische Lösungsmittel enthält, und einer flüssigen organosiliciumfreien, das Oxidationsmittel enthaltenden Phase.

Vorzugsweise handelt es sich bei der flüssigen organosiliciumfreien, das Oxidationsmittel enthaltenden Phase um eine wässrige Phase. Der pH-Wert der wässrigen Phase liegt vorzugsweise zwischen 4 und 14, besonders bevorzugt zwischen 6 und 12. Die Einstellung des gewünschten pH-Wertes erfolgt dabei vorzugsweise durch Zugabe eines Puffers, z. B. Natriumhydrogencarbonat, Dinatriumhydrogenphosphat oder Natriumdihydrogenphosphat, oder eines Puffergemisches oder einer Säure, z. B. Kohlendioxid, Phosphorsäure, Salzsäure oder Schwefelsäure, oder einer Base, z. B. NaOH.

Das erfindungsgemäße Verfahren kann in seiner bevorzugten Ausführungsform als 2-Phasen-Reaktionssystem sowohl mit als auch ohne zusätzliche Lösungsmittel durchgeführt werden, wobei die Durchführung ohne zusätzliche Lösungsmittel bevorzugt ist.

Als zusätzliche Lösungsmittel geeignet sind polare oder unpolare Lösungsmittel sowie beliebige Mischungen dieser Solventien untereinander oder mit Wasser. Als geeignete organische Lösungsmittel seien beispielhaft genannt lineare oder verzweigte gesättigte oder ungesättigte aliphatische Kohlenwasserstoffe mit 1-20 C-Atomen, zyklische gesättigte oder ungesättigte aliphatische Kohlenwasserstoffe mit 5-20 C-Atomen, oder aromatische Kohlenwasserstoffe mit 5-20 C-Atomen, wobei ein oder mehrere Wasserstoff-Atom(e) oder ein oder mehrere Kohlenstoff-Atom(e) durch Heteroatome ersetzt sein können.

Bevorzugt handelt es sich um lineare oder verzweigte gesättigte oder ungesättigte aliphatische Kohlenwasserstoffe mit 1-16 C-Atomen, zyklische gesättigte oder ungesättigte aliphatische Kohlenwasserstoffe mit 5-16 C-Atomen, oder aromatische Kohlenwasserstoffe mit 6-16 C-Atomen, wobei ein oder mehrere Wasserstoff-Atom(e) unabhängig voneinander durch F, Cl, Br, NO₂ oder CN ersetzt sein können, oder wobei eine oder mehrere CH₂-Gruppe(n) unabhängig voneinander durch O, NH, C=O, S, S=O, SO₂, P=O ersetzt sein können, oder wobei eine oder mehrere CH-Gruppe(n) unabhängig voneinander durch N oder P ersetzt sein können, oder wobei quartäre Kohlenstoff-Atome durch Si ersetzt sein können.

Beispiele für geeignete organische Lösungsmittel sind Hexan, Petrolether, Cyclohexan, Dekalin, Methylenchlorid, Chloroform, Tetrachlorkohlenstoff, 1,2-Dichlorethan, Chlorbenzol, Benzol, Toluol, 1-Chlor-Naphthalin, Ethylencarbonat, CO₂, Essigsäuremethylester, Essigsäureethylester, Essigsäurebutylester, Acetonitril, Acetamid, Tetrahydro-1,3-dimethyl-2(1H)-pyrimidinon (DMPU), Hexamethylphosphorsäuretriamid (HMPT), Dimethylsulfoxid (DMSO), Sulfolan, Diethylether, Methyl-tert.-butylether, Ethylenglycoldimethylether, Ethylenglycoldiethylether, Diethylenglycoldiethylether, Tetrahydrofuran, Dioxan, Aceton, Diisopropylketon und Polydimethylsiloxane.

Die zu oxidierende Carbinolgruppen aufweisende Organosiliciumverbindung kann in Konzentrationen zwischen 0,1 und 100 Gew.-%, bezogen auf die organische Lösung, bevorzugt zwischen 1 und 50 Gew.-% eingesetzt werden.

Wird das erfindungsgemäße Verfahren in einem 2-Phasen-Reaktionssystem durchgeführt, ist für eine quantitative Umsetzung der Carbinolgruppen eine intensive Durchmischung beider Reaktionsphasen zwecks Schaffung einer großen inneren Reaktionsoberfläche notwendig. Die intensive Durchmischung der Phasen kann entweder durch turbulente Strömung oder prinzipiell mit allen bekannten Mischsystemen, z. B. statischen Mischelementen oder -düsen, Rührer, Ultraschall, elektrischen, magnetischen oder elektromagnetischen Feldern usw., oder durch Kombinationen hiervon erzeugt werden. Eine Übersicht über die wichtigsten Ausführungsformen gibt z. B. "Ullmann's Encyclopedia of Industrial Chemistry" (Vol. B2, 5. Auflage, VCH Weinheim, 1988, Seiten 24-1 bis 25-13 und 25-19 bis 25-21; Vol. B4, 5. Auflage, VCH Weinheim, 1992, Seite 561 bis 586).

Vorzugsweise wird das erfindungsgemäße Verfahren in einem 2-Phasen-Reaktionssystem derart durchgeführt, dass in der kontinuierlichen Phase eine durchschnittliche Teilchengröße von kleiner oder gleich 200 µm vorliegt.

Gemäß dem erfindungsgemäßen Verfahren werden die Umsetzungen vorzugsweise bei Temperaturen zwischen -100 und +150 °C, besonders bevorzugt zwischen -50 und +100 °C, und insbesondere bevorzugt zwischen -20 und +50 °C durchgeführt.

Die Reaktionszeiten betragen vorzugsweise 0,1 Sekunden bis 72 Std., bevorzugt 1 Sekunde bis 24 Std., insbesondere bevorzugt 1 Sekunde bis 10 Std. und ganz besonders bevorzugt 1 Sekunde bis 5 Std.

Das erfindungsgemäße Verfahren kann diskontinuierlich, halbkontinuierlich oder vollkontinuierlich in dafür geeigneten Reaktorsystemen, wie z. B. Batch-Reaktor, Batch-ReaktorKaskade, Loop-Reaktor, Strömungsrohr, Rohrreaktor, Microreaktor, Kreiselpumpen und beliebige Kombinationen hiervon, durchgeführt werden. Eine Übersicht über die wichtigsten Ausführungsformen gibt z. B. "Ullmann's Encyclopedia of Industrial Chemistry" (Vol. B4, 5. Auflage, VCH Weinheim, 1992, Seite 87-120). Die Reaktion wird vorzugsweise kontinuierlich in einem 2-Phasen-Reaktionssystem durchgeführt.

Das erfindungsgemäße Verfahren bietet gegenüber dem Stand der Technik eine Reihe von Vorteilen. Es ist präparativ einfach, ohne speziellen apparativen Aufwand zu realisieren sowie durch die niedrige Reaktionstemperatur und den katalytischen Einsatz der verwendeten Mediatoren kostengünstig und Ressourcen schonend. Durch die selektive und nahezu quantitative Oxidation der Carbinolgruppen werden selbst bei polymeren Polyorganosiloxanen und Organosiloxanharzen hervorragende Reaktionsausbeuten erhalten, die deutlich über den Ausbeuten der nach dem Stand der Technik beschriebenen Verfahren liegen. Des weiteren werden kaum Nebenprodukte gebildet, und die Reaktionsprodukte lassen sich sauber und auf einfache Art und Weise isolieren. Zusätzlich erlauben die verhältnismäßig milden Reaktionsbedingungen die Anwendung des erfindungsgemäßen Verfahrens auch bei Organosiliciumverbindungen mit empfindlichen Substituenten. Das Verfahren kann kontinuierlich und gegebenenfalls sogar ohne zusätzliche organische Lösungsmittel gearbeitet werden, was einen weiteren Vorteil hinsichtlich Kosten, Raum-Zeit-Ausbeute und nachhaltige Umweltverträglichkeit bedeutet.

Falls erwünscht, können die nach dem erfindungsgemäßen Verfahren erhaltenen Organosiliciumverbindungen weiter modifiziert werden.

Handelt es sich bei den erfindungsgemäß hergestellten Organosiliciumverbindungen um Verbindungen der Formel (I) mit a+b+c+d=4, d. h. Silane, können diese je nach Art des Substituenten X in dem Fachmann bekannter Weise alkoxyliert (X gleich Chloratom), zu Organopolysiloxanen hydrolysiert bzw. (co)kondensiert werden (X gleich Chloratom, Hydroxy-, Methoxy- oder Ethoxyrest), oder mit linearen, endständige Hydroxylgruppen aufweisenden Organopolysiloxanen sowie mit Silanolgruppenhaltigen Organosiloxanharzen cokondensiert werden (X gleich Chloratom, Hydroxy-, Methoxy- oder Ethoxyrest).

Handelt es sich bei den erfindungsgemäß hergestellten Organosiliciumverbindungen um Verbindungen der Formel (I) mit a+b+c+d≤3, d. h. Organosiloxane, können diese in dem Fachmann bekannter Weise mit weiteren Organopolysiloxanen, bevorzugt ausgewählt aus der Gruppe bestehend aus linearen, endständige Triorganosiloxygruppen aufweisenden Organopolysiloxanen, linearen, endständige Hydroxylgruppen aufweisende Organopolysil-oxanen, cyclischen Organopolysiloxanen und Mischpolymerisaten aus Diorganosiloxan- und Monoorganosiloxaneinheiten, oder mit Silanolgruppenhaltigen Organosiloxanharzen equilibriert werden, wodurch beispielsweise die Einstellung des gewünschten Molekulargewichts sowie die gezielte Verteilung der Carbonylgruppen im Molekül und gegebenenfalls die Einführung weiterer Funktionalitäten ermöglicht wird.

Vorzugsweise werden als lineare, endständige Hydroxylgruppen aufweisende Organopolysiloxane solche der Formel

HO (SiR¹⁰⁰₂O)ₚH (XLIII),

als lineare, endständige Triorganosiloxygruppen aufweisenden Organopolysiloxane solche der Formel

R¹⁰⁰₃SiO (SiR¹⁰⁰₂O)_{q}SiR¹⁰⁰₃ (XLIV),

als cyclische Organopolysiloxane solche der Formel

(SiR¹⁰⁰₂O)ᵣ (XLV),

als Mischpolymerisate solche aus Einheiten der Formel

R¹⁰⁰₃SiO_{1/2}, R¹⁰⁰₂SiO und R¹⁰⁰SiO_{3/2}

und als Silanolgruppenhaltige Organosiloxanharze solche aus Einheiten der Formel
[R¹⁰⁰₃SiO_{1/2}] und [SiO_{4/2}], wobei diese noch zusätzliche Si-gebundene OH-Gruppen enthalten,
eingesetzt, wobei
R¹⁰⁰ jeweils gleich oder verschieden sein kann und eine für R angegebene Bedeutung- hat,
p 0 oder eine ganze Zahl von 1 bis 2000 ist,
q 0 oder eine ganze Zahl von 1 bis 2000 ist und
r eine ganze Zahl von 3 bis 12 ist.

Die Mengenverhältnisse der bei der gegebenenfalls durchgeführten Cokondensation oder Equilibrierung eingesetzten Organopolysiloxane und erfindungsgemäß hergestellten Organosiliciumverbindungen werden lediglich durch den gewünschten Anteil der Carbonylgruppen in den bei der gegebenenfalls durchgeführten Cokondensation oder Equilibrierung erzeugten Organosiliciumverbindung und durch die gewünschte mittlere Kettenlänge bestimmt.

Die gegebenenfalls nachträglich durchgeführten Alkoxylierungs-, Hydrolyse-, Kondensations-, Cokondensations- oder Equilibrierungsreaktionen werden auf dem Fachmann bekannte Art und Weise ausgeführt.

Carbonylreste-aufweisende Organosiliciumverbindungen zeichnen sich einerseits durch eine hohe Reaktivität gegenüber Nucleophilen und - dadurch bedingt - ein breites Reaktionsspektrum, sowie andererseits durch die für Carbonylgruppen typisch Empfänglichkeit für Redox-Prozesse aus. Die möglichen Anwendungsgebiete von Carbonylreste-aufweisenden Organosiliciumverbindungen sind dementsprechend umfangreich.

Aufgrund der Reaktionsfreudigkeit von Carbonylgruppen mit O-, N- und S-Nucleophilen eignen sich Carbonylreste-aufweisende Organosiliciumverbindungen beispielsweise hervorragend zur permanenten Ausrüstung entsprechender Materialien, wie beispielsweise von Naturfasern (wie Wolle, Seide, Baumwolle, Keratinfasern), Cellulose und Cellulosefasern sowie deren Mischgewebe mit Kunstfasern wie Polypropylen-, Polyester- oder Polyamidfasern. Typische Ziel-Effekte sind beispielsweise weicher, fließender Griff, verbesserte Elastizität, antistatische Eigenschaften, niedrige Reibwerte, Oberflächenglätte, Glanz, Knittererholung, Farbechtheiten, Waschbeständigkeit, Hydrophilie, Weiterreissfestigkeit, verringerte Pillingneigung, "Easy-Care" und "Soil-Release" Eigenschaften, verbesserter Tragekomfort, hohe Beständigkeit der Ausrüstung gegenüber Wasch- und Pflegeprozessen, verbesserte industrielle Verarbeitbarkeit, z.B. hinsichtlich Verarbeitungs- und Produktionsgeschwindigkeit.

Weiterhin eignen sich Carbonylreste-aufweisende Organosiliciumverbindungen als Hilfsstoff bei der Ledergerbung und -zurichtung, sowie für die Leimung und Oberflächenveredelung von Papier. Auch können Carbonylreste-aufweisende Organosiliciumverbindungen als Additive in Beschichtungen und Lacken Einsatz finden, wo sie z. B. zur Verringerung der Oberflächenrauhigkeit und somit zu einer Verringerung des Gleitwiderstands des Lacks führen.

Andere Anwendungsmöglichkeiten sind die Verwendung von Carbonylreste-aufweisenden Organosiliciumverbindungen als Zusatz in kosmetischen Formulierungen, beispielsweise in Hautpflegemitteln, als Konditionierer in Haarwaschmitteln oder zum reversiblen Verankern von Duftstoffen in der Polymermatrix zum Erzielen von slow-release-Eigenschaften, als Bautenschutzmittel sowie als oberflächenaktive Mittel, wie z. B. Detergentien, Tenside, Emulgatoren, Entschäumer und Schaumstabilisatoren.

Darüber hinaus können Carbonylreste-aufweisende Organosiliciumverbindungen als Radikalüberträger zur Steuerung radikalischer Polymerisationsprozesse, als chemischer Baustein, wie z. B. für die Herstellung von Kunststoffen oder Harzen, sowie.als Intermediat für weitere Synthesen eingesetzt werden. So lassen sich die Aldehyd- und Ketongruppen nach dem Fachmann bekannten Methoden der Carbonylgruppenchemie beliebig weitermodifizieren, wie z.B. durch (Halb-)Acetalisierung, Oxidation, Reduktion, Umsetzung mit Aminen zu Iminen und Schiff-Basen, Oxim-, Hydrazon oder Semicarbazon-Bildung, Umsetzung mit CH-aciden Verbindungen bzw. Verwendung als CHacide Reaktionskomponente.

Die folgenden Verfahrens-Beispiele erläutern die Erfindung.

### Beispiel 1:

121 g eines 3-Hydroxypropyl-dimethylsilyl-terminierten Polydimethylsiloxans mit einem OH-Gehalt von 3,2 % in 400 ml Methylenchlorid, 1,90 g (11 mmol) 4-Hydroxy-TEMPO, 50 ml gesättigte Natriumhydrogencarbonatlösung und 2,27 g (22 mmol) Natriumbromid wurden auf -10°C gekühlt und unter starkem Rühren mit einem Ankerrührer (2000 U/min; Rührwerk RZR der Fa. Heidolph) und guter Kühlung innerhalb von 200 s mit 177 g technischer Bleichlauge (Gehalt ca. 1,8 M, pH 9,5 wurde durch Zugabe von 2 N Schwefelsäure eingestellt) versetzt. Dabei bildete sich eine suspensionsartig weiße Mischung, in welcher die Siliconöltröpfchen mit einer durchschnittlichen Partikelgröße von etwa 100 bis 150 µm in der kontinuierlichen wässrigen Phase dispergiert waren. Nach ca. 5 min. wurden die Phasen getrennt und die das Produkt enthaltende organische Phase NMR-spektroskopisch untersucht. Ausbeute (Standardanalyse): 96 % Si-gebundene 2-Formylethyl-Gruppen, 4 % nicht umgesetzte Hydroxypropyl-Gruppen.

### Vergleichsversuch zu Beispiel 1:

Beispiel 1 wurde analog wiederholt, mit dem Unterschied, dass statt des Anker- oder Propellerrührers ein Magnetrührer (IKAMAG^{®} RCT der Fa. IKA Labortechnik) mit zylindrischem Magnetrührstäbchen (L: 25 mm) zum Einsatz kam und mit 1000 U/min gerührt wurde. Die sich bildende Dispersion ist deutlich grobteiliger und weist eine durchschnittliche Partikelgröße der Siliconöltröpfchen von größer 500 µm auf. Nach Abtrennung der Produktphase wurde die organische Phase NMR-spektroskopisch untersucht. Ausbeute (Standardanalyse): 46 % Si-gebundene 2-Formylethyl-Gruppen, 54 % nicht umgesetzte Hydroxypropyl-Gruppen.

### Beispiel 2:

121 g eines 3-Hydroxypropyl-dimethylsilyl-terminierten Polydimethylsiloxans mit einem OH-Gehalt von 1,25 %, 950 mg (5,5 mmol) 4-Hydroxy-TEMPO, 50 ml gesättigte Natriumhydrogencarbonatlösung und 1135 mg (11 mmol) Natriumbromid wurden auf -10°C gekühlt und unter starkem Rühren und gutem Kühlen rasch mit 77 g technischer Bleichlauge (Gehalt ca. 1,9 M, pH 9,5 wurde durch Zugabe von 2 N Schwefelsäure eingestellt) versetzt. Nach ca. 15 min. wurden die Phasen getrennt und die das Produkt enthaltende organische Phase NMR-spektroskopisch untersucht. Ausbeute (Standardanalyse): 95 % Si-gebundene 2-Formylethyl-Gruppen, 5 % nicht umgesetzte Hydroxypropyl-Gruppen.

### Beispiel 3:

Die Reaktion wurde analog zu Beispiel 2 mit 100 g der in Tabelle 1 weiter spezifizierten, seitenständig 3-Hydroxypropylfunktionalisierten Polydimethylsiloxanen mit Trimethylsilylendgruppen wiederholt, wobei die in der Tabelle genanten Mengen an 4-Hydroxy-TEMPO, gesättigte NaHCO₃-Lösung, Natriumbromid und Bleichlauge zum Einsatz kamen. Am Ende der Reaktion wird die Reaktionsmischung mit 10%iger HCl(aq.) neutralisiert (pH=6-7). Nach Abtrennen der siliciumorganischen Phase, Entfernen aller flüchtigen Bestandteile im Vakumm und Filtration erhält man das seitenständig Formylethyl-funktionalisierte Polydimethylsiloxan mit Trimethylsilylendgruppen als fast farbloses, klares Öl.

**Tabelle 1.**

| **Beispiel** | 3a | 3b | 3c |
|---|---|---|---|
| **OH-Gehalt [%]** | 1,34 | 0,85 | 0,6 |
| **4-OH-Tempo [g]** | 0,8 | 0,5 | 0,375 |
| **NaHCO₃-Lsg. [mL]** | 45 | 30 | 20 |
| **NaBr [g]** | 1,0 | 0,6 | 0,45 |
| **Reaktionszeit [min]** | 15 | 25 | 35 |
| **Ausbeute** | 98,2 | 96,4 | 95,5 |

### Beispiel 4:

Analog zu den Beispielen 3 wurden 100g eines linearen Polydimethylsiloxans mit - wie in Tabelle 2 weiter spezifiziert - seiten- oder endständigen Carbinolgruppen (Carbinol-Öl) zu den entsprechenden Formyl-funktionalisierten Polydimethylsiloxanen umgesetzt.

**Tabelle 2.**

| **Carbinol-ÖI** | **Substituent** | **Substitutionsart** | **OH-Gehalt [%]** |
|---|---|---|---|
| **A** | Polyoxyalkylenrest -C₃H₆-(C₂H₄O)₆-(C₄H₈O)₁₄H | Seitenständig | 0,7 |
| **B** | Polyoxyalkylenrest -C₃H₆-(C₂H₄O)₂₀-(C₄H₈O)₂₀H | Seitenständig | 0,48 |
| **C** | 3-[2-Ethyl-3-hydroxy-3-(hydroxymethyl)-propoxyl-propyl | alfa,omega-endständig | 1,55 |
| **D** | 4-Hydroxy-2-methyl-butyl | Seitenständig | 0,44 |
| **E** | 3-Hydroxypropyl | Monofunkt. | 1,02 |

Tabelle 3 illustriert die Synthesebedingungen.

**Tabelle 3.**

| **Beispiel** | **4a** | **4b** | **4c** | **4d** | **4e** |
|---|---|---|---|---|---|
| **Carbinol-Öl** | A | B | C | D | E |
| **zusätzliches LSM** | - | Toluol | - | - | Ethylacetat |
| **4-OH-Tempo [g]** | 0,44 | 0,30 | 0,98 | 0,275 | 0,33 |
| **NaHCO₃-Lsg. [mL]** | 25 | 15 | 52 | 15 | 18 |
| **NaBr [g]** | 0,52 | 0,36 | 1,17 | 0,33 | 0,39 |
| **Reaktionszeit [min]** | 30 | 45 | 12 | 35 | 10 |
| **Ausbeute** | 96,3 | 97,6 | 92,4 | 98,1 | 95,9 |

### Beispiel 5:

Es wurden folgende Lösungen hergestellt:
Lösung 1: In 1000 g 3-Hydroxypropyl-dimethylsilyl-terminiertem Polydimethylsiloxan mit einem OH-Gehalt von 0,5 mmol pro g wurden 430 mg (2,5 mmol, 1,0 Mol %) 4-Hydroxy-TEMPO gelöst.
Lösung 2: 2 1 Natriumhypochloritlösung (technische Bleichlauge) wurden mit ca. 80 ml 20 proz. Schwefelsäure auf einen pH-Wert von 9,5 eingestellt. Gehalt ca. 1,9 M.
Lösung 3: 84,9 g NaBr in 313 ml Wasser.
   Mittels Dosierpumpen wurden die Lösungen 1, 2 und 3 aus Reservoirs über ein statisches Mischelement synchron in ein als Spirale gewickeltes 20 m langes Titan-Rohr (Innendurchmesser 3 mm, Außendurchmesser 4,1 mm) gepumpt. Die Pumprate betrug für die Lösung 1 400 ml/min, für die Lösung 2 130 ml/min und für die Lösung 3 0,5 l/h. Die Reaktionsmischung wurde in einem Behälter aufgefangen und ggf. mit Essigester verdünnt. Die organische Phase wurde abgetrennt. Nach Entfernen aller flüchtigen Bestandteile im Vakumm und Filtration erhielt man das endständig Formylethyl-funktionalisierte Polydimethylsiloxan als fast farbloses, klares Öl. Ausbeute: 90 % Siliconöl mit Si-gebundenen 2-Formylethylgruppen (quantitative NMR-Analyse).

### Beispiel 6:

Mit dem in Beispiel 5 verwendeten 3-Hydroxypropyl-dimethylsilyl-terminierten Polydimethylsiloxan wurden weitere Oxidationen im Batch-Modus durchgeführt. Verwendete Reagentien, Versuchbedingungen und Ausbeuten siehe Tabelle 4.

**Tabelle 4.**

| **Katalysator / Cokatalysator (Mol %)*** | **Oxidations-mittel (Mol%.)*** | **Reaktionsmedium** | **Reaktions-temperatur** (°C) | **Reaktions-dauer** | **Ausbeute (%)** |
|---|---|---|---|---|---|
| 4-Hydroxy-TEMPO (1), KBr (1) | NaOCl (120) | Ethylacetat/Wasser | 20 | 5 min. | 95 |
| 4-Hydroxy-TEMPO (2,5), KBr (1) | NaOCl (120) | ohne org. Solvens | 10 bis 25 | 3 min. | 92 |
| 4-Acetamido-TEMPO (2) | NaOBr (110) | Toluol/Wasser | 10 | 2min. | 97 |
| TEMPO (0,1) | N-Chlor-succinimid (1,1) | CH₂Cl₂ CH₂Cl₂ | 5 | 20 min. | 98 |
| TEMPO (1) | Phl(OAc)₂ (110) | CH₂Cl₂ | 20 | 2 h | 80 |
| TEMPO (1) | KHSO₅ (110) | CH₂Cl₂ | 20 | 5,5 h | 75 |
| TEMPO (1), Bu₄N⁺Br⁻ (2) | Oxone (200) | CH₂Cl₂ | 20 | 1,2 h | 70 |
| TEMPO (1) | m-Chlor-perbenzoesäure | CH₂Cl₂ | 5 | 35 min | 75 |
| 4-Hydroxy-TEMPO (5), CuCl (10) | O₂ | DMF | 25 | 3 h | 90 |
| TEMPO (10), Laccase (1000 nkat./g Siloxan) | O₂ | Acetonitril/0,1 M NaOAc (pH 5,0) | 38 | 2d | 70 |
| TEMPO (10), Laccase (1000 nkat./g Siloxan) | O₂ | THF/0,1 M NaOAc (pH 5,1) | 39 | 3d | 71 |
| TEMPO (10), Laccase (500 nkat./g Siloxan) | O₂ | ohne org. Solvens | 40 | 2d | 65 |
| TEMPO (2,5), RuCl₂(PPh₃)₃ (2,5) | O₂ | ohne org. Solvens | 100 | 5 h | 90 |

| | | | | | |
|---|---|---|---|---|---|
| * bezogen auf die molare Menge an vorhandenen Carbinolgruppen | | | | | |

## Patentansprüche

1. Verfahren zur Herstellung von Carbonylreste-aufweisenden Organosiliciumverbindungen
durch Oxidation von Carbinolreste-aufweisenden Organosiliciumverbindungen
mit Hilfe eines Mediators ausgewählt aus der Gruppe der aliphatischen, cycloaliphatischen, heterocyclischen und aromatischen NO-, NOH- und
und eines Oxidationsmittels. 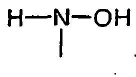 -haltigen Verbindungen

2. Verfahren nach Anspruch 1, **dadurch gekennzeichnet, dass** als Carbinolreste-aufweisende Organosiliciumverbindungen solche enthaltend Einheiten der Formel
A' ₐR_{b}X_{c}H_{d}SiO_{(4-a-b-c-d)/2} (I),
eingesetzt werden,
wobei A' gleich oder verschieden sein kann und einen Rest der Formel 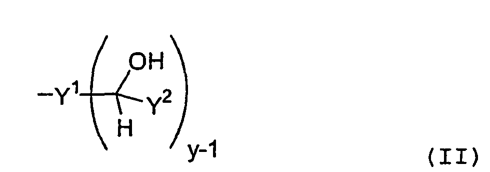 bedeutet,
X¹ einen zwei- oder mehrwertigen, linearen oder cyclischen, verzweigten oder unverzweigten organischen Rest bedeutet, der gegebenenfalls substituiert und/oder durch die Atome N, O, P, B, Si, S unterbrochen sein kann,
Y² ein Wasserstoffatom oder einen einwertigen linearen oder cyclischen, verzweigten oder unverzweigten, organischen Rest bedeutet, der gegebenenfalls substituiert und/oder durch die Atome N, O, P, B, Si, S unterbrochen sein kann,
y entsprechend der Wertigkeit von Rest Y¹ ≥ 2 ist,
R gleich oder verschieden sein kann und einen einwertigen, linearen oder cyclischen, verzweigten oder unverzweigten gegebenenfalls substituierten Kohlenwasserstoffrest bedeutet,
X gleich oder verschieden sein kann und ein Chloratom, ein Rest der Formel -OR¹ mit R¹ gleich Wasserstoffatom oder Alkylrest mit 1 bis 18 Kohlenstoffatom(en), der durch Ethersauerstoffatome substituiert sein kann, einen einwertigen, linearen oder cyclischen, verzweigten oder unverzweigten Kohlenwasserstoffrest, der gegebenenfalls durch Einheiten -C(O)-, -C(O)O-, -C(O)NR¹-, -O-C(O)O-, -O-C(O)NR¹-, -NR¹-C(O)-NR¹-, -NR¹-, -(NR¹₂)⁺-, -O-, -S-, =N-unterbrochen und mit Hydroxy-, Mercapto-, Amin-, Ammonium-, Carbonyl-, Carboxyl- oder Oxiranylgruppen substituiert sein kann, oder die Gruppe A' bedeutet,
a 0, 1 oder 2 ist
b 0, 1, 2 oder 3 ist,
c 0, 1, 2 oder 3 ist, und
d 0, 1, 2 oder 3 ist,
mit der Maßgabe, dass die Summe a+b+c+d ≤ 4 ist und die Organosiliciumverbindungen der Formel (I) pro Molekül mindestens einen Rest A' aufweisen.

3. Verfahren nach Anspruch 1, **dadurch gekennzeichnet, dass** als Carbonylreste-aufweisende Organosiliciumverbindungen solche enthaltend Einheiten der Formel
AₐR_{b}X_{c}H_{d}SiO_{(4-a-b-c-d)/2} (III),
erhalten werden,
wobei A gleich oder verschieden sein kann und einen Rest der Formel 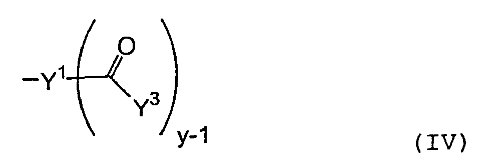 bedeutet,
Y³ ein Wasserstoffatom oder einen einwertigen linearen oder cyclischen, verzweigten oder unverzweigten organischen Rest bedeutet, der gegebenenfalls substituiert und/oder durch die Atome N, O, P, B, Si, S unterbrochen sein kann, und
Y¹, R, X, a, b, c, d und y die im Anspruch 2 dafür angegebene Bedeutung haben,
mit der Maßgabe, dass die Summe a+b+c+d≤4 ist und die Organosiliciumverbindungen der Formel (III) pro Molekül mindestens einen Rest A aufweisen.

4. Verfahren nach Anspruch 1 oder 2, **dadurch gekennzeichnet, dass** als Carbinolreste-aufweisende Organosiliciumverbindungen solche der Formel
A'ᵥR_{w}X_{(3-v-w)}Si (I'),
wobei A', X und R die in Anspruch 2 dafür angegebene Bedeutung haben,
v 0, 1, 2 oder 3, bevorzugt 0 oder 1, ist
w 0, 1, 2 oder 3 ist,
mit der Maßgabe, dass sie pro Molekül mindestens einen Rest A' enthalten,
eingesetzt werden.

5. Verfahren nach Anspruch 1 oder 2, **dadurch gekennzeichnet, dass** als Carbinolreste-aufweisende Organosiliciumverbindungen solche der Formel
A'ᵥR₃₋ᵥSiO (SiR₂O)ₙ(SiRA'O)ₒSiR₃₋ᵥA'ᵥ (I"),
wobei A' und R die in Anspruch 2 dafür angegebene Bedeutung haben,
v 0, 1, 2 oder 3, bevorzugt 0 oder 1, ist
n 0 oder eine ganze Zahl von 1 bis 2000 ist,
o 0 oder eine ganze Zahl von 1 bis 2000, bevorzugt 0 bis 500, ist,
mit der Maßgabe, dass sie pro Molekül mindestens einen Rest A' enthalten,
eingesetzt werden.

6. Verfahren nach Anspruch 1 oder 2, **dadurch gekennzeichnet, dass** als Carbinolreste-aufweisende Organosiliciumverbindungen solche der Formel [A'ᵥR₃₋ᵥSiO_{1/2}]ₛ[SiO_{4/2}] (I'''),
wobei A' und R die in Anspruch 2 dafür angegebene Bedeutung haben,
v 0, 1, 2 oder 3, bevorzugt 0 oder 1, ist,
s einen Wert von einschließlich 0,2 bis 6, bevorzugt 0,4 bis 4, annehmen kann und die Anzahl M-Einheiten [A'ᵥR₃₋ᵥSiO_{1/2}] pro Q-Einheit [SiO_{4/2}] beschreibt,
mit der Maßgabe, dass sie pro Molekül mindestens einen Rest A*'* enthalten,
eingesetzt werden.

7. Verfahren nach Anspruch 1 oder 3, **dadurch gekennzeichnet, dass** als Carbonylreste-aufweisende Organosiliciumverbindungen solche der Formel
AᵥR_{w}X_{(3-v-w)}Si (III'),
wobei A, X und R die in Anspruch 3 dafür angegebene Bedeutung haben,
v 0, 1, 2 oder 3, bevorzugt 0 oder 1, ist
w 0, 1, 2 oder 3 ist,
mit der Maßgabe, dass sie pro Molekül mindestens einen Rest A enthalten,
erhalten werden.

8. Verfahren nach Anspruch 1 oder 3, **dadurch gekennzeichnet, dass** als Carbonylreste-aufweisende Organosiliciumverbindungen solche der Formel
AᵥR₃₋ᵥSiO (SiR₂O)ₙ(SiRAO)ₒSiR₃₋ᵥAᵥ (III"),
wobei A und R die in Anspruch 3 dafür angegebene Bedeutung haben,
v 0, 1, 2 oder 3, bevorzugt 0 oder 1, ist
n 0 oder eine ganze Zahl von 1 bis 2000 ist,
o 0 oder eine ganze Zahl von 1 bis 2000, bevorzugt 0 bis 500, ist,
mit der Maßgabe, dass sie pro Molekül mindestens einen Rest A enthalten,
erhalten werden.

9. Verfahren nach Anspruch 1 oder 3, **dadurch gekennzeichnet, dass** als Carbonylreste-aufweisende Organosiliciumverbindungen solche der Formel
[AᵥR₃₋ᵥSiO_{1/2}]ₛ[SiO_{4/2}] (III"'),
wobei A und R die in Anspruch 3 dafür angegebene Bedeutung haben,
v 0, 1, 2 oder 3, bevorzugt 0 oder 1, ist,
s einen Wert von einschließlich 0,2 bis 6, bevorzugt 0,4 bis 4, annehmen kann und die Anzahl M-Einheiten [AᵥR₃-ᵥSiO_{1/2}] pro Q-Einheit [SiO_{4/2}] beschreibt,
mit der Maßgabe, dass sie pro Molekül mindestens einen Rest A enthalten,
erhalten werden.

10. Verfahren nach einem der Ansprüche 1 bis 9, **dadurch gekennzeichnet, dass** als Mediator Nitroxyl-Radikale der Formel 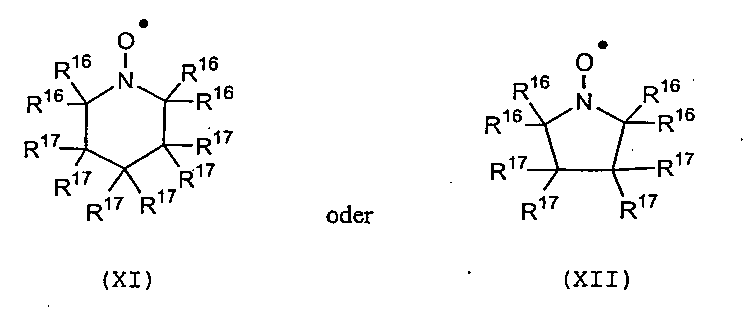 wobei
R¹⁶ gleich oder verschieden ist und Phenyl-, Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Rest bedeutet, wobei
die Phenylreste unsubstituiert oder ein- oder mehrfach mit einem Rest R¹⁸ substituiert sein können, und die Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Reste gesättigt oder ungesättigt,
verzweigt oder unverzweigt sein können und mit einem Rest R¹⁸ ein- oder mehrfach substituiert sein können, wobei R¹⁸ ein- oder mehrfach vorhanden sein kann und gleich oder verschieden ist und Hydroxy-, Formyl-, Carboxyrest, Ester oder Salz des Carboxyrests, Carbamoyl-, Sulfono-, Sulfamoyl-, Nitro-, Nitroso-, Amino-, Phenyl-, Benzoyl-, C₁-C₅-Alkyl-, C₁-C₅-Alkoxyrest, C₁-C₅-Alkylcarbonyl-Rest bedeutet,
R¹⁷ gleich oder verschieden ist und ein Wasserstoffatom oder Hydroxy-, Mercapto-, Formyl-, Cyano-, Carbamoyl-, Carboxyrest, Ester oder Salz des Carboxyrests, Sulfonorest, Ester oder Salz des Sulfonorests, Sulfamoyl-, Nitro-, Nitroso-, Amino-, Phenyl-, Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Rest, Phospho-, Phosphono-, Phosphonooxyrest, Ester oder Salz des Phosphonooxyrests bedeutet, wobei
die Carbamoyl-, Sulfamoyl-, Amino-, Mercapto- und Phenylreste unsubstituiert oder ein- oder mehrfach mit einem Rest R¹² substituiert sein können,
und die Aryl-C₁-C₅-Alkyl-, C₁-C₁₂-Alkyl-, C₁-C₅-Alkoxy-, C₁-C₁₀-Carbonyl- und Carbonyl-C₁-C₆-Alkyl-Reste gesättigt oder ungesättigt, verzweigt oder unverzweigt sein können und mit einem Rest R¹² ein- oder mehrfach substituiert sein können, und eine [-CR¹⁷R¹⁷-]-Gruppe durch Sauerstoff, einen ggf. mit C₁-C₅-Alkylsubstituierten Iminorest, einen (Hydroxy)iminorest, eine Carbonylfunktion oder eine ggf. mit R¹² mono- oder disubstituierten Vinylidenfunktion ersetzt sein kann,
und zwei benachbarte Gruppen [-CR¹⁷R¹⁷-] durch eine Gruppe [-CR¹⁷=CR¹⁷-], [CR¹⁷=N-] oder [-CR¹⁷=N(O)-] ersetzt sein können,
wobei R¹² ein- oder mehrfach vorhanden sein kann und gleich oder verschieden ist und Hydroxy-, Formyl-, Cyano-, Carboxyrest, Ester oder Salz des Carboxyrests, Carbamoyl-, Sulfono-, Sulfamoyl-, Nitro-, Nitroso-, Amino-, Phenyl-, C₁-C₅-Alkyl-, C₁-C₅-Alkoxy-, C₁-C₅-Alkylcarbonylrest bedeutet, eingesetzt werden.

11. Verfahren nach Anspruch 10, **dadurch gekennzeichnet, dass** die Nitroxyl-Radikale der Formeln (XI) und (XII) über einen oder mehrere Reste R¹⁷ mit einer polymeren Struktur verknüpft sind.

12. Verfahren nach Anspruch 10 oder 11, **dadurch gekennzeichnet, dass** als Mediator solche ausgewählt aus der Gruppe von 2,2,6,6-Tetramethyl-piperidin-1-oxyl (TEMPO), 4-Hydroxy-2,2,6,6-tetramethyl-piperidin-1-oxyl, 4-Amino-2,2,6,6-tetramethyl-piperidin-1-oxyl, 4-Acetoxy-2,2,6,6-tetramethyl-piperidin-1-oxyl, 4-Benzoyloxy-2,2,6,6-tetramethyl-piperidin-1-oxyl und PIPO (polymer immobilised piperidinyloxyl) eingesetzt werden.

13. Verfahren nach einem der Ansprüche 1 bis 12, **dadurch gekennzeichnet, dass** der Mediator in Mengen von 0,01 bis 100 Mol %, bezogen auf die Menge der in der eingesetzten Organosiliciumverbindung enthaltenen Carbinolgruppen, verwendet wird.

14. Verfahren nach einem der Ansprüche 1 bis 13, **dadurch gekennzeichnet, dass** als Oxidationsmittel solche eingesetzt werden ausgewählt aus der Gruppe von Luft, Sauerstoff, Wasserstoffperoxid, organische Peroxide, Perborate und Persulfate, organische und anorganische Persäuren, Salze und Derivate der Persäuren, Chlor, Brom, Iod, unterhalogenige Säuren sowie deren Salze, z. B. in Form von Bleichlauge, halogenige Säuren sowie deren Salze, Halogensäuren sowie deren Salze, Fe(CN)₆³⁻ und N-Chlorverbindungen,
wobei sie gegebenenfalls jeweils in Kombination mit Enzymen eingesetzt werden können.

15. Verfahren nach einem der Ansprüche 1 bis 14, **dadurch gekennzeichnet, dass** das Oxidationsmittel ein 2-Elektronen-Oxidationsmittel ist und in Mengen von 0,1 bis 125 Mol%, bezogen auf die Menge der in den eingesetzten Organosiliciumverbindungen enthaltenen Carbinolgruppen, verwendet wird.

16. Verfahren nach einem der Ansprüche 1 bis 13, **dadurch gekennzeichnet, dass** als Oxidationsmittel Metalloxide oder Anoden von Elektrolysezellen eingesetzt werden.

17. Verfahren nach einem der Ansprüche 1 bis 16, **dadurch gekennzeichnet, dass** es kontinuierlich durchgeführt wird.

## Claims

1. Method for producing organosilicon compounds having carbonyl radicals by oxidation of organosilicon compounds having carbinol radicals with the aid of a mediator selected from the group consisting of the aliphatic, cycloaliphatic, heterocyclic and aromatic NO-, NOH- and 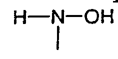 -containing compounds and of an oxidizing agent.

2. Method according to Claim 1, **characterized in that** the organosilicon compounds having carbinol radicals which are used are those containing units of the formula
A'ₐR_{b}X_{c}H_{d}SiO_{(4-a-b-c-d)/2} (I),
in which A' may be identical or different and are a radical of the formula 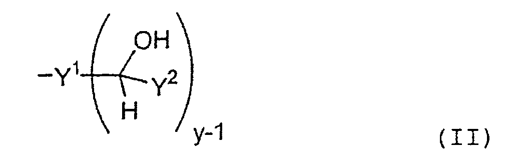 Y¹ is a divalent or polyvalent, linear or cyclic, branched or straight-chain organic radical which optionally may be substituted and/or interrupted by the atoms N, O, P, B, Si or S,
Y² is a hydrogen atom or a monovalent, linear or cyclic, branched or straight-chain, organic radical which optionally may be substituted and/or interrupted by the atoms N, O, P, B, Si or S,
y, depending on the valency of radical Y¹, is ≥ 2,
R may be identical or different and are a monovalent, linear or cyclic, branched or straight-chain optionally substituted hydrocarbon radical,
X may be identical or different and are a chlorine atom, a radical of the formula -OR¹ where R¹ is a hydrogen atom or alkyl radical having 1 to 18 carbon atom(s), which may be substituted by ether oxygen atoms, a monovalent, linear or cyclic, branched or straight-chain hydrocarbon radical which optionally may be interrupted by units -C(O)-, -C(O)O-, -C(O)NR¹-,-O-C(O)O-, -O-C(O)NR¹-, -NR-C(O)-NR¹-,-NR¹-, -NR¹₂)⁺-, -O-, -S- or =N- and may be substituted by hydroxyl, mercapto, amino, ammonium, carbonyl, carboxyl or oxiranyl groups, or are the group A',
a is 0, 1 or 2,
b is 0, 1, 2 or 3,
c is 0, 1, 2 or 3, and
d is 0, 1, 2 or 3,
with the proviso that the sum a+b+c+d is ≤ 4 and the organosilicon compounds of the formula (I) have at least one radical A' per molecule.

3. Method according to Claim 1, **characterized in that** organosilicon compounds having carbonyl radicals which are obtained are those containing units of the formula
AₐR_{b}X_{c}H_{d}SiO_{(4-a-b-c-d)/2} (III),
in which A may be identical or different and are a radical of the formula 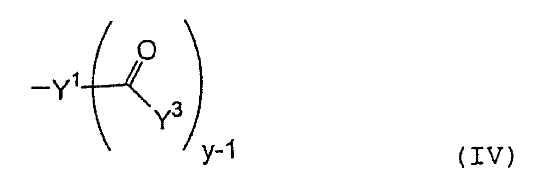 Y³ is a hydrogen atom or a monovalent, linear or cyclic, branched or straight-chain organic radical which optionally may be substituted and/or interrupted by the atoms N, O, P, B, Si or S, and
Y¹, R, X, a, b, c, d and y have the meanings stated therefor in Claim 2,
with the proviso that the sum a+b+c+d is ≤4 and the organosilicon compounds of the formula (III) have at least one radical A per molecule.

4. Method according to Claim 1 or 2, **characterized in that** organosilicon compounds having carbinol radicals which are used are those of the formula
A'ᵥR_{w}X_{(3-v-w)}Si (I'),
in which A', X and R have the meaning stated therefor in Claim 2,
v is 0, 1, 2 or 3, preferably 0 or 1,
w is 0, 1, 2 or 3,
with the proviso that they contain at least one radical A' per molecule.

5. Method according to Claim 1 or 2, **characterized in that** organosilicon compounds having carbinol radicals which are used are those of the formula
A'ᵥR₃₋ᵥSiO(SiR₂O)ₙ(SiRA'O)ₒSiR₃₋ᵥA'ᵥ (I"),
in which A' and R have the meaning stated therefor in Claim 2,
v is 0, 1, 2 or 3, preferably 0 or 1,
n is 0 or an integer from 1 to 2000,
o is 0 or an integer from 1 to 2000, preferably from 0 to 500,
with the proviso that they contain at least one radical A' per molecule.

6. Method according to Claim 1 or 2, **characterized in that** organosilicon compounds having carbinol radicals which are used are those of the formula
[A'ᵥR₃₋ᵥSiO_{1/2}]ₛ[SiO_{4/2}] (I'''),
in which A' and R have the meanings stated therefor in Claim 2,
v is 0, 1, 2 or 3, preferably 0 or 1,
s may assume a value of from 0.2 to 6, preferably from 0.4 to 4, inclusive, and describes the number of M units [A'ᵥR₃₋ᵥSiO_{1/2}] per Q unit [SiO_{4/2}],
with the proviso that they contain at least one radical A' per molecule.

7. Method according to Claim 1 or 3, **characterized in that** organosilicon compounds having carbonyl radicals which are obtained are those of the formula
AᵥR_{w}X_{(3-v-w)}Si (III')
in which A, X and R have the meanings stated therefor in Claim 3,
v is 0, 1, 2 or 3, preferably 0 or 1,
w is 0, 1, 2 or 3,
with the proviso that they contain at least one radical A per molecule.

8. Method according to Claim 1 or 3, **characterized in that** organosilicon compounds having carbonyl radicals which are obtained are those of the formula
AᵥR₃₋ᵥSiO(SiR₂O)ₙ(SiRAO)ₒSiR₃₋ᵥAᵥ (III"),
in which A and R have the meanings stated therefor in Claim 3,
v is 0, 1, 2 or 3, preferably 0 or 1,
n is 0 or an integer from 1 to 2000,
o is 0 or an integer from 1 to 2000, preferably from 0 to 500,
with the proviso that they contain at least one radical A per molecule.

9. Method according to Claim 1 or 3, **characterized in that** organosilicon compounds having carbonyl radicals which are obtained are those of the formula
[AᵥR₃-ᵥSiO_{1/2}]ₛ[SiO_{4/2}] (III"'),
in which A and R have the meanings stated therefor in Claim 3,
v is 0, 1, 2 or 3, preferably 0 or 1,
s may assume a value from 0.2 to 6, preferably from 0.4 to 4, inclusive, and describes the number of M units [AᵥR₃₋ᵥSiO_{1/2}] per Q unit [Si0_{4/2}],
with the proviso that they contain at least one radical A per molecule.

10. Method according to any of Claims 1 to 9,
**characterized in that** nitroxyl radicals of the formula 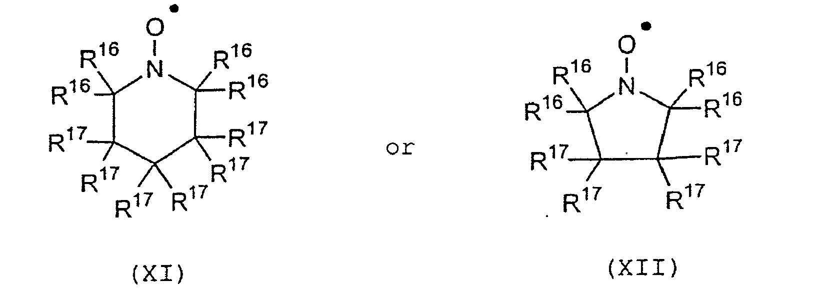 in which
R¹⁶ are identical or different and are a phenyl, aryl-C₁-C₅-alkyl, C₁-C₁₂-alkyl, C₁-C₅-alkoxy, C₁-C₁₀-carbonyl and carbonyl-C₁-C₆-alkyl radical,
it being possible for the phenyl radicals to be unsubstituted or monosubstituted or polysubstituted by a radical R¹⁸ and for the aryl-C₁-C₅-alkyl, C₁-C₁₂-alkyl, C₁-C₅-alkoxy, C₁-C₁₀-carbonyl and carbonyl-C₁-C₆-alkyl radicals to be saturated or unsaturated, branched or straight-chain and to be monosubstituted or polysubstituted by a radical R¹⁸
it being possible for R¹⁸ to be present once or several times and R¹⁸ being identical or different and being a hydroxyl, formyl or carboxyl radical, ester or salt of the carboxyl radical, carbamoyl, sulfono, sulfamoyl, nitro, nitroso, amino, phenyl, benzoyl, C₁-C₅-alkyl or C₁-C₅-alkoxy radical or a C₁-C₅-alkylcarbonyl radical,
R¹⁷ are identical or different and are a hydrogen atom or a hydroxyl, mercapto, formyl, cyano, carbamoyl or carboxyl radical, ester or salt of the carboxyl radical, sulfono radical, ester or salt of the sulfono radical, a sulfamoyl, nitro, nitroso, amino, phenyl, aryl-C₁-C₅-alkyl, C₁-C₁₂-alkyl, C₁-C₅-alkoxy, C₁-C₁₀-carbonyl and carbonyl-C₁-C₆-alkyl radical, phospho, phosphono or phosphonooxy radical, ester or salt of the phosphonooxy radical,
it being possible for the carbamoyl, sulfamoyl, amino, mercapto and phenyl radical to be unsubstituted or monosubstituted or polysubstituted by a radical R¹²,
and the aryl-C₁-C₅-alkyl, C₁-C₁₂-alkyl, C₁-C₅-alkoxy, C₁-C₁₀-carbonyl and carbonyl-C₁-C₆-alkyl radical may be saturated or unsaturated, straight-chain or branched and may be monosubstituted or polysubstituted by a radical R¹², and a [-CR¹⁷R¹⁷-] group may be replaced by oxygen, an optionally C₁-C₅-alkyl-substituted imino radical, a (hydroxy)imino radical, a carbonyl function or a vinylidene function optionally monosubstituted or disubstituted by R¹²,
and two neighboring groups
[-CR¹⁷R¹⁷-] may be replaced by a group [-CR¹⁷=CR¹⁷-], [-CR¹⁷=N-] or [-CR¹⁷*=*N(O)-]*,*
it being possible for R¹² to be present once or several times and R¹² being identical or different and being a hydroxyl, formyl, cyano or carboxyl radical, ester or salt of the carboxyl radical, carbamoyl, sulfono, sulfamoyl, nitro, nitroso, amino, phenyl, C₁-C₅-alkyl, C₁-C₅-alkoxy or C₁-C₅-alkylcarbonyl radical,
are used as the mediator.

11. Method according to Claim 10, **characterized in that** the nitroxyl radicals of the formulae (XI) and (XII) are linked to a polymeric structure via one or more radicals R¹⁷.

12. Method according to Claim 10 or 11, **characterized in that** mediators used are those selected from the group consisting of
2,2,6,6-tetramethylpiperidin-1-oxyl (TEMPO),
4-hydroxy-2,2,6,6-tetramethylpiperidin-1-oxyl,
4-amino-2,2,6,6-tetramethylpiperidin-1-oxyl,
4-acetoxy-2,2,6,6-tetramethylpiperidin-1-oxyl,
4-benzoyloxy-2,2,6,6-tetramethylpiperidin-1-oxyl and
PIPO (polymer immobilized piperidinyloxyl).

13. Method according to any of Claims 1 to 12, **characterized in that** the mediator is used in amounts of from 0.01 to 100 mol%, based on the amount of carbinol groups present in the organosilicon compound used.

14. Method according to any of Claims 1 to 13, **characterized in that** oxidizing agents used are those selected from the group consisting of air, oxygen, hydrogen peroxide, organic peroxides, perborates and persulfates, organic and inorganic peracids, salts and derivatives of the peracids, chlorine, bromine, iodine, hypohalic acids and the salts thereof, for example in the form of bleaching liquor, halic acids and the salts thereof, halogen acids and the salts thereof, Fe(CN)₆³⁻ and N-chloro compounds,
it being possible for them optionally to be used in each case in combination with enzymes.

15. Method according to any of Claims 1 to 14, **characterized in that** the oxidizing agent is a 2-electron oxidizing agent and is used in amounts of from 0.1 to 125 mol%, based on the amount of carbinol groups present in the organosilicon compounds used.

16. Method according to any of Claims 1 to 13, **characterized in that** oxidizing agents used are metal oxides or anodes of electrolysis cells.

17. Method according to any of Claims 1 to 16, **characterized in that** it is carried out continuously.

## Revendications

1. Procédé pour la préparation de composés organosiliciés comportant des radicaux carbonyle, par oxydation de composés organosiliciés comportant des radicaux carbinol
à l'aide d'un médiateur choisi dans le groupe des composés aliphatiques, cycloaliphatiques, hétérocycliques et aromatiques contenant NO-, NOH- et 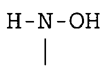 et d'un oxydant.

2. Procédé selon la revendication 1, **caractérisé en ce qu'**on utilise comme composés organosiliciés comportant des radicaux carbinol ceux qui contiennent des unités de formule
A' ₐR_{b}X_{c}H_{d}SiO_{(4-a-b-c-d)/2} (I),
A' pouvant être identiques ou différents et représentant un radical de formule 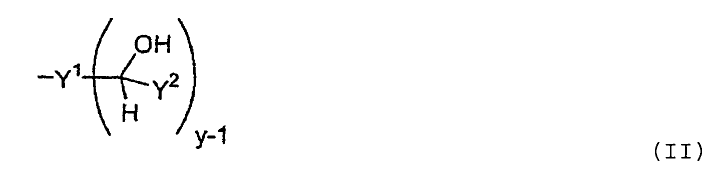 Y¹ représentant un radical organique di- ou plurivalent, linéaire ou cyclique, ramifié ou non ramifié, qui peut éventuellement être substitué et/ou interrompu par les atomes N, O, P, B, Si et S,
Y² représentant un atome d'hydrogène ou un radical organique monovalent linéaire ou cyclique, ramifié ou non ramifié, qui peut être éventuellement substitué et/ou interrompu par les atomes N, O, P, B, Si et S,
y en fonction de la valence du radical Y¹ étant ≥ 2,
R pouvant être identiques ou différents et représentant un radical hydrocarboné monovalent linéaire ou cyclique, ramifié ou non ramifié, éventuellement substitué,
X pouvant être identiques ou différents et représentant un atome de chlore ou un radical de formule -OR¹, où R¹ représente un atome d'hydrogène ou un radical alkyle ayant de 1 à 18 atome (s) de carbone, qui peut être substitué par des atomes d'oxygène en fonction éther, un radical hydrocarboné monovalent linéaire ou cyclique, ramifié ou non ramifié, qui peut éventuellement être interrompu par des unités -C(O)-, -C(O)O-, -C(O)NR¹-, -O-C(O)O-, -O-C(O)NR¹-, -NR¹-C (O) -NR¹-, -NR¹-, -(NR¹₂)⁺-, -O-, -S-, =N- et substitué par des groupes hydroxy, mercapto, amino, ammonium, carbonyle, carboxy ou oxirannyle, ou représentant le groupe A',
a étant 0, 1 ou 2,
b étant 0, 1, 2 ou 3,
c étant 0, 1, 2 ou 3, et
d étant 0, 1, 2 ou 3,
étant entendu que la somme a+b+c+d est ≤ 4 et le composé organosilicié de formule (I) comporte au moins un radical A' par molécule.

3. Procédé selon la revendication 1, **caractérisé en ce qu'**on utilise comme composés organosiliciés comportant des radicaux carbonyle ceux qui contiennent des unités de formule
AₐR_{b}X_{c}H_{d}SiO_{(4-a-b-c-d)/2} (III),
A pouvant être identiques ou différents et représentant un radical de formule 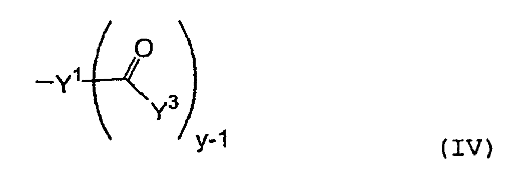 Y³ représentant un atome d'hydrogène ou un radical organique monovalent, linéaire ou cyclique, ramifié ou non ramifié, qui peut éventuellement être substitué et/ou interrompu par les atomes N, O, P, B, Si et S, et
Y¹, R, X, a, b, c, d et y ont les significations indiquées pour ces symboles dans la revendication 2,
étant entendu que la somme a+b+c+d est ≤ 4 et le composé organosilicié de formule (III) comporte au moins un radical A par molécule.

4. Procédé selon la revendication 1 ou 2, **caractérisé en ce qu'**on utilise comme composés organosiliciés comportant des radicaux carbinol ceux de formule
A'vR_{w}X_{(3-v-w)}Si (I')
dans laquelle A', X et R ont les significations indiquées pour ces radicaux dans la revendication 2,
v est 0, 1, 2 ou 3, de préférence 0 ou 1,
w est 0, 1, 2 ou 3,
étant entendu qu'ils contiennent au moins un radical A' par molécule.

5. Procédé selon la revendication 1 ou 2, **caractérisé en ce qu'**on utilise comme composés organosiliciés comportant des radicaux carbinol ceux de formule
A'ᵥR₃₋ᵥSiO(SiR₂O)ₙ(SiRA'O)ₒSiR₃₋ᵥA',v (I'')
dans laquelle A' et R ont les significations indiquées pour ces radicaux dans la revendication 2,
v est 0, 1, 2 ou 3, de préférence 0 ou 1,
n est 0 ou un nombre entier allant de 1 à 2 000,
o est 0 ou un nombre entier allant de 1 à 2 000, de préférence de 0 à 500,
étant entendu qu'ils contiennent au moins un radical A' par molécule.

6. Procédé selon la revendication 1 ou 2, **caractérisé en ce qu'**on utilise comme composés organosiliciés comportant des radicaux carbinol ceux de formule
[A'ᵥR₃₋ᵥSiO_{1/2}]ₛ [SiO_{4/2}] (I''')
dans laquelle A' et R ont les significations indiquées pour ces radicaux dans la revendication 2,
v est 0, 1, 2 ou 3, de préférence 0 ou 1,
s peut avoir une valeur allant de 0,2 à 6, de préférence de 0,4 à 4, et décrit le nombre des unités M [A'ᵥR₃₋ᵥSiO_{1/2}] par unité Q [SiO_{4/2}],
étant entendu qu'ils contiennent au moins un radical A' par molécule.

7. Procédé selon la revendication 1 ou 3, **caractérisé en ce qu'**on obtient comme composés organosiliciés comportant des radicaux carbonyle ceux de formule
AᵥR_{w}X_{(3-v-w)}Si (III')
dans laquelle A, X et R ont les significations indiquées pour ces radicaux dans la revendication 3,
v est 0, 1, 2 ou 3, de préférence 0 ou 1,
w est 0, 1, 2 ou 3,
étant entendu qu'ils contiennent au moins un radical A par molécule.

8. Procédé selon la revendication 1 ou 3, **caractérisé en ce qu'**on obtient comme composés organosiliciés comportant des radicaux carbonyle ceux de formule
AᵥR₃₋ᵥSiO(SiR₂O)ₙ(SiRAO)ₒSiR₃₋ᵥAᵥ (III'')
dans laquelle A et R ont les significations indiquées pour ces radicaux dans la revendication 3,
v est 0, 1, 2 ou 3, de préférence 0 ou 1,
n est 0 ou un nombre entier allant de 1 à 2 000,
o est 0 ou un nombre entier allant de 1 à 2 000, de préférence de 0 à 500,
étant entendu qu'ils contiennent au moins un radical A par molécule.

9. Procédé selon la revendication 1 ou 3, **caractérisé en ce qu'**on obtient comme composés organosiliciés comportant des radicaux carbonyle ceux de formule
[AᵥR₃₋ᵥSiO_{1/2}]ₛ[SiO_{4/2}] (III''')
dans laquelle A et R ont les significations indiquées pour ces radicaux dans la revendication 3,
v est 0, 1, 2 ou 3, de préférence 0 ou 1,
s peut avoir une valeur allant de 0,2 à 6, de préférence de 0,4 à 4, et décrit le nombre des unités M [AᵥR₃₋ᵥSiO_{1/2}] par unité Q [SiO_{4/2}],
étant entendu qu'ils contiennent au moins un radical A par molécule.

10. Procédé selon l'une quelconque des revendications 1 à 9, **caractérisé en ce qu'**on utilise comme médiateur des radicaux nitroxyle de formule 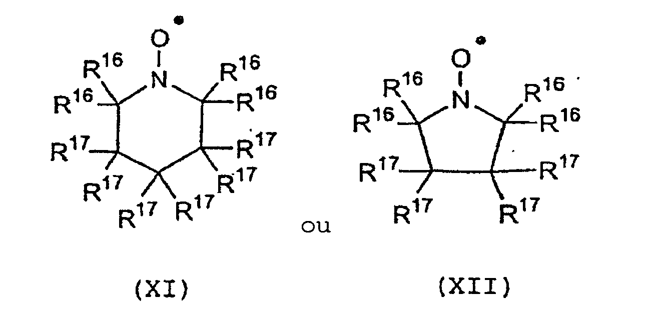 formules dans lesquelles
R¹⁶ sont identiques ou différents et représentent un radical phényle, aryl-alkyle(C₁-C₅), alkyle en C₁-C₁₂, alcoxy en C₁-C₅, carbonyle en C₁-C₁₀ ou carbonyl-alkyle(C₁-C₆),
les radicaux phényle pouvant être non substitués ou une ou plusieurs fois substitués par un radical R¹⁸, et les radicaux aryl-alkyle(C₁-C₅), alkyle en C₁-C₁₂, alcoxy en C₁-C₅, carbonyle en C₁-C₁₀ et carbonyl-alkyle(C₁-C₆) pouvant être saturés ou insaturés, ramifiés ou non ramifiés et pouvant être une ou plusieurs fois substitués par un radical R¹⁸ , R¹⁸ pouvant être présent une ou plusieurs fois et les radicaux R¹⁸ pouvant être identiques ou différents et représentant des radicaux hydroxy, formyle, carboxy, ester ou sel du radical carboxy, carbamoyle, sulfono, sulfamoyle, nitro, nitroso, amino, phényle, benzoyle, alkyle en C₁-C₅, alcoxy en C₁-C₅, alkyl (C₁-C₅) -carbonyle,
R¹⁷ sont identiques ou différents et représentent un atome d'hydrogène ou un radical hydroxy, mercapto, formyle, cyano, carbamoyle, carboxy, ester ou sel du radical carboxy, sulfono, ester ou sel du radical sulfono, sulfamoyle, nitro, nitroso, amino, phényle, aryl-alkyle(C₁-C₅), alkyle en C₁-C₁₂, alcoxy en C₁-C₅, carbonyle en C₁-C₁₀ et carbonyl-alkyle(C₁-C₆), phospho-, phosphono, phosphono-oxy, ester ou sel du radical phosphonooxy,
les radicaux carbamoyle, sulfamoyle, amino, mercapto et phényle pouvant être non substitués ou une ou plusieurs fois substitués par un radical R¹²,
et les radicaux aryl-alkyle(C₁-C₅), alkyle en C₁-C₁₂, alcoxy en C₁-C₅, carbonyle en C₁-C₁₀ et carbonyl-alkyle(C₁-C₆) pouvant être saturés ou insaturés, ramifiés ou non ramifiés et pouvant être une ou plusieurs fois substitués par un radical R¹²,
et un groupe-[-CR¹⁷R¹⁷-] pouvant être remplacé par un atome d'oxygène, un radical imino éventuellement substitué par alkyle en C₁-C₅, un radical (hydroxy)imino, une fonction carbonyle ou une fonction vinylidène éventuellement mono- ou disubstituée par R¹²,
et deux groupes [-CR¹⁷R¹⁷-] voisins pouvant être remplacés par un groupe [-CR¹⁷=CR¹⁷-], [-CR¹⁷=N-] ou [-CR¹⁷=N (O)-],
R¹² pouvant être présent une ou plusieurs fois et les radicaux R¹² étant identiques ou différents et représentant un radical hydroxy, formyle, cyano, carboxy, ester ou sel du radical carboxy, un radical carbamoyle, sulfono, sulfamoyle, nitro, nitroso, amino, phényle, alkyle en C₁-C₅, alcoxy en C₁-C₅, alkyl(C₁-C₅)-carbonyle.

11. Procédé selon la revendication 10, **caractérisé en ce que** les radicaux nitroxy de formules (XI) et (XII) sont reliés par un ou plusieurs radicaux R¹⁷ ayant une structure polymère.

12. Procédé selon la revendication 10 ou 11,
**caractérisé en ce qu'**on utilise comme médiateur ceux choisis dans le groupe constitué par
le 2,2,6,6-tétraméthyl-pipéridin-1-oxyle (TEMPO),
le 4-hydroxy-2,2,6,6-tétraméthyl-pipéridin-1-oxyle,
le 4-amino-2,2,6,6-tétraméthyl-pipéridin-1-oxyle,
le 4-acétoxy-2,2,6,6-tétraméthyl-pipéridin-1-oxyle,
le 4-benzoyloxy-2,2,6,6-tétraméthyl-pipéridin-1-oxyle et
le PIPO (pipéridinyloxyle immobilisé en polymère).

13. Procédé selon l'une quelconque des revendications 1 à 12, **caractérisé en ce que** le médiateur est utilisé en quantités de 0,01 à 100 % en moles, par rapport à la quantité des groupes carbinol contenus dans le composé organosilicié utilisé.

14. Procédé selon l'une quelconque des revendications 1 à 13, **caractérisé en ce qu'**on utilise comme oxydant ceux choisis dans le groupe constitué par l'air, l'oxygène, le peroxyde d'hydrogène, des peroxydes organiques, des perborates et des persulfates, des peracides organiques ou inorganiques, des sels et dérivés des peracides, le chlore, le brome, l'iode, des acides hypohalogéneux ainsi que leurs sels, par exemple sous forme de lessives de blanchiment, des acides halogéneux ainsi que leurs sels, des acides halogénés ainsi que leurs sels, Fe(CN)₆³⁻ et des composés azotés chlorés,
ceux-ci pouvant éventuellement être utilisés chacun en association avec des enzymes.

15. Procédé selon l'une quelconque des revendications 1 à 14, **caractérisé en ce que** l'oxydant est un oxydant à 2 électrons et est utilisé en quantités de 0,1 à 125 % en moles, par rapport à la quantité des groupes carbinol contenus dans les composés organosiliciés utilisés.

16. Procédé selon l'une quelconque des revendications 1 à 13, **caractérisé en ce qu'**on utilise comme oxydant des oxydes métalliques ou des anodes de cellules électrolytiques.

17. Procédé selon l'une quelconque des revendications 1 à 16, **caractérisé en ce qu'**il est effectué en continu.
